# EUROPEAN PATENT SPECIFICATION

(11) **EP 2 752 755 B1**
(45) Date of publication and mention of the grant of the patent: **21.03.2018**
(21) Application number: 13199812.2
(22) Date of filing: 30.12.2013
(51) Int. Cl.: G06F 3/0488, G06F 3/0481

(54) **Information processing apparatus, information processing method, and computer program**
Informationsverarbeitungsvorrichtung, Informationsverarbeitungsverfahren und Computerprogramm
Appareil de traitement d'informations, procédé de traitement d'informations et programme informatique

(30) Priority: 07.01.2013 JP 2013000738
(43) Date of publication of application: 09.07.2014
(73) Proprietor: Saturn Licensing LLC, New York, NY 10022-3211 (US)
(72) Inventor: Sakai, Yusuke, Minato-ku, Tokyo 108-0075 (JP); Yamada, Masayuki, Minato-ku, Tokyo 108-0075 (JP); Noguchi, Shinsuke, Minato-ku, Tokyo 108-0075 (JP); Murakami, Tasayoshi, Minato-ku, Tokyo 108-0075 (JP)
(74) Representative: Witte, Weller & Partner Patentanwälte mbB

(56) References cited:
- US-A1- 2007 222 769

## Description

### BACKGROUND

The present disclosure relates to an information processing apparatus, and in particular but not exclusively to an information processing apparatus, an information processing method, and a computer program which execute processing such as screen division in response to a touch operation performed by a user on the screen.

In recent years, tablet terminals with touch panel-type display screens or the like which also function as input units have been rapidly distributed. Since a widget or a desktop is used as an interface in each of the tablet terminals and it is possible to easily and visually know an operation method thereof, users can readily use the tablet terminals as compared with personal computers, input operations of which are performed through keyboards or mice.

For example, a touch sensitive device which reads data belonging to a touch input relating to a multipoint sensing device from a multipoint sensing device such as a multipoint touch screen and specifies a multipoint gesture based on the data from the multipoint sensing device has been proposed (see Japanese Unexamined Patent Application Publication No. 2010-170573, for example).

As an operation method of a touch panel-type screen, a user operation of tracing or tapping a screen with a fingertip, which is called "flick" or "drag" is known. If a user flicks a screen, "scroll" processing, in which screen display moves in a flick direction is executed.

On the other hand, the sizes of screens have increased. As a using method of such a large screen, a method for enhancing work capacity of a user or a method of dividing the large screen into a plurality of screens, activating applications in the respective screens, and performing a plurality of operations in parallel and a method for sharing a space with multiple users by allocating the respective divided screens to a plurality of users can be considered.

Even in a window system of a computer in the related art, it is possible to simultaneously execute a plurality of functions by opening a plurality of windows and appropriately adjusting display locations and sizes of the respective windows. However, it is necessary to perform a plurality of operations such as a menu operation, click, drag, and drop with the mouse in order to adjust the display locations and sizes of the windows after opening the respective windows, and the operation method is complicated and is not intuitive.

According to a "Split Browser" function, for example, it is possible to implement an operation of freely dividing a window of a browser such as Firefox and displaying browsers with the same context, an operation of reading a desired link in the original browser and displaying the link in the browser after the division, an operation of dropping a link, a bookmark, and the like in the original browser to the browser after the division, and an operation of recording such operation content. However, since the "Split Browser" function is based on mouse operations in the related art, it is difficult to say that the operation method is intuitive.

In addition, a display apparatus, in which a display screen is divided into two parts by an operation of an operator tracing the display screen with a finger in contact with the display screen and moving the finger by a predetermined amount, has been proposed (see Japanese Unexamined Patent Application Publication No. 2007-257220, for example). Although this display apparatus is configured to determine that an operation of an operator is a screen dividing operation if a track of the fingertip of the operator deviates from a straight line within a predetermined positional deviation amount, an operation of the operator tracing a curve with the fingertip is processed as an operation other than the screen dividing operation. However, when the operator desires to instruct an operation other than the screen dividing operation, such as a size change of two divided screens or screen scroll, by tracing a straight line with the fingertip on the touch panel-type user interface, the screen operation other than the screen dividing operation is not instructed by such a touch input according to this display apparatus.

A content display apparatus, in which a screen is automatically divided in accordance with user information and a user situation, a dividing method is automatically changed in real time in accordance with a change in the user situation, and different content for each user is displayed in each of the divided regions corresponding to the respective users, has been proposed (see Japanese Unexamined Patent Application Publication No. 2010-20616, for example). However, a direct instruction of a screen dividing location made by a user via a touch panel is not accepted according to this content display apparatus. In addition, the content display apparatus is not provided with a section for scrolling screens divided once or changing the sizes of the divided screens.

US 2007/0222769 A1 discloses a touch location detection section which detects the location on a display screen where the operator's finger touches. A transfer length calculation section calculates the transfer length of the operator's finger from the touch start location to the touch end location. A transfer length judgment section judges whether or not the transfer length is greater than a reference length. A location shift calculation section calculates the location shift of the operator's finger. A location shift judgment section judges whether or not the location shift is less than a predetermined reference location shift. When the transfer length is greater than the reference transfer length and the location shift is less than the predetermined reference location shift, a screen split control section controls the operation of an image display section so as to split a display screen.

### SUMMARY

From a first viewpoint, the present teachings can provide an information processing apparatus which is provided with a touch panel-type screen and can correctly execute a plurality of types of screen operations such as a screen dividing operation without any erroneous operations in response to a touch operation performed by a user on the screen, and to an information processing method and a computer program.

According to an embodiment of the present disclosure, there is provided an information processing apparatus including: a screen which displays information; a coordinate input unit which inputs coordinates instructed by a user to the screen; and a control unit which determines a user instruction based on a track of a user input via the coordinate input unit and controls an operation of the screen in accordance with a determination result, wherein the control unit is configured to determine which one of division of the screen, a size change of divided screens, or another screen operation the user has instructed, based on the track of the user input via the coordinate input unit wherein handles which are for performing an operation of moving a boundary are provided at both ends of the boundary of the screen, and wherein the control unit is configured to perform divided screen size changing processing in accordance with the track when the track starts from one of the handles, to perform screen dividing processing in accordance with the track when the track starts at a part other than the handles on the boundary of the screen, and to scroll the screen or perform another behavior when the track starts inside one of the divided screens.

In the embodiment, a divided screen size change instructing region may be defined within a predetermined width wₗᵢₙₑ around a boundary of the screen, and screen division instructing regions may be defined within a predetermined distance Wₛₚₗᵢₜ from both sides of then divided screen size change instructing region. In addition, the control unit may perform divided screen size changing processing in accordance with the track when a start point of the track is inside the divided screen size change instructing region, perform screen dividing processing in accordance with the track when the start point of the track is inside the screen division instructing region, and scroll the screen or perform another behavior when the start point of the track is located further inside the screen than the screen division instructing region.
In the embodiment, the control unit may perform screen dividing processing in accordance with the track when the track starts near the boundary of the screen and the user input moves after stopping at a position of the start point for a period which is equal to or more than a predetermined time, perform divided screen size changing processing in accordance with the track when the track starts near the boundary of the screen and the user input moves without stopping, and scroll the screen or perform another behavior when the track starts inside the screen.

In the embodiment, the information processing apparatus may further include a locking function which inhibits divided screen size changing processing. In addition, the control unit may perform screen dividing processing in accordance with the track when the track starts near the boundary of the screen in a locked state, perform divided screen size changing processing in accordance with the track when the track starts near the boundary of the screen in an unlocked state, and scroll the screen or perform another behavior when the track starts from the inside of the screen.

In the embodiment, the information processing apparatus may further include an indicator which displays whether or not a current state is the locked state.

In the embodiment, the control unit may perform size changing processing on the respective divided screens by displacing a position of an intersection of a plurality of boundaries for dividing the screen in accordance with the track when the track starts from the intersection.

In the embodiment, when a size of a divided screen among a plurality of divided screens approaches a predetermined size during size changing processing of the plurality of divided screens, the control unit may cause the size of the divided screen to be adsorbed to the predetermined size.

In the embodiment, when the screen is divided into two parts by a first boundary to obtain a first screen and a second screen, and the first screen and the second screen are respectively further divided by a second boundary and a third boundary, and the second boundary and the third boundary are superimposed on each other on a straight line, the control unit may allow divided screen size changing processing for each of the two line segments obtained by dividing the first boundary by the straight line.

In the embodiment, an instructing unit which instructs states of the new screens in accordance with a direction of the track with respect to a dividing line of the screen may be displayed on the dividing line. In addition, the control unit may display a home screen of an original screen in the new screen in a deviation direction and generate a clone of the original screen in the other new screen when the track deviates from the dividing line, and generate clones of the original screen in the new screens on both sides of the dividing line when the track is along the dividing line.

In the embodiment, the control unit may cause a screen, size changing processing of which has been instructed such that the size of the screen becomes equal to or smaller than a predetermined minimum width w_{close}, to be closed.

In the embodiment, the control unit may display at least one of a dividing line of the screen during dividing processing, the boundary of the screen during size changing processing, and the screen during scroll processing in an emphasized manner.

In the embodiment, the control unit may cause a menu relating to the divided screens to appear in an appearance direction in response to a user operation of swiping one of the divided screens with a first number of fingers in the appearance direction.

In the embodiment, the control unit may hide the menu in a direction opposite to the appearance direction when no operation is performed on the menu for a period which is equal to or more than a predetermined time or in response to a user operation of swiping the screen in the opposite direction.

In the embodiment, the control unit may save states of a plurality of divided screens in response to a user operation of grabbing the screens, display a list of the saved screen states on the screen, and restore a screen state selected by the user on the screen.

In the embodiment, the control unit may change an orientation of one of divided screens in a swiping direction in response to a user operation of swiping the screen with a second number of fingers.

In the embodiment, the control unit may cause a home screen to appear from a side opposite to a screen swiping direction toward the swiping direction in response to a user operation of swiping the screen with a third number of fingers.

According to another embodiment of the present disclosure, there is provided an information processing method including: inputting coordinates instructed by a user to a screen; determining a user instruction based on a track of a user input in the inputting of the coordinates and controlling an operation of the screen in accordance with a determination result; and determining which one of division of the screen, a size change of divided screens, or another screen operation the user has instructed, based on the track of the user input via the coordinate input unit, wherein handles which are for performing an operation of moving a boundary are provided at both ends of the boundary of the screen, wherein the method further comprises performing divided screen size changing processing in accordance with the track when the track starts from one of the handles, performing screen dividing processing in accordance with the track when the track starts at a part other than the handles on the boundary of the screen, and scrolling the screen or performing another behavior when the track starts inside one of the divided screens.

According to still another embodiment of the present disclosure, there is provided a computer program which is described in a computer readable format so as to cause a computer to function as: a coordinate input unit which inputs coordinates instructed by a user to a screen; and a control unit which determines a user instruction based on a track of a user input via the coordinate input unit and controls an operation of the screen in accordance with a determination result, wherein the control unit is configured to determine which one of division of the screen, a size change of divided screens, or another screen operation the user has instructed, based on the track of the user input via the coordinate input unit wherein handles which are for performing an operation of moving a boundary are provided at both ends of the boundary of the screen, and wherein the control unit is configured to perform divided screen size changing processing in accordance with the track when the track starts from one of the handles, to perform screen dividing processing in accordance with the track when the track starts at a part other than the handles on the boundary of the screen, and to scroll the screen or perform another behavior when the track starts inside one of the divided screens.

The computer program according to the embodiment is defined to be a computer program described in a computer readable format so as to implement predetermined processing on the computer. In other words, cooperative actions can be achieved on the computer by installing the computer program of this embodiment to the computer, and the same effects as those of the information processing apparatus of the first embodiment can be achieved.

According to the technique disclosed in this specification, it is possible to provide an excellent information processing apparatus which is provided with a touch panel-type screen and can correctly execute a plurality of types of screen operations such as a screen dividing operation without any erroneous operations in response to a touch operation performed by a user on the screen, an information processing method, and a computer program.

Other purposes, features, advantages of the technology disclosed in this specification will be clarified by detailed description of embodiments given below and accompanying drawings.

### BRIEF DESCRIPTION OF THE DRAWINGS

Embodiments of the present teachings will now be described with reference to the accompanying drawings, throughout which like parts are referred to by like references, and in which
Fig. 1 is a diagram showing an example (wall: landscape image layout) of a usage state of an information processing apparatus provided with a large screen;
Fig. 2 is a diagram showing an example (wall: portrait image layout) of a usage state of the information processing apparatus provided with the large screen;
Fig. 3 is a diagram showing another example (tabletop) of a usage state of the information processing apparatus provided with the large screen;
Fig. 4A is a diagram showing a usage state (a usage state by a single user) of a display screen in a tabletop state;
Fig. 4B is a diagram showing a usage state (a usage state by multiple users) of the display screen in the tabletop state;
Fig. 5 is a diagram schematically showing a functional configuration of the information processing apparatus;
Fig. 6 is a diagram showing an internal configuration of an input interface unit;
Fig. 7A is a diagram illustrating an input operation method (touch using a single fingertip) performed by a user on the information processing apparatus;
Fig. 7B is a diagram illustrating an input operation method (multiple touch) performed by the user on the information processing apparatus;
Fig. 7C is a diagram illustrating an input operation method (a software keyboard) performed by the user on the information processing apparatus;
Fig. 7D is a diagram illustrating an input operation method (another terminal) performed by the user on the information processing apparatus;
Fig. 8 is a diagram showing an internal configuration of an output interface unit;
Fig. 9 is a diagram showing a configuration example of a plurality of divided screens;
Fig. 10 is a diagram showing a configuration example of a plurality of divided screens;
Fig. 11 is a diagram showing a configuration example of a plurality of divided screens;
Fig. 12 is a diagram showing a configuration example of a plurality of divided screens;
Fig. 13 is a diagram showing a state where a state of saved windows and a state of respective panes are displayed as a list on the screen;
Fig. 14 is a diagram illustrating a menu drawing method;
Fig. 15 is a diagram showing the menu in an enlarged manner;
Figs. 16A to 16C are diagrams illustrating an operation method for saving the state of the windows and the state of the respective panes and restoring a saved original screen;
Fig. 17 is a diagram illustrating an example of a UI operation for dividing the screen;
Fig. 18 is a diagram illustrating an example of a UI operation for dividing the screen;
Fig. 19 is a diagram illustrating a screen dividing line display method;
Fig. 20 is a diagram illustrating a screen dividing line display method;
Fig. 21 is a diagram illustrating another example of a UI operation for dividing the screen;
Fig. 22 is a diagram illustrating another example of a UI operation for dividing the screen;
Fig. 23 is a diagram illustrating a UI operation for repeating screen division;
Fig. 24 is a diagram illustrating a UI operation for repeating screen division;
Fig. 25 is a diagram illustrating a UI operation for rotating the divided screens;
Fig. 26 is a diagram illustrating a UI operation for causing a new pane to appear by swiping the screen with two fingers;
Fig. 27 is a diagram illustrating a UI operation for causing a new pane to appear by swiping the screen with two fingers;
Fig. 28 is a diagram illustrating a UI operation performed on a home screen;
Fig. 29 is a diagram illustrating a UI operation for bookmarking content of a pane;
Fig. 30 is a diagram illustrating a UI operation for transferring data between panes;
Fig. 31 is a diagram illustrating a UI operation for increasing or decreasing display of a divided screen;
Fig. 32 is a diagram illustrating a UI operation for tracking a history of panes;
Fig. 33 is a diagram illustrating a UI operation for changing the sizes of divided screens;
Fig. 34 is a diagram illustrating a UI operation for scrolling a divided screen;
Fig. 35 is a diagram showing a state where a size change instructing region and a screen division instructing region are disposed in the vicinity of a boundary of screens;
Fig. 36 is a diagram illustrating a UI operation for dividing a screen again by starting touch in the screen division instructing region;
Fig. 37 is a diagram illustrating a UI operation for changing the sizes of screens by starting touch in the size change instructing region;
Fig. 38 is a diagram illustrating a UI operation for scrolling a screen by starting touch at a part which is further inside than the screen division instructing region;
Fig. 39 is a flowchart showing a processing procedure (first method) for implementing screen operations in response to UI operations performed by the user;
Fig. 40 is a flowchart showing the processing procedure (first method) for implementing screen operations in response to UI operations performed by the user;
Figs. 41A to 41D are diagrams showing a state where a pane, a screen size change of which has been instructed such that the pane becomes equal to or smaller than a predetermined minimum width, is closed;
Fig. 42 is a flowchart showing the processing procedure (first method) for implementing screen operations in response to UI operations performed by the user;
Figs. 43A to 43C are diagrams illustrating a UI operation for dividing a screen again by using a long press operation;
Fig. 44 is a flowchart showing a processing procedure (second method) for implementing screen operations in response to UI operations by the user;
Figs. 45A to 45D are diagrams illustrating a UI operation for changing the sizes of screens by using a handle provided at an end of the boundary;
Fig. 46 is a flowchart showing a processing procedure (third method) for implementing screen operations in response to UI operations by the user;
Figs. 47A to 47D are diagrams illustrating a UI operation for changing the sizes of screens by using a screen size change locking function;
Fig. 48 is a flowchart showing a processing procedure (fourth method) for implementing screen operations in response to UI operations by the user;
Figs. 49A and 49B are diagrams illustrating a UI operation for changing sizes of three or more panes at the same time by simultaneously operating a plurality of boundaries;
Figs. 50A to 50C are diagrams illustrating a UI operation for changing the screen sizes in a case where content with a fixed width is displayed in a part of panes;
Figs. 51A to 51C are diagrams illustrating a UI operation for changing a parent-child relationship of a plurality of boundaries;
Fig. 52 is a diagram illustrating a method of designating a state of a new pane in the course of a UI operation for dividing a screen;
Fig. 53 is a diagram illustrating a method of designating a state of a new pane in the course of the UI operation for dividing the screen;
Fig. 54 is a diagram illustrating a method of designating a state of a new pane in the course of the UI operation for dividing the screen;
Fig. 55 is a diagram illustrating a method of designating a state of a new pane in the course of the UI operation for dividing the screen;
Fig. 56 is a diagram showing a state where a dividing line is displayed in an emphasized manner when a screen division instructing operation is performed;
Fig. 57 is a diagram showing a state where a boundary as a target of a size change operation is displayed in an emphasized manner when a screen size change instructing operation is performed; and
Fig. 58 is a diagram showing a state where a pane being scrolled is displayed in an emphasized manner when a scroll instructing operation is performed.

### DETAILED DESCRIPTION

Hereinafter, a detailed description will be given of embodiments of the technique disclosed in this specification with reference to the drawings.

### A. System Configuration

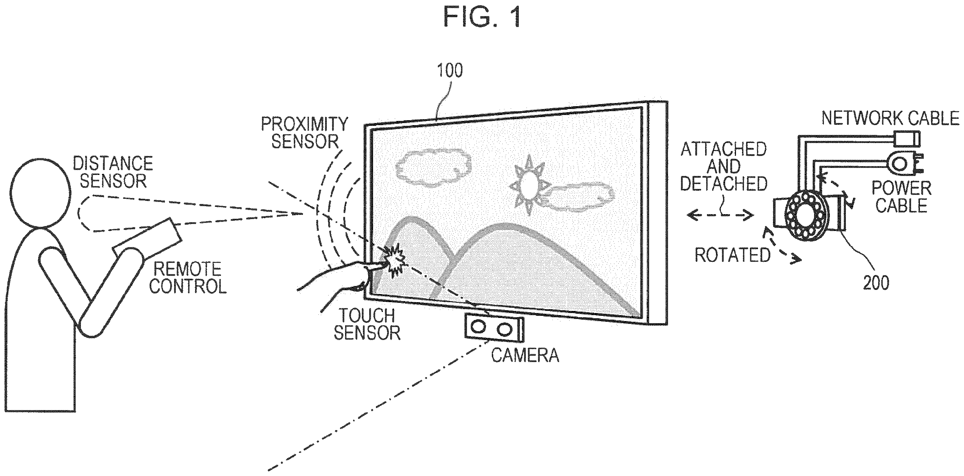

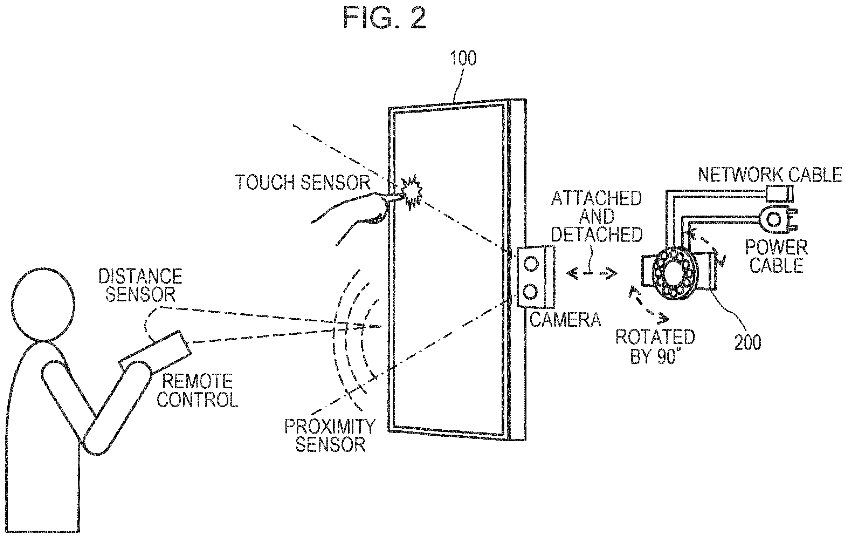

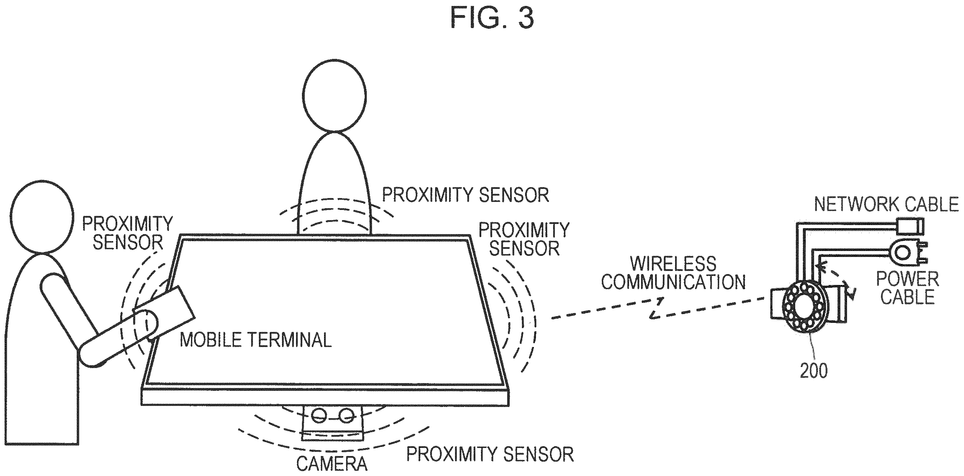

An information processing apparatus 100 according to this embodiment is provided with a large screen, and a "wall" hung on a wall as shown in Figs. 1 and 2 and a "tabletop" installed on a table as shown in Fig. 3 are assumed as main usage states.

In the "wall" state as shown in Fig. 1, the information processing apparatus 100 is attached in a rotatable and detachable state on the wall surface via a rotation and attachment mechanism unit 200, for example. In the example shown in the drawing, a rotating position is set at a posture, at which a layout of the large screen is a landscape image layout.

The rotation and attachment mechanism unit 200 also functions as an electric contact between the information processing apparatus 100 and outside, a power cable and a network cable (both of which are not shown in the drawing) are connected to the information processing apparatus 100 via the rotation and attachment mechanism unit 200, and the information processing apparatus 100 can receive drive power from an AC power source for a commercial use and access various servers on the Internet.

The information processing apparatus 100 is provided with a camera, a distance sensor, proximity sensors, and a touch sensor and can grasp a position (a distance and a direction) of a user who faces the screen. In addition, the information processing apparatus 100 is designed to automatically select an optimal interaction in accordance with the user position. For example, the information processing apparatus 100 automatically selects or adjusts Graphical User Interface (GUI) display such as density of information to be displayed on the large screen, in accordance with the user position. In addition, the information processing apparatus 100 can automatically select an optimal input method among a plurality of input methods including direct operations such as touch or approach to the screen, gestures using a hand or the like, and an operation using a remote control or the like and indirect operations based on a user state or the like, in accordance with the user position or the distance to the user.

In addition, the information processing apparatus 100 is also provided with one or more cameras. In the example shown in the drawing, a camera is installed at substantially the center of an upper edge thereof in a state of the landscape image layout. An optical axis of the camera is directed in the horizontal direction in this state, and the camera can image a form of the user who faces the large screen. By processing an image captured by the camera, it is possible to measure the user position and recognize various objects, such as a person, an object, a device, and the like. Moreover, it is possible to input a gesture based on a result of recognizing a face, hands, and the like of the user from the image captured by the camera. In addition, the information processing apparatus 100 is also provided with a very short range communication unit and can transmit and receive data to and from a device such as a tablet terminal or a mobile terminal owned by the user who approaches the information processing apparatus 100 within a very short range.

An aspect ratio of the large screen is assumed to be 16:9 which is a standard in the market of television products, for example. For this reason, it is possible to display a horizontally long video image with the ratio of 16:9 without changing the world view depicted by the movie, by using the whole screen in the state where the rotating position of the information processing apparatus 100 hung on the wall is set such that the layout of the large screen is the landscape image layout as shown in Fig. 1.

If the information processing apparatus 100 is attached to the rotation and attachment mechanism unit 200 and rotated in the state where the information processing apparatus 100 is hung on the wall, it is possible to change the posture of the large screen to the posture of a portrait image layout as shown in Fig. 2. The camera position is integrally moved with the information processing apparatus 100 to substantially the center of a right edge of the screen.

In contrast, the information processing apparatus 100 in the "tabletop" state shown in Fig. 3 is flatly placed on a table. Although the rotation and attachment mechanism unit 200 also functions as an electric contact in the usage state shown in Figs. 1 and 2 (as described above), there is no electric contact to the information processing apparatus 100 in the state of being installed on the table as shown in Fig. 3. Thus, the information processing apparatus 100 may be configured to be able to operate with a built-in battery (not shown) and no power in the tabletop state shown in the drawing. In addition, the information processing apparatus 100 can access various servers on the Internet via wireless communication with the rotation and attachment mechanism unit 200 as an access point even in the tabletop state if the information processing apparatus 100 is provided with a wireless communication unit corresponding to a function of a mobile station of a wireless Local Area Network (LAN), for example, and the rotation and attachment mechanism unit 200 is provided with a wireless communication unit corresponding to an access point function of the wireless LAN.

If the wall state shown in Fig. 1 or 2 is shifted to the tabletop state shown in Fig. 3, the information processing apparatus 100 maintains the previous state (that is, the landscape image layout shown in Fig. 1 or the portrait image state shown in Fig. 2).

The information processing apparatus 100 is provided with proximity sensors at four side edges of the large screen in order to detect presence or a state of the user. A user who has approached the large screen may be recognized by the camera imaging the user in the same manner as described above. In addition, the very short range communication unit (which will be described later) detects whether or not a user, whose presence has been detected, owns a device such as a mobile terminal and detects a data transmission or reception request from the mobile terminal owned by the user.

If presence of a user is detected by the proximity sensors or the like, the information processing apparatus 100 can use the detection result for UI control. If not only presence of a user but also positions of a body, hands, feet, and a head of the user are detected, then the information processing apparatus 100 can use the detection result for more detailed UI control. In addition, the information processing apparatus 100 is also provided with the very short range communication unit and transmits and receives data to and from a device owned by a user who has approached the information processing apparatus 100 to within a very short range.

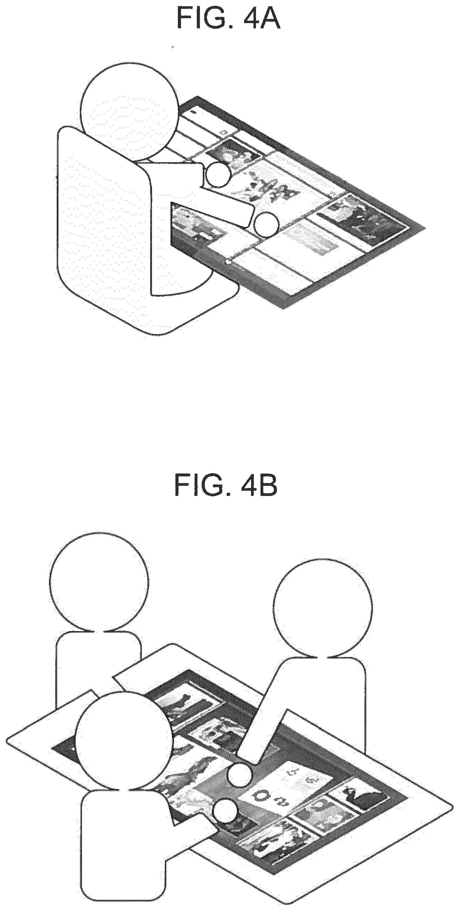

By increasing the size of the screen of the information processing apparatus 100, it is possible to divide the screen, display a plurality of panes (see Fig. 4A), allow a user to perform a plurality of operations in parallel, and enhance work capacity of the user.

In addition, since a sufficient space for allowing a plurality of users to simultaneously perform touch inputs is generated in the tabletop state, a usage state, in which multiple users share the space (see Fig. 4B), may be considered. In addition, it is possible to allow a plurality of users to face each other over the large screen and talk or discuss while viewing display on the screen. Furthermore, it is possible to divide the screen and allocate the respective divided screens to the respective users.

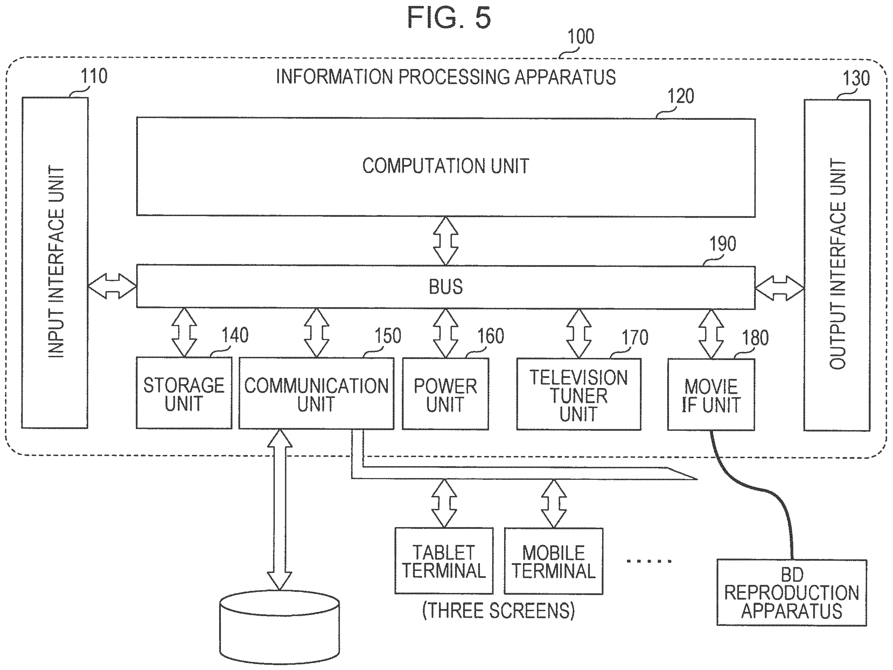

Fig. 5 schematically shows a functional configuration of the information processing apparatus 100. The information processing apparatus 100 is provided with an input interface unit 110 for inputting an information signal from outside, a computation unit 120 for performing computation processing in order to control the display screen, for example, based on the input information signal, an output interface unit 130 for outputting information to the outside based on the computation result, a large-capacity storage unit 140 configured of a hard disk drive (HDD) or the like, a communication unit 150 for connecting the information processing apparatus 100 to an external network, a power unit 160 for handling drive power, a television tuner unit 170, and a movie input interface (IF) unit 180, and the components are connected to each other via a bus 190. The storage unit 140 stores various processing algorithms executed by the computation unit 120 and various databases used for the computation processing by the computation unit 120.

Main functions of the computation unit 120 are computation processing such as UI screen generation processing based on a user detection result of the input interface unit 110, a screen touch detection result, and data received from a device such as a mobile terminal owned by a user and an output of the computation result to the output interface unit 130. The computation unit 120 can implement the computation processing for respective applications by loading and executing application programs installed to the storage unit 140, for example.

The communication unit 150 connects the information processing apparatus 100 to an external network such as a LAN or the Internet. The connection state with the external network may be any one of wired connection and wireless connection. For example, a movie stream distributed from a distribution server (not shown) on the external network can be received via the communication unit 150, decoded by the computation unit 120, and reproduced via the output interface unit 130.

In addition, the information processing apparatus 100 can communicate with other devices, namely a mobile terminal such as a smartphone and a tablet terminal owned by the user via the communication unit 150. Screens of the three types of devices, namely the large screen of the information processing apparatus 100, the screen of the mobile terminal, and the screen of the tablet terminal are combined to configure a so-called "three screens". The information processing apparatus 100 can provide a UI for causing the three screens to cooperate, on the larger screen than the other two screens.

Data such as a moving image, a stationary image, and text content is transmitted and received between the information processing apparatus 100 and the corresponding terminal owned by the user in the background when the user performs a touch operation on the screen or performs an action of causing the terminal owned by the user to approach the information processing apparatus 100, for example. Furthermore, a cloud server or the like may be installed on the external network, and the three screens can use the services of the cloud computing, such as a computation performance of the cloud server, via the information processing apparatus 100.

The television tuner unit 170 tunes a channel and receives a digital broadcasting signal transmitted as a terrestrial wave or a satellite wave from each broadcasting station. The computation unit 120 decodes the received broadcasting wave and reproduces the broadcasting wave via the output interface unit 130.

An external Blu-ray disc (BD) reproducing apparatus or the like is connected to the movie input interface unit 180 via a High Definition Multimedia Interface (HDMI), for example, and the movie input interface unit 180 inputs a movie signal reproduced from a Blu-ray disc. The computation unit 120 decodes the input movie signal and reproduces the movie signal via the output interface unit 130.

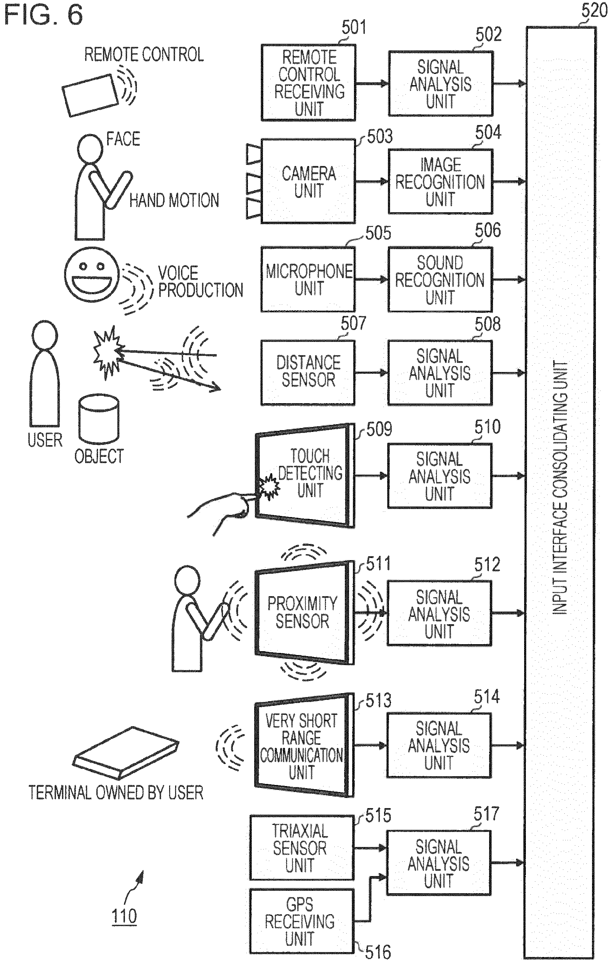

Main functions of the input interface unit 110 are detection of user presence, detection of a touch operation performed by the detected user on the screen, namely on the touch panel, detection of a device such as a mobile terminal owned by the user, and processing of receiving data transmitted from the device. Fig. 6 shows an internal configuration of the input interface unit 110.

A remote control receiving unit 501 receives a remote control signal from a remote control or the mobile terminal. A signal analysis unit 502 performs processing of demodulating and decoding the received remote control signal and obtains a remote control command.

A camera unit 503 is provided with an imaging element such as a Complementary Metal Oxide Semiconductor (CMOS) or a Charge Coupled Device (CCD), and a monocular scheme or either one of or both a twin-lens scheme and an active type are employed. In addition, the camera unit 503 is provided with a camera control unit (not shown) for controlling panning, tilting, zooming, and the like. The camera unit 503 can inform the computation unit 120 of camera information such as panning, tilting, and zooming and control the panning, the tilting, and the zooming of the camera unit 503 based on camera control information from the computation unit 120.

An image recognition unit 504 performs recognition processing on an image captured by the camera unit 503. Specifically, the image recognition unit 504 recognizes a gesture by detecting motions of a face and hands of the user based on a difference in the background, recognizes objects such as the face, the hands, and the like of the user included in the captured image, and recognizes a distance to the user.

The image recognition unit 504 detects objects as recognition targets such as the face by scanning a template image on the image captured by the camera of the camera unit 503 and performing pattern matching when the image recognition processing is performed.

A microphone unit 505 performs audio input from sound and conversation generated by the user. A sound recognition unit 506 recognizes the audio signal input from the microphone unit 505.

A distance sensor 507 is configured of a Position Sensitive Detector (PSD) or the like and detects a signal returned from the user or another object. A signal analysis unit 508 analyzes the detection signal and measures a distance to the user or the object. It is also possible to use a pyroelectric sensor or a simplified camera instead of the PDS sensor as the distance sensor 507. The distance sensor 507 constantly monitors whether or not the user is present within a radius of 5 meters to 10 meters, for example, from the information processing apparatus 100. For this reason, it is preferable to use a sensor element consuming less power as the distance sensor 507.

A touch detecting unit 509 is configured of a touch sensor which is superimposed on the screen and outputs a detection signal from a position, with which the user brings their fingertip into contact, on the screen. A signal analysis unit 510 analyzes the detection signal of the touch detecting unit 509 and obtains position information.

Proximity sensors 511 are installed at four side edges of the large screen and detect that a body of the user has approached the screen, based on an electrostatic capacitance scheme, for example. A signal analysis unit 512 analyzes the detection signals of the proximity sensors 511.

The very short range communication unit 513 receives a non-contact communication signal from the device such as the mobile terminal owned by the user via Near Field Communication (NFC), for example. A signal analysis unit 514 performs processing of demodulating and decoding the received signal of the very short range communication unit 513 and obtains reception data.

A triaxial sensor unit 515 is configured of an acceleration sensor or a gyro sensor and detects a posture of the information processing apparatus 100 around x, y, and z axes. A Global Positioning System (GPS) receiving unit 516 receives a signal from a GPS satellite. A signal analysis unit 517 analyzes the signals from the triaxial sensor unit 515 and the GPS receiving unit 516 and obtains position information and posture information of the information processing apparatus 100.

An input interface consolidating unit 520 consolidates inputs of the above information signals and passes the inputs to the computation unit 120. In addition, the input interface consolidating unit 520 consolidates analysis results of the respective signal analysis units 508, 510, 512, and 514, obtains position information of the user near the information processing apparatus 100, and passes the position information to the computation unit 120.

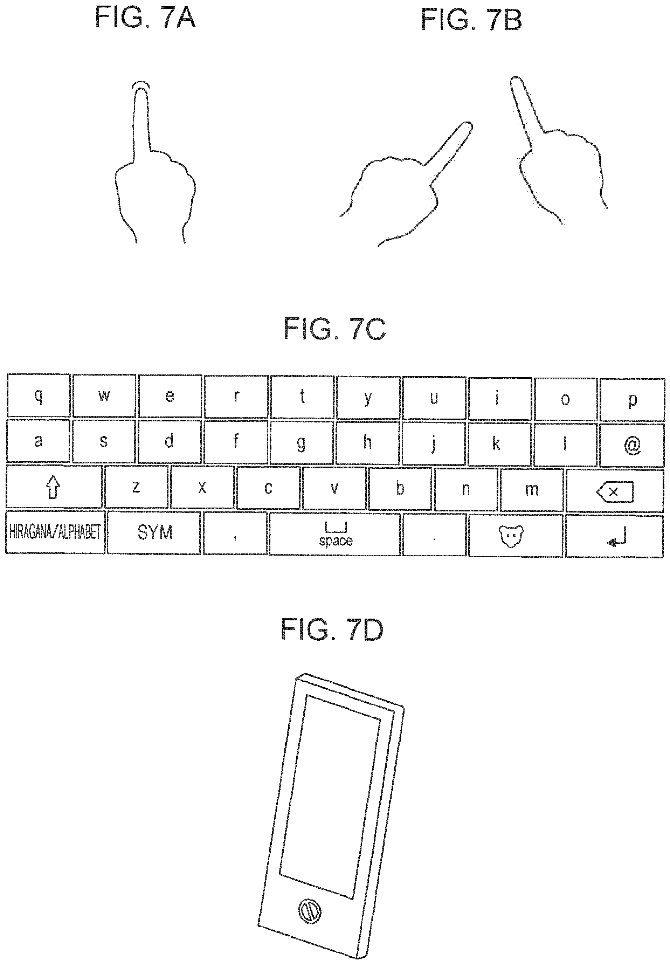

The user mainly touches the screen and performs an input operation on the information processing apparatus 100 from a software board displayed on the screen and another terminal. Examples of the touch to the screen include touch with a single fingertip as shown in Fig. 7A and multi-touch with two or more fingertips as shown in Fig. 7B. As the software keyboard, a QWERTY alignment keyboard can be used as shown in Fig. 7C in the same manner as a keyboard of a general computer. In addition, examples of another terminal include the terminal owned by the user, which is a constituent of the three screens (as described above), such as a mobile terminal or a tablet terminal as shown in Fig. 7D. The touch or the multi-touch can be used across the entire operations performed on the information processing apparatus 100. In addition, the software keyboard can be used for a text input to an address bar of a browser or the like. Moreover, another terminal can be used for synchronization and data sharing with the information processing apparatus 100.

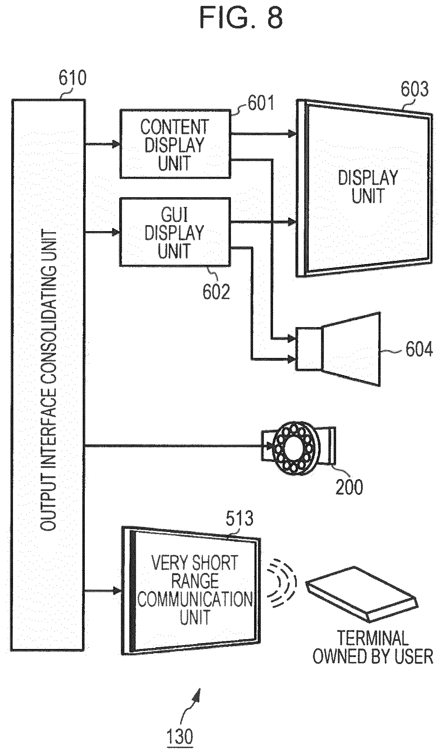

Main functions of the output interface unit 130 are content display and UI display on the screen based on the computation result of the computation unit 120 and data transmission to the device owned by the user. Fig. 8 shows an internal configuration of the output interface unit 130.

An output interface consolidating unit 610 consolidates and handles information outputs based on the computation result by the computation unit 120.

The output interface consolidating unit 610 instructs a content display unit 601 to output an image and sound of distributed content received by the communication unit 150, TV broadcasting content received by the television tuner unit 170, or content reproduced from a recording medium such as a Blu-ray disc to a moving image or stationary image content display unit 603 and a speaker 604, respectively.

In addition, the output interface consolidating unit 610 instructs the GUI display unit 602 to display a GUI on the display unit 603.

The display unit 603 includes a screen configured of a liquid crystal display, for example. The screen is a large screen with a size of about 50 inches, for example, and the aspect ratio of 16:9 which is a standard in the market of television products is assumed.

In addition, the output interface consolidating unit 610 instructs the very short range communication unit 513 to perform data transmission to the device such as the mobile terminal owned by the user via non-contact communication.

### B. Screen Operation

According to the information processing apparatus 100 of this embodiment, the user can divide the screen, scroll the divided screens, and change the screen sizes via a touch operation of tracing the screen with their fingertip (or a coordinate input operation via a mouse, a pen, or a gesture). The user can divide the large screen into a plurality of parts, activate applications in the small screens after the division, perform a plurality of operations in parallel, and enhance work capacity. In addition, it is also possible to allocate the respective divided screens to a plurality of users and allow multiple users to share the space.

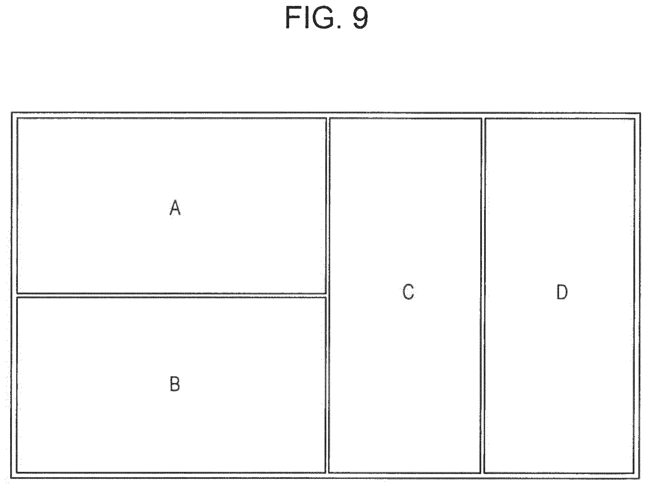

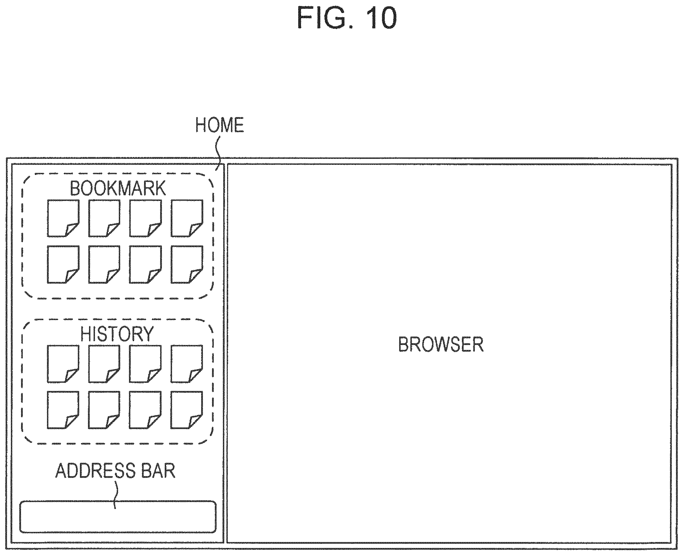

Figs. 9 to 12 show configuration examples of a plurality of divided screens. Fig. 9 shows a state where the screen is divided and a plurality of panes A and B are arranged on the large screen. Fig. 10 shows a state where a pane for displaying a browser is arranged along with a home screen. In the home screen, an address bar for inputting a search term, bookmarks, or a history (sites visited recently) is displayed.

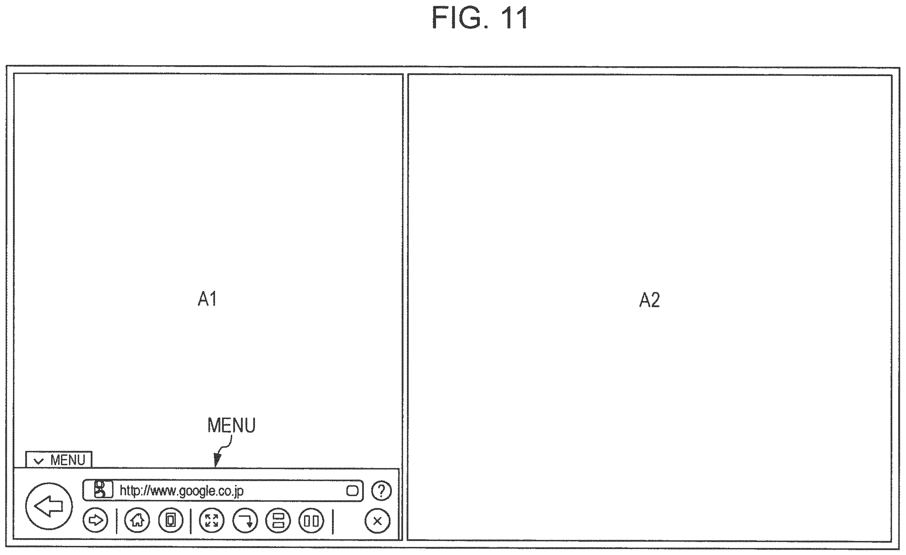

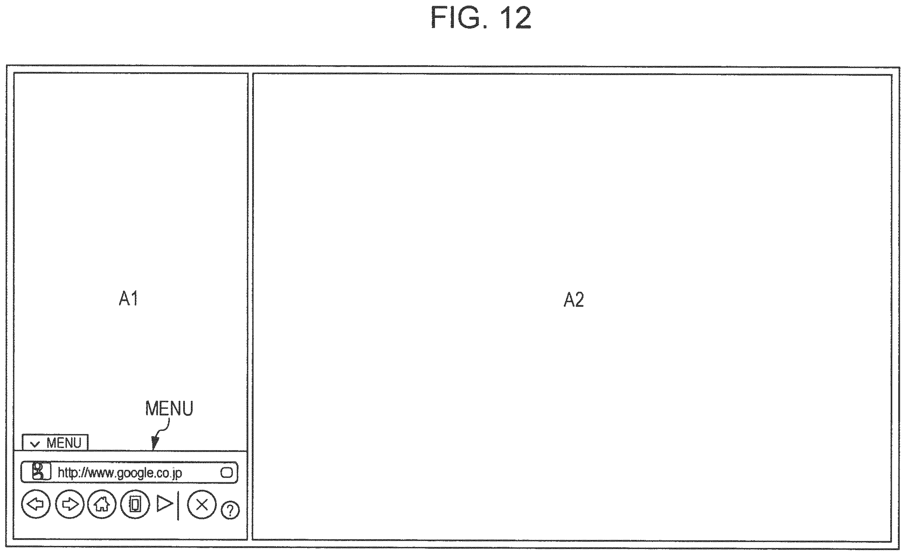

Fig. 11 shows a state where panes A1 and A2 which are clones of original pane A are displayed in the left and right screens and a menu appears in the pane A1. An operation method for causing the menu to appear will be described later. Fig. 12 shows a result of changing the sizes of the panes A1 and A2. In the example shown in the drawing, the size of the pane A2 is expanded in the horizontal direction, and the size of the pane A1 is reduced in the horizontal direction so as to offset the expanded amount. A layout (the sizes and the number of buttons displayed in the menu) of the menu in the pane A1 is adaptively changed in accordance with the horizontal width of the pane A1. If the horizontal width of the menu is reduced, buttons with less importance and buttons with lower frequency are hidden, for example.

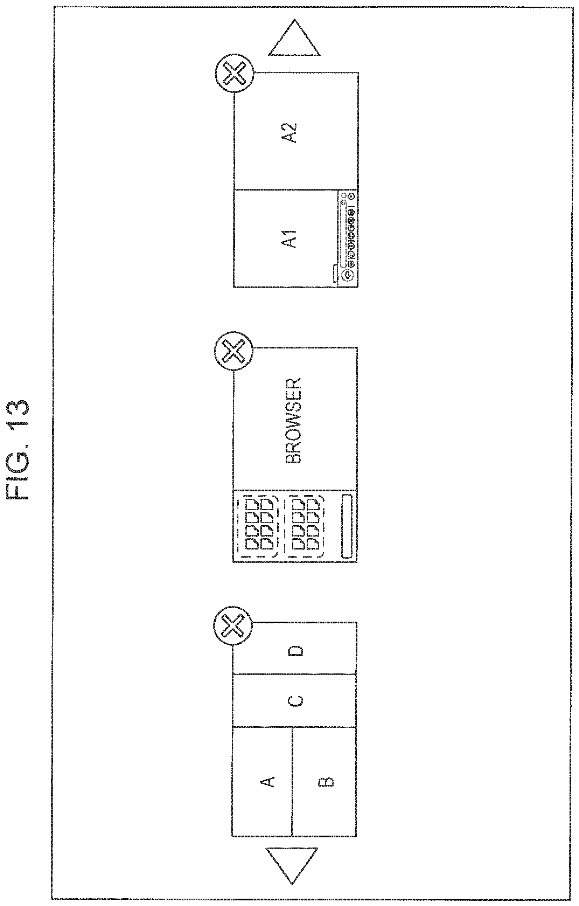

The information processing apparatus 100 can save a state of the windows and a state of the respective panes. An operation method for saving the state of the panes will be described later. Fig. 13 shows a state where content saved in relation to the states of the windows and the states of the respective panes shown in Figs. 9 to 11 is displayed as a list on the screen. The user can restore an original screen by touching a desired screen in the list. In addition, the user may delete a screen from the list by touching "x" at an upper right part of the screen.

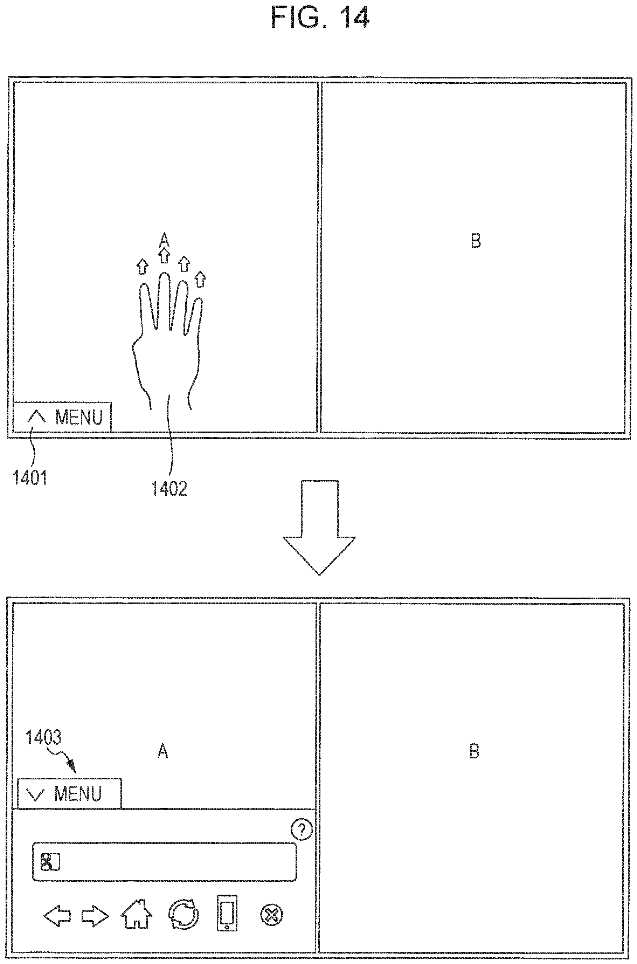

Fig. 14 shows a menu drawing method. As shown in the upper part of the drawing, the user touches a bar drawing 1401 displayed at a lower left part of a desired pane A or swipes the inside of the pane A with four fingers in an upward direction (or in a direction of appearance) as shown with a reference numeral 1402. In doing so, a menu 1403 appears from a lower edge of the pane A as shown in the lower part of the drawing. Although not shown in the drawing, the menu 1403 is hidden in the downward direction if a state where the user does not perform any operation on the displayed menu continues for a predetermined period. In addition, the user can hide the menu 1403 in the downward direction by swiping the inside of the pane A with four fingers in the downward direction (or a direction opposite to the direction of appearance).

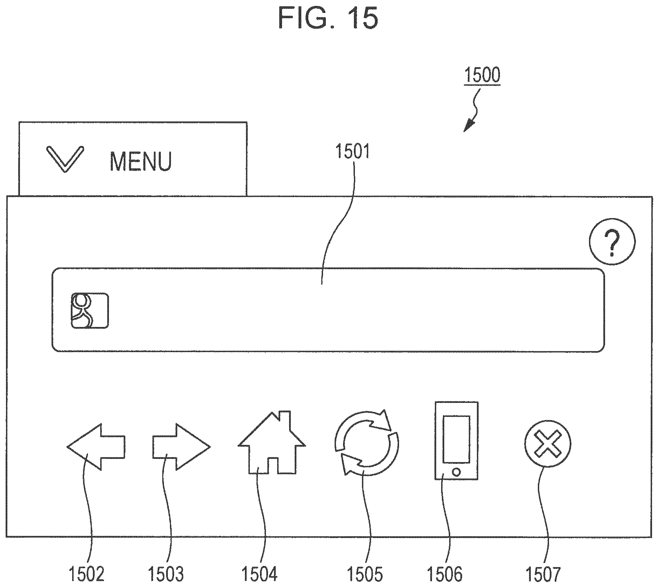

Fig. 15 shows a menu 1500 in an enlarged manner. The drawing shows an example of a menu configuration in a case where the pane A is a browser. Hereinafter, a description will be given of an operation method of the menu 1500 with reference to the drawing.

If the user touches an address bar 1501, the software keyboard (as described above) appears, and the user can input text such as a Uniform Resource Locator (URL) or a search term. It is possible to use the software keyboard (see Fig. 7C) to input the text such as a search keyword. If the input text is entered, the browser starts searching, and the pane A shifts to a screen of the search result (not shown).

If the user touches a "back" button 1502, the pane A returns to the previous page. If the user touches a "next" button 1503, the pane A moves on to the next page. If the user touches a "home" button 1504, the pane A displays a home and closes the menu. If the user touches a "reload" button 1505, the page being currently displayed in the pane A is updated. If the user touches a "mobile linkage" button 1506, synchronization and data linkage processing with the terminal owned by the user, which has been detected in the vicinity of the information processing apparatus 100, are activated. If the user touches a "close" button 1507, the pane A itself is closed. If the pane A is closed and disappears from the screen, the remaining pane B expands to the display region of the original pane A and is displayed on the entire screen though not shown in the drawing.

Although not shown in the drawing, a "full-screen display" button for instructing full-screen display of the pane A, a "rotate" button for instructing rotation of the pane A by 90° in the clockwise direction (or in the counterclockwise direction), and a "help" button for instructing display of explanation about operations may be disposed in the menu 1500.

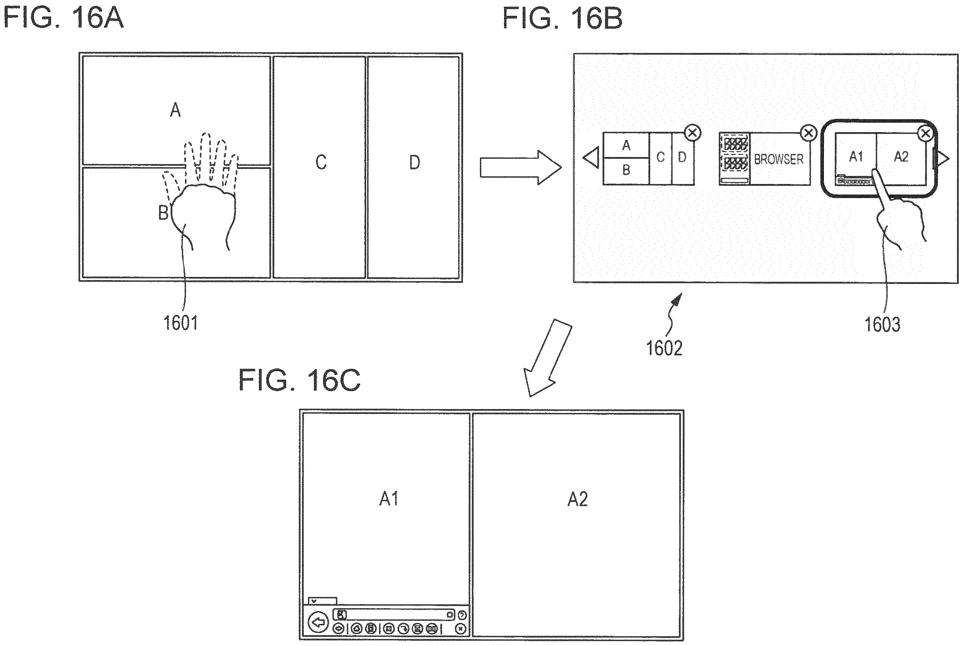

The information processing apparatus 100 can save the state of the windows and the state of the respective panes as described above. Figs. 16A to 16C show an operation method for saving the state of the windows and the state of the respective panes and restoring the saved original screen. In response to a grab operation 1601 performed by the user on the screen as shown in Fig. 16A, the information processing apparatus 100 saves the state of the windows and the state of the respective panes at that time. The information processing apparatus 100 can display the saved state of the windows and the state of the respective panes as a global menu 1602 which is a list as shown in Fig. 16B. The user can perform operations such as selection of a state to be restored, deletion, and addition of a new state on the global menu. If the user touches a desired state as shown with a reference numeral 1603 in Fig. 16B, the selected state is restored on the screen as shown in Fig. 16C.

According to the information processing apparatus 100 of this embodiment, it is possible to divide (split) the screen, scroll the screen after the division, and resize the screen, for example, through touch operation of the user tracing the screen with their fingertip. Among such operations, the division of the screen can be performed by a gesture of the user moving their fingertip across the screen, namely an intuitive gesture of cutting the screen.

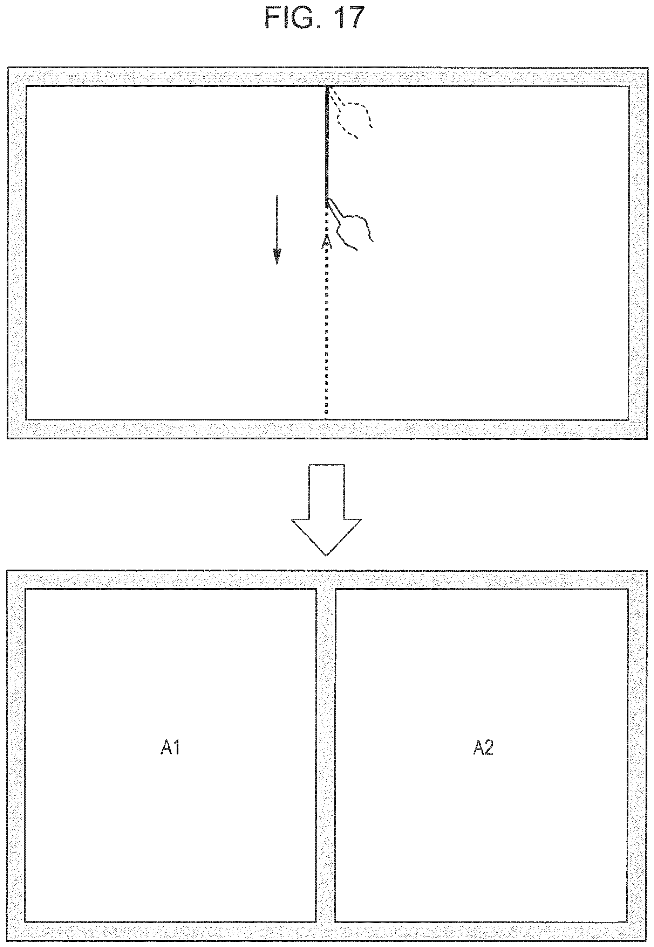

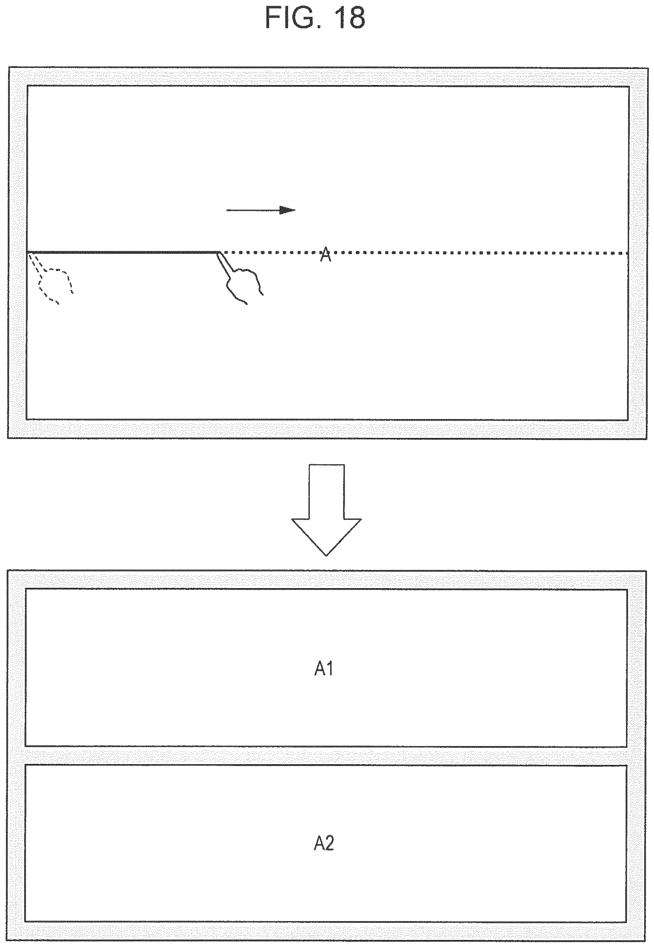

Figs. 17 and 18 show examples of UI operations for dividing the screen. It is assumed that the pane A is displayed on the screen. As shown in each of the upper parts of the drawings, the user touches the gray part outside the screen with a fingertip and moves the finger in a desired dividing direction (or so as to trace a desired dividing line). The part "outside the screen" described herein is an effective detection region of the touch panel, which is a region at a circumferential edge of the pane, in which no pane is displayed. The gray regions outside the screens are depicted so as to be slightly larger in Figs. 17 and 18 for easy understanding.

In Fig. 17, the user moves their fingertip from the upper end of the screen to the lower side and instructs a dividing line in the vertical direction. Then, if the user traces the screen by a predetermined amount in the vertical direction (equal to or more than 1/3 of the screen in the example shown in the drawing), division of the screen is fixed, and the dividing line automatically extends to the lower end of the screen. Then, the screen is divided into two parts by the dividing line in the vertical direction, and the panes A1 and A2 as clones of the original pane A appear in the left and right parts of the screen after the division.

In Fig. 18, the user moves their fingertip from the left end of the screen to the right side and instructs a dividing line in the horizontal direction. Then, if the user traces the screen by a predetermined amount (equal to or more than 1/3 of the screen in the example shown in the drawing) in the horizontal direction, division of the screen is fixed, and the dividing line automatically extends to the right end of the screen. Then, the screen is vertically divided into two parts by the dividing line in the horizontal direction, and the panes A1 and A2 as clones of the original pane A appear in the upper and lower parts of the screen after the division.

The UI operations shown in Figs. 17 and 18 make the user recall an image of splitting the screen with their fingertip. By dividing the screen, a new pane such as a clone of an original pane appears.

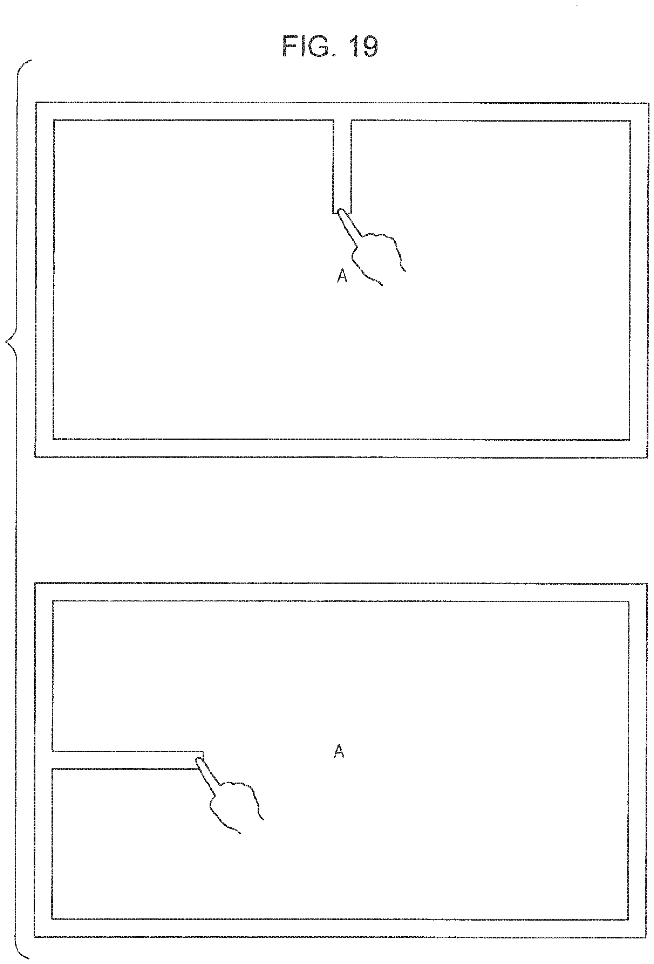

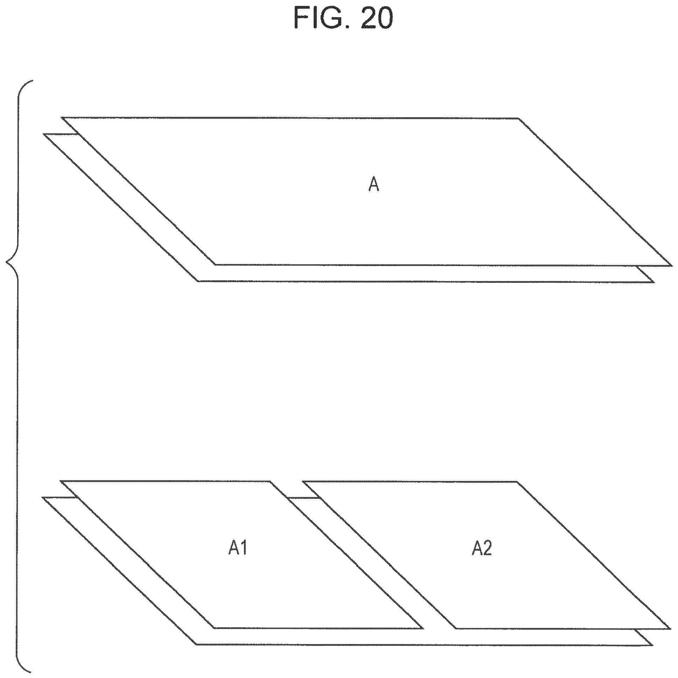

In addition, the dividing line of the screen is shown such that the background can be seen through the dividing line as shown in Fig. 19. Such a UI expression has an effect of making the user recall an image that the pane is superimposed on the background screen and the pane is cut into two parts on the background screen as shown in Fig. 20.

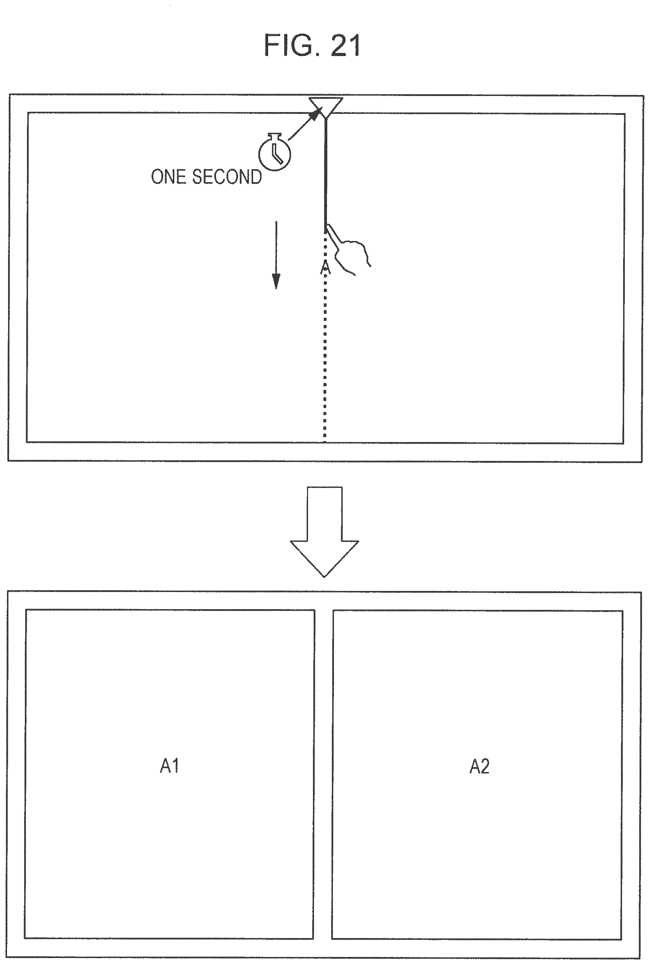

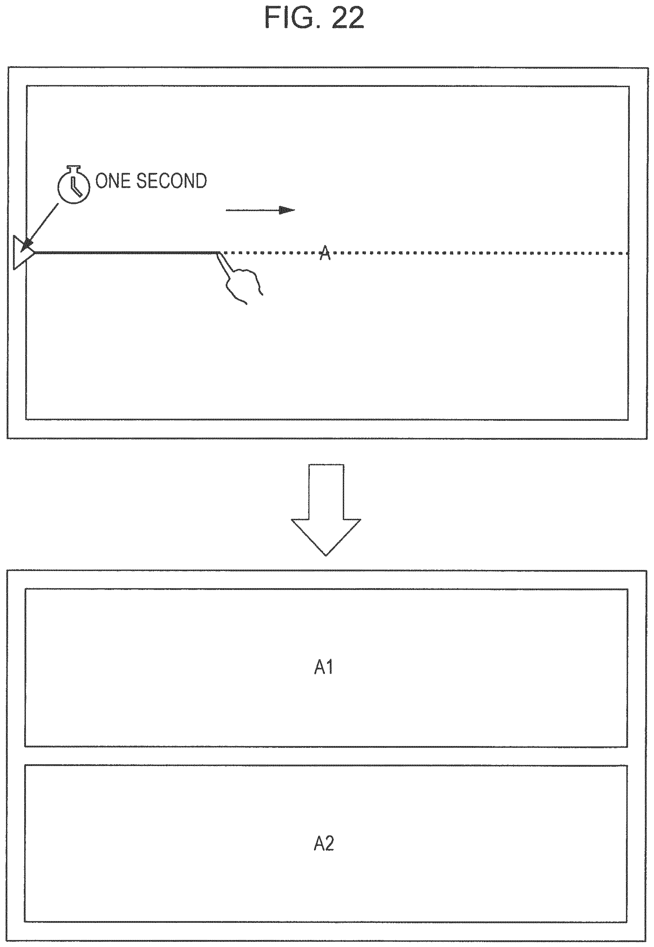

In addition, Figs. 21 and 22 show another example of a UI operation for dividing the screen. It is assumed that the pane A is displayed on the screen. As shown in each of the upper parts of the drawings, the user performs a "long press" on a start position of the dividing line with a fingertip, that is, continuously touches the start position for a predetermined period (one second, for example), and then moves the finger in a desired dividing direction (or so as to trace a desired dividing line).

In Fig. 21, the user performs a long press on a desired position at the upper end of the screen with their fingertip, then moves their fingertip to the lower side, and instructs a dividing line in the vertical direction. Then, if the user traces the screen by a predetermined amount in the vertical direction (equal to or more than 1/3 of the screen in the example shown in the drawing), division of the screen is fixed, and the dividing line automatically extends to the lower end of the screen. Then, the screen is divided into two parts by the dividing line in the vertical direction, and the panes A1 and A2 as clones of the original pane A appear in the left and right parts of the screen after the division.

In Fig. 22, the user performs a long press on a desired position at the left end of the screen with their fingertip, then moves their fingertip to the right side, and instructs a dividing line in the horizontal direction. Then, if the user traces the screen by a predetermined amount in the horizontal direction (equal to or more than 1/3 of the screen in the example shown in the drawing), division of the screen is fixed, and the dividing line automatically extends to the right end of the screen. Then, the screen is vertically divided into two parts by the dividing line in the horizontal direction, and the panes A1 and A2 as clones of the original pane A appear in the upper and lower parts of the screen after the division.

In any of the cases of dividing the screen by the method shown in Figs. 17 and 18 and the method shown in Figs. 21 and 22, the screen can be repeatedly divided. However, screen division at a position corresponding to a width which is equal to or less than a minimum division width is not accepted. The minimum division width is 100 pixels, for example.

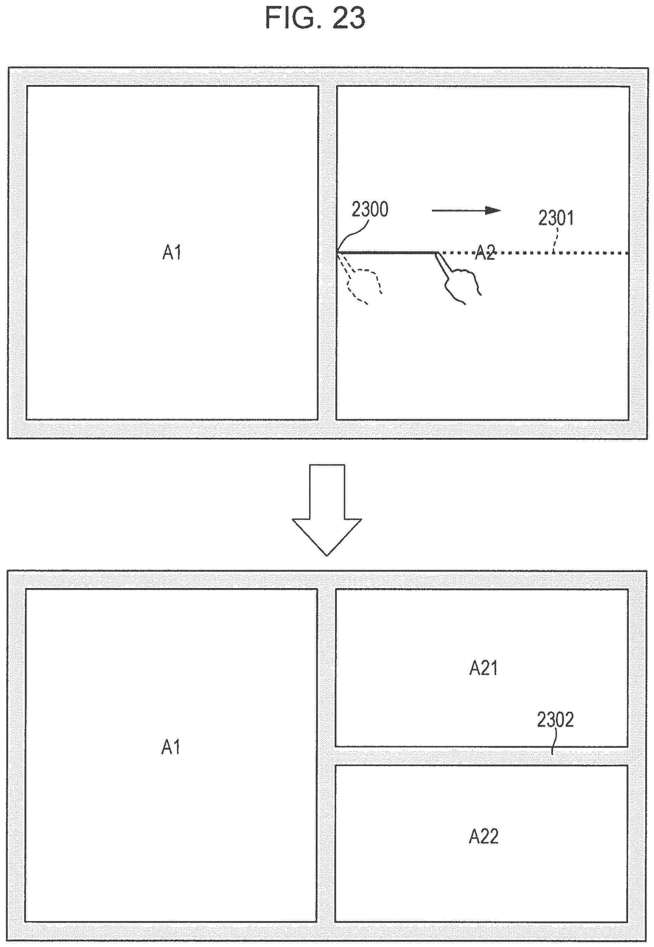

Fig. 23 shows a state where the screen is horizontally divided into two parts as shown in Fig. 17 and the pane A2 displayed in the right part of the screen is further vertically divided into two parts by the same UI operation. If the user touches a division start position 2300 at the left end of the pane A2 with their fingertip and traces the screen by a predetermined length in the horizontal direction as shown in the upper part of Fig. 23, division of the screen is fixed, and an auxiliary line 2301 shown as a dotted line automatically extends to the right end of the screen. Then, the screen is vertically divided into two parts by the new dividing line 2302 in the horizontal direction, and panes A21 and A22 as clones of the original pane A2 appear in the upper and lower parts of the screen after the division as shown in the lower part of Fig. 23.

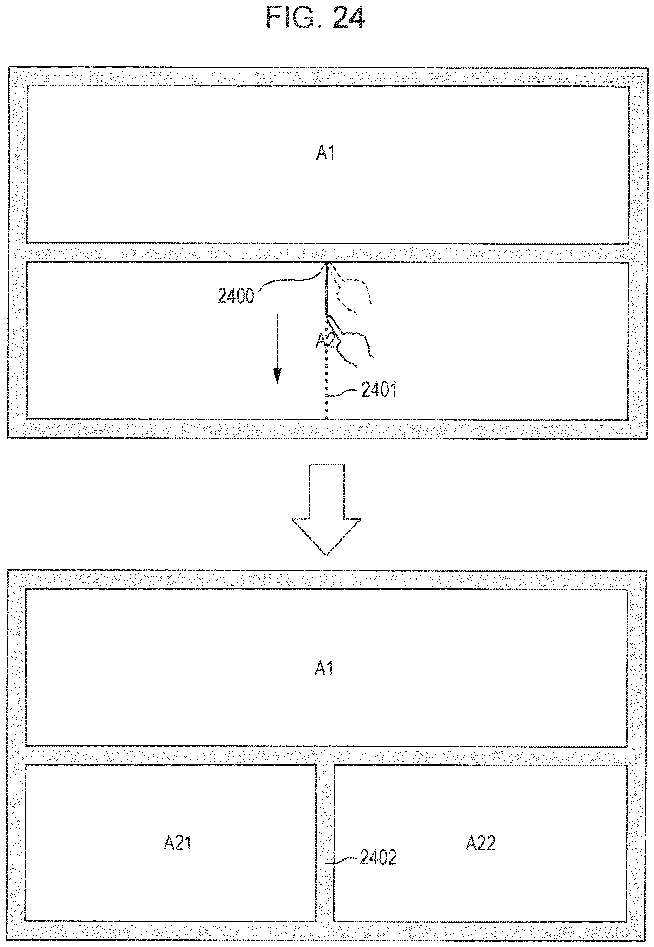

In addition, Fig. 24 shows a state where the screen is vertically divided into two parts as shown in Fig. 18 and the pane A2 displayed in the right part of the screen is further horizontally divided into two parts by the same UI operation. If the user touches a division start position 2400 at the upper end of the pane A2 with their fingertip and traces the screen by a predetermined length in the vertical direction as shown in the upper part of Fig. 24, division of the screen is fixed, and an auxiliary line 2401 shown as a dotted line automatically extends to the lower end of the screen. Then, the screen is horizontally divided into two parts by the new dividing line 2402 in the vertical direction, and panes A21 and A22 as clones of the original pane A2 appear in the left and right parts of the screen after the division as shown in the lower part of Fig. 24.

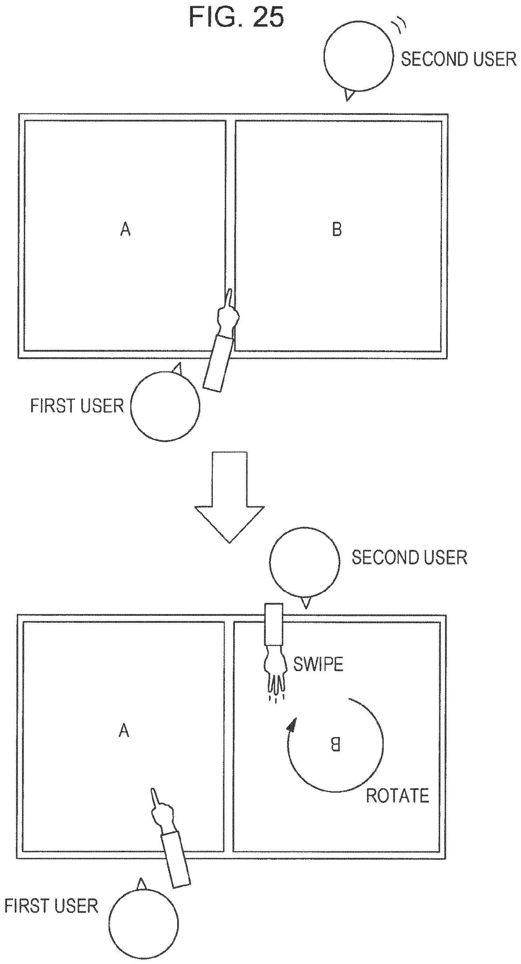

Fig. 25 shows a UI operation for rotating one screen out of two horizontally divided screens as shown in Fig. 17 or 21. For example, it is assumed that a second user facing a first user appears when the screen is divided into two parts by a UI operation performed by the first user and the pane A and the pane B are displayed in the tabletop state, in which the information processing apparatus 100 is installed on a table, for example. It is difficult for the second user to view the pane B even if the second user desires to use the pane B since the screen is oriented in the opposite direction as shown in the upper part of Fig. 25. Thus, the second user swipes the pane B that the second user desires to use with three fingers as shown in the lower part of Fig. 25. In doing so, the direction of the pane B is changed to the swiping direction. In addition, the rotation of the pane may be instructed by rotation of five touching fingers instead of swiping with three fingers.

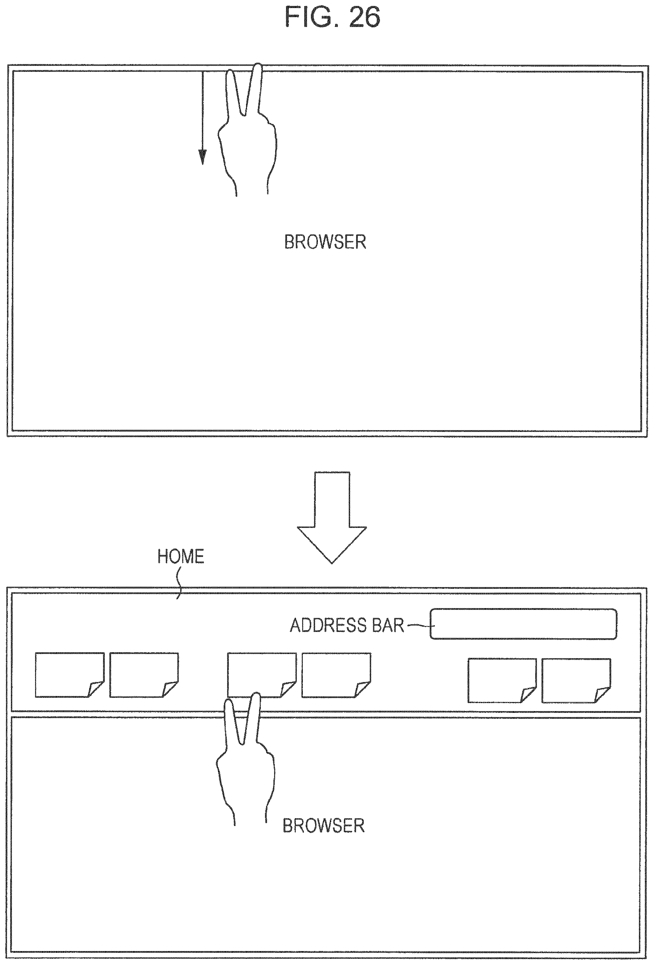

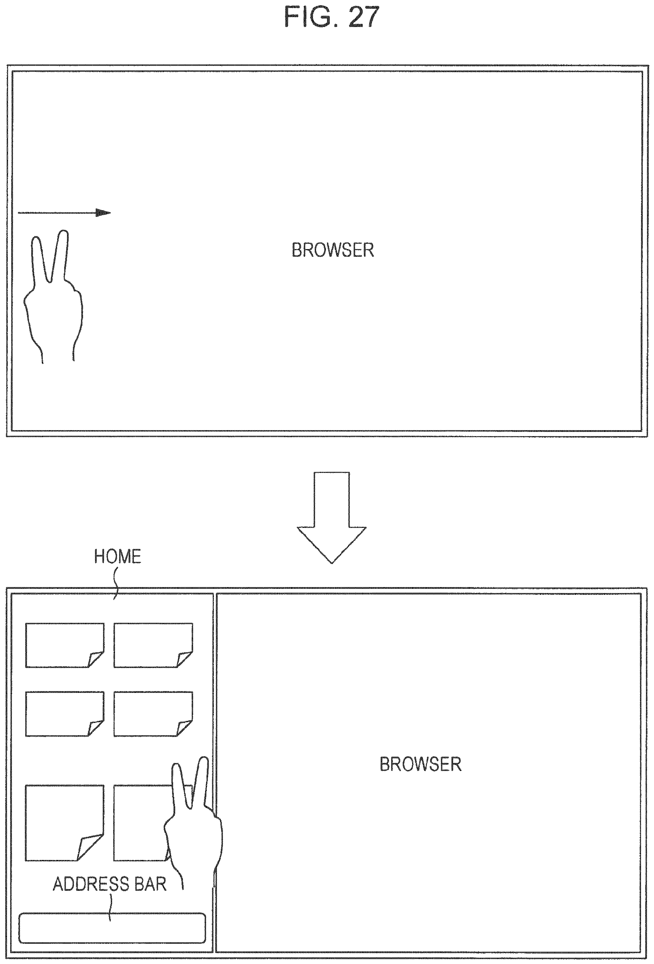

Figs. 26 and 27 show UI operations for causing a new pane to appear by swiping with two fingers. Full screen display of the browser is performed in the upper part of Fig. 26, and a new pane (home) appears from the upper end of the screen to the lower side (namely the swiping direction) as shown in the lower part of Fig. 26 by the user touching the upper edge of the screen with two fingers and swiping the screen to the lower side. In addition, full screen display of the browser is performed in the upper part of Fig. 27, and a new pane (home) appears from the left end of the screen to the right side (namely the swiping direction) as shown in the lower part of Fig. 27 by the user touching the left edge of the screen with two fingers and swiping the screen to the right side.

It can be said that the UI operations shown in Figs. 26 and 27 are methods for causing a new pane to appear by methods other than the UI operation of cutting (splitting) the screen.

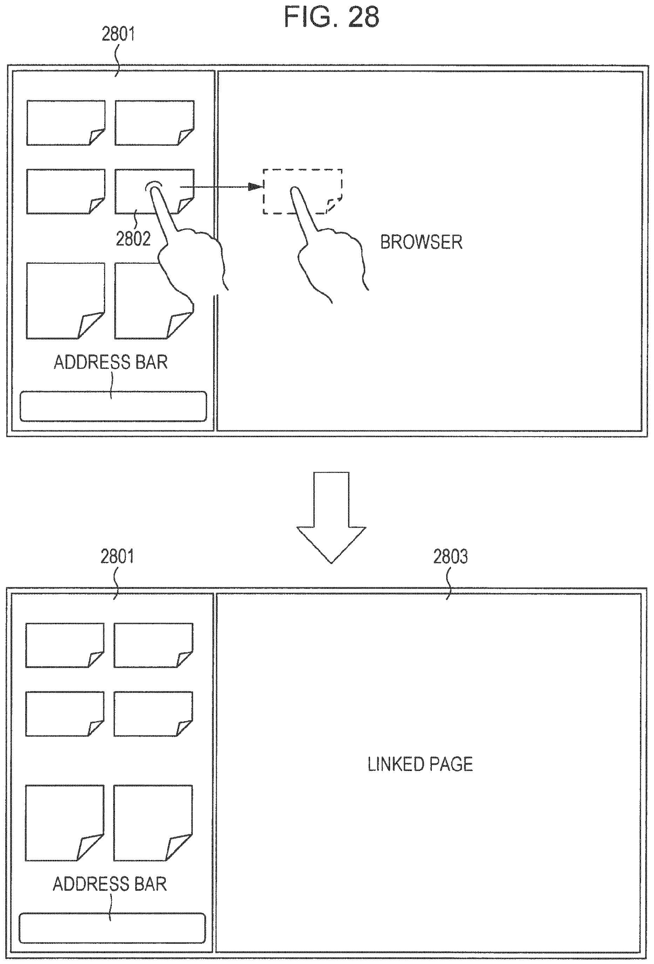

Fig. 28 shows a UI operation performed on the home screen. As shown in the upper part of Fig. 28, the user performs an operation of dragging and dropping, to the browser on the right side of the screen, a desired location 2802 with a link in the home 2801 displayed in the left part of the screen. In doing so, the right part of the screen shifts to a linked page 2803 from the browser as shown in the lower part of Fig. 28.

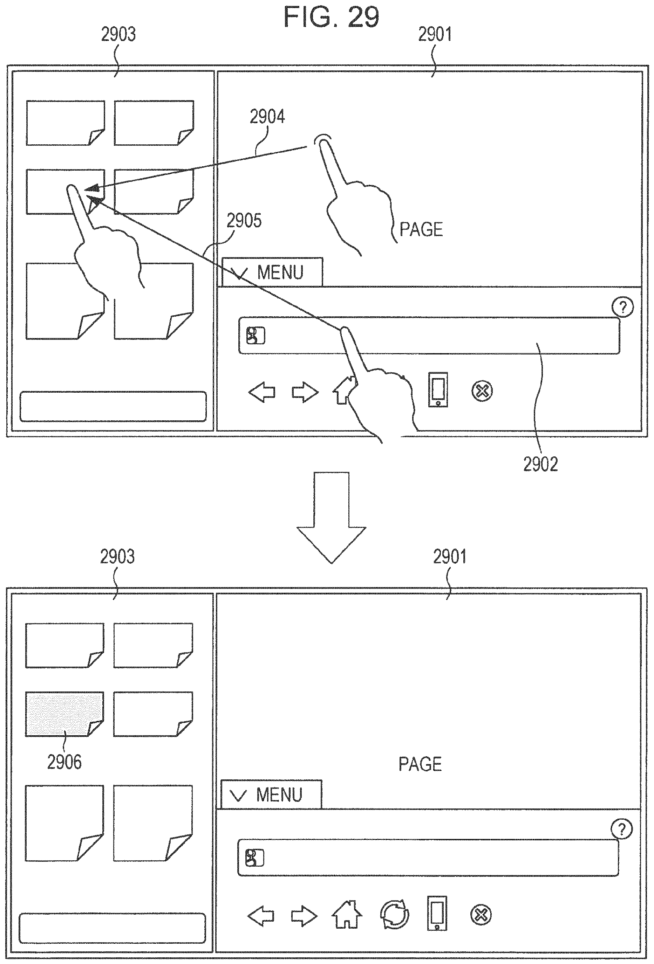

In addition, Fig. 29 shows a state where a link of a page 2901 being displayed in the right part of the screen and a URL in an address bar 2902 of the menu are added as a bookmark 2906 in a bookmark section of a home 2903 in the left part of the screen by dragging and dropping the link and the URL as shown with reference numerals 2904 and 2905.

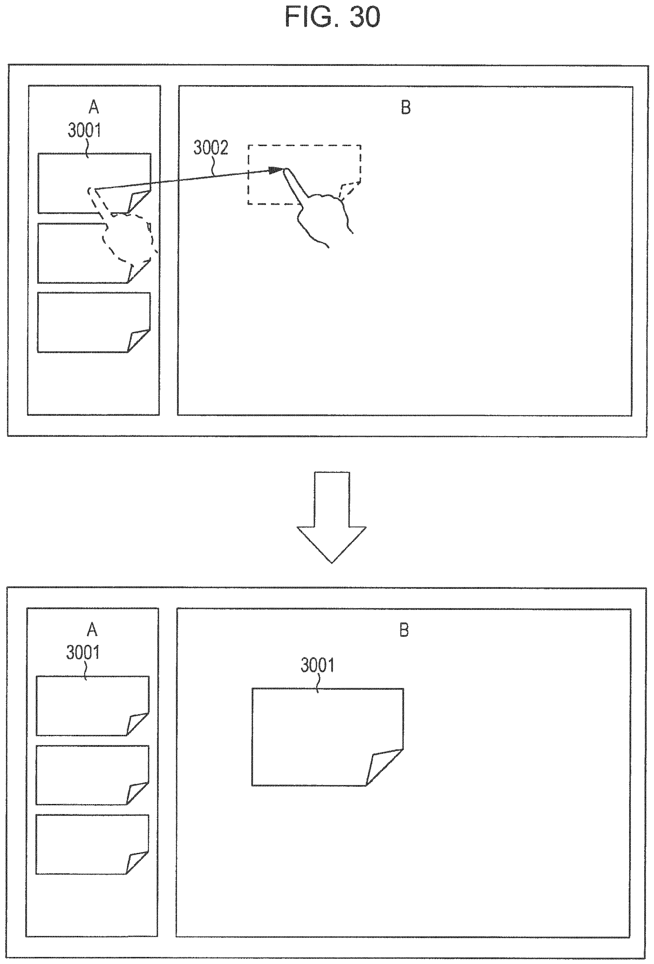

Fig. 30 shows a UI operation for transferring data between panes. In the drawing, two panes A and B are displayed in the left and right parts of the screen. It is assumed that the panes A and B are screens which are used by a single user to work at the same time or screens which are respectively used by two users, for example. If the user drags and drops an object 3001 in the pane A to the inside of the other pane B as shown with a reference numeral 3002 as shown in the upper part of the drawing, the object 3001 is transferred to the inside of the pane B as shown in the lower part of the drawing. In the example shown in the drawing, the transfer of the object 3001 means "copy", and the object 3001 also remains in the original pane A. If the transfer means "displacement", the object 3001 does not remain in the original pane A after the transfer. Here, the object 3001 is a URL, an image, music, or text, for example. It is possible to execute various kinds of processing on the received object 3001 in the pane B as a transfer destination. For example, it is possible to perform processing of attaching the image, reproducing the music, or posting the object to a social network, for example.

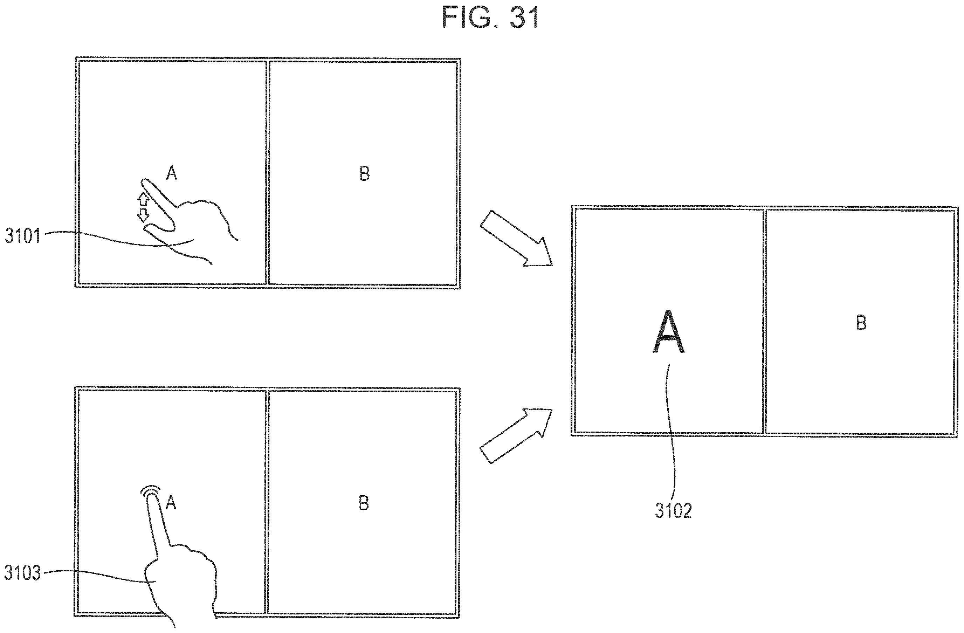

Fig. 31 shows a UI operation for increasing or decreasing display of one screen out of two horizontally divided screens. If the user performs a pinch-out operation on the pane A as shown with a reference numeral 3101 when the screen is divided into two parts and the panes A and B are displayed, the pane A is displayed in an enlarged manner as shown with a reference numeral 3102. If the user performs a pinch-in operation on the pane A, the size of the display in the pane A is reduced though not shown in the drawing. If the user performs double tapping on the pane A as shown with a reference numeral 3103, the size of the display in the pane A expands so as to fit to a block including the location of the double tapping.

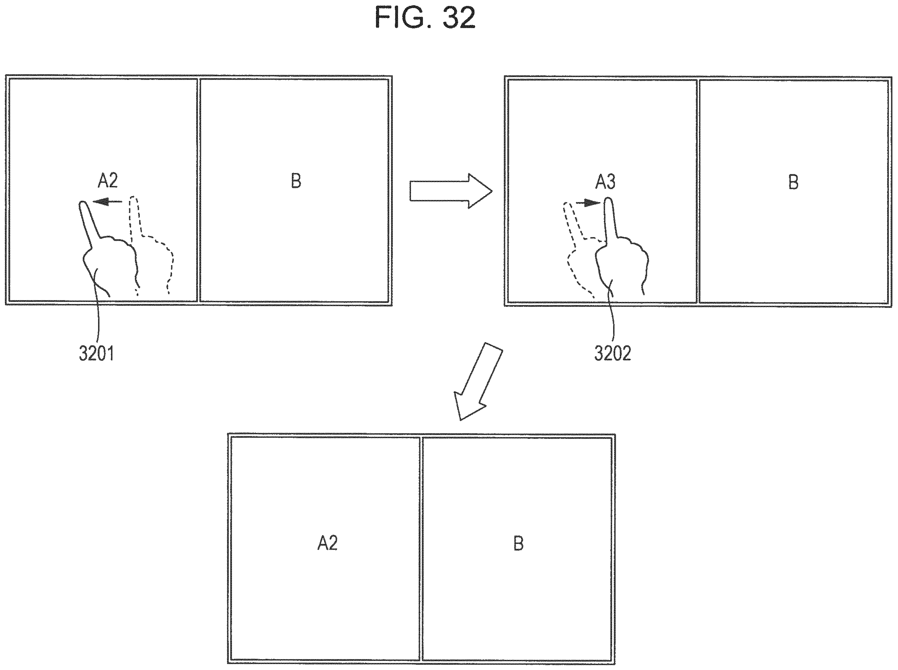

Histories of the respective panes can be tracked by a horizontal flick operation. It is assumed that the pane A shifts in an order of A0→A1→A2→A3→A4... in a state where the screen is horizontally divided into two parts and the panes A and B are displayed as shown in Fig. 32, for example. The user can forward the history by a left flick operation as shown with a reference numeral 3201. In addition, the user can put back the history by a right flick operation as shown with a reference numeral 3202.

As described above with reference to Figs. 23 and 24, the screen dividing operation can be repeatedly performed on the respective divided screens. Scrolling, changing of the screen sizes, and the like as well as the repetition of the dividing operation can be performed on the screens after the division.

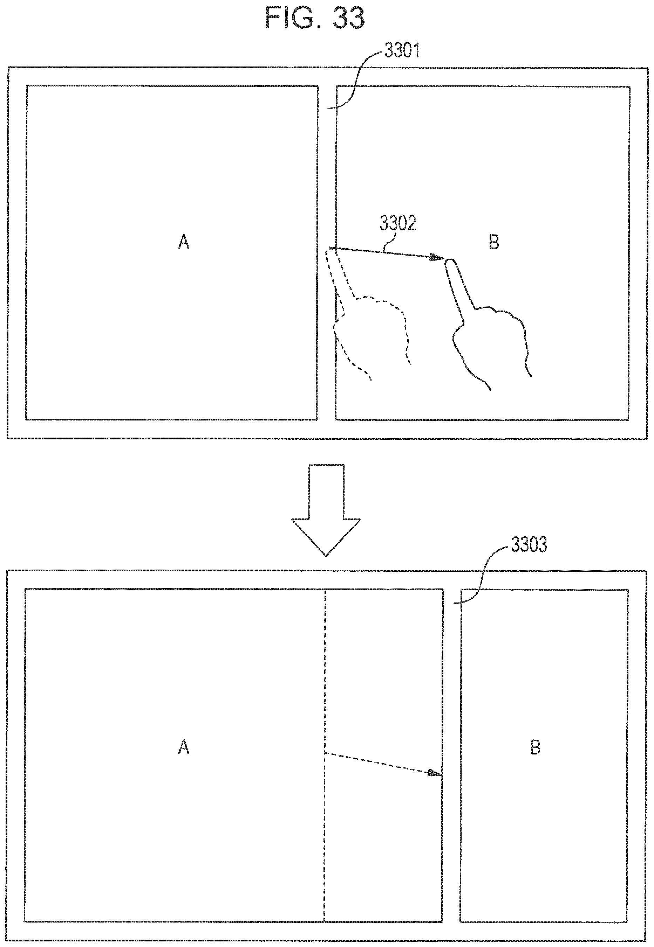

Fig. 33 shows a UI operation for changing sizes of the panes A and B obtained by horizontally dividing the screen into two parts. The user touches a position near a boundary 3301 between the pane A and the pane B with a fingertip and traces the screen by a length, by which the user desires to change the screen, in a direction, in which the user desires to change the screen as shown in the upper part of the drawing. In the example shown in the drawing, the user traces the screen with the fingertip by a length, by which the user desires to change the screen, in the right direction as shown with a reference numeral 3302. As a result of this operation, the new boundary is moved in the right direction up to the position shown with a reference numeral 3303, the size of the pane A expands in the horizontal direction, and the size of the pane B is reduced in the horizontal direction as shown in the lower part of the drawing.

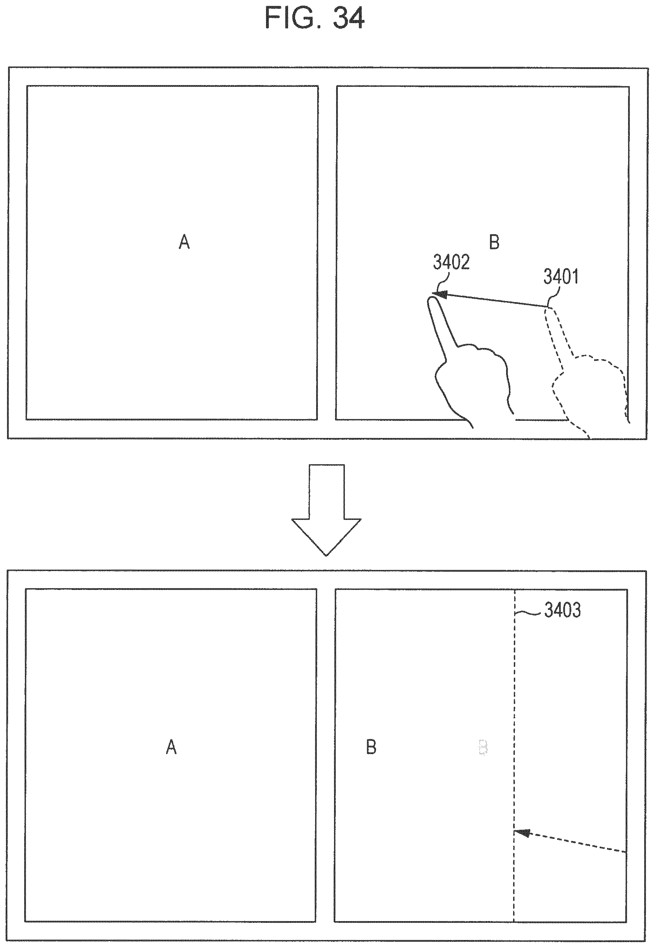

In addition, Fig. 34 shows a UI operation for scrolling the screen in the pane B out of the panes A and B obtained by horizontally dividing the screen into two parts. The user touches a region 3401 in the pane B with their fingertip and traces the screen by an amount, by which the user desires to scroll the screen, in a direction, in which the user desires to scroll the screen as shown in the upper part of the drawing. In the example shown in the drawing, the user traces the screen by a length, by which the user desires to scroll the screen, in the left direction with their fingertip as shown with a reference numeral 3402. As a result of this operation, the screen displayed in the pane B is displaced by the scrolled amount 3403 in the left direction as shown in the lower part of the drawing. The user can change the sizes of the adjacent panes A and B by an intuitive UI operation of grabbing and moving the boundary between the pane A and the pane B.

### B-1. Erroneous Operation Preventing Method 1

If Fig. 23 is compared with Figs. 33 and 34, similar UI operations are performed for dividing the screen again, changing the screen sizes, and scrolling the screen in terms of a point that the user traces the screen with their fingertip in a direction substantially orthogonal to the boundary of the screens. In addition, if Fig. 23 is compared with Fig. 33, significantly similar UI operations are performed for dividing the screen again and changing the screen sizes in terms of a point that the user traces the screen with their fingertip in a direction substantially orthogonal to the boundary from a position near the boundary of the screens as a touch start point. For this reason, it is difficult to correctly distinguish the two operations of dividing the screen again and changing the sizes of the screen, in particular, according to the method of performing UI operations based merely on the track of the fingertip of the user on the touch panel as in the technique disclosed in Japanese Unexamined Patent Application Publication No. 2007-257220, and there is a concern that an erroneous operation may be caused.

Thus, a size change instructing region and a screen division instructing region are respectively defined near the boundary of the screens according to a first method for preventing an erroneous operation. If the touch operation with the fingertip of the user starts from the size change instructing region, the touch operation is determined to be an instruction for changing the screen sizes, and screen size changing processing is performed in accordance with a direction, in which the fingertip moves thereafter. In contrast, if the touch operation with the fingertip of the user starts from the screen division instructing region, the touch operation is determined to an instruction for dividing the screen, and dividing processing of the touched screen is performed in accordance with a direction, in which the fingertip moves thereafter. In addition, if a touch operation with the fingertip of the user starts from a part other than the size change instructing region and the screen division instructing region, the touch operation is determined to be an instruction for scrolling the screen (or an ordinary behavior such as movement to a linked page), and processing of scrolling the screen or moving to the linked page is performed in accordance with the displacement of the fingertip thereafter. Therefore, it is possible to correctly determine which one out of the screen size changing and the screen division each of the similar UI operations of tracing the screen with the fingertip in a direction substantially orthogonal to the boundary is.

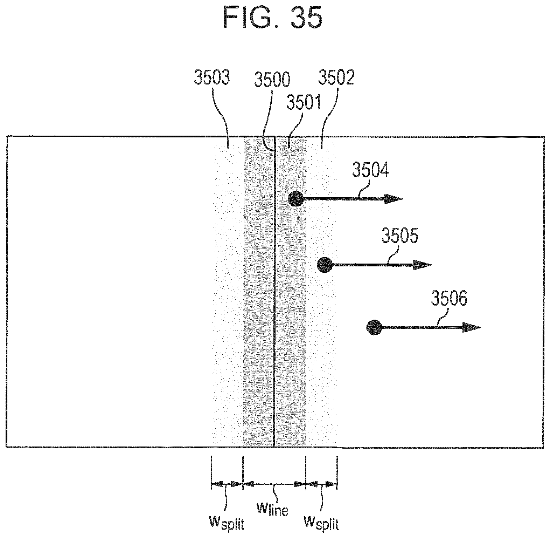

Fig. 35 shows a state where the size change instructing region and the screen division instructing region are disposed in the vicinity of a boundary 3500 of the screens. In the example shown in the drawing, a part with a predetermined width Wₗᵢₙₑ around the boundary between the pane A and the pane B is defined as a size instructing region 3501. In addition, regions from right and left edges of the size change instructing region 3501 to a predetermined distance Wₛₚₗᵢₜ are defined as screen division instructing regions 3502 and 3503. However, the respective regions 3501 to 3503 are depicted so as to be relatively large with respect to the size of the entire screen in the drawing for easy understanding.

In order to reliably let the user recognize the presence of the size change instructing region 3501 and the screen division instructing regions 3502 and 3503, the size change instructing region 3501 and the screen division instructing regions 3502 and 3503 may be displayed with different colors as shown in the drawing. Alternatively, such regions 3501 and 3502 may be transparent so as not to interrupt the screen display.

A UI operation 3504 which is performed by starting a touch operation from the inside of the size change instructing region 3501 is determined to be an instruction for changing the screen sizes, and screen size changing processing is performed in accordance with a direction, in which the fingertip moves thereafter. In addition, a UI operation 3505 which is performed by starting a touch operation from the inside of the screen division instructing region 3502 is determined to be an instruction for dividing the screen, and dividing processing of the touched screen is performed in accordance with the direction, in which the fingertip moves thereafter. In contrast, a UI operation 3506 which is performed by starting a touch operation from a part further inside than the screen division instructing region 3502 is determined to be an instruction for scrolling the screen (or an ordinary behavior such as a movement to a linked page), and processing of scrolling the screen or moving to the linked page is performed in accordance with the movement of the fingertip thereafter.

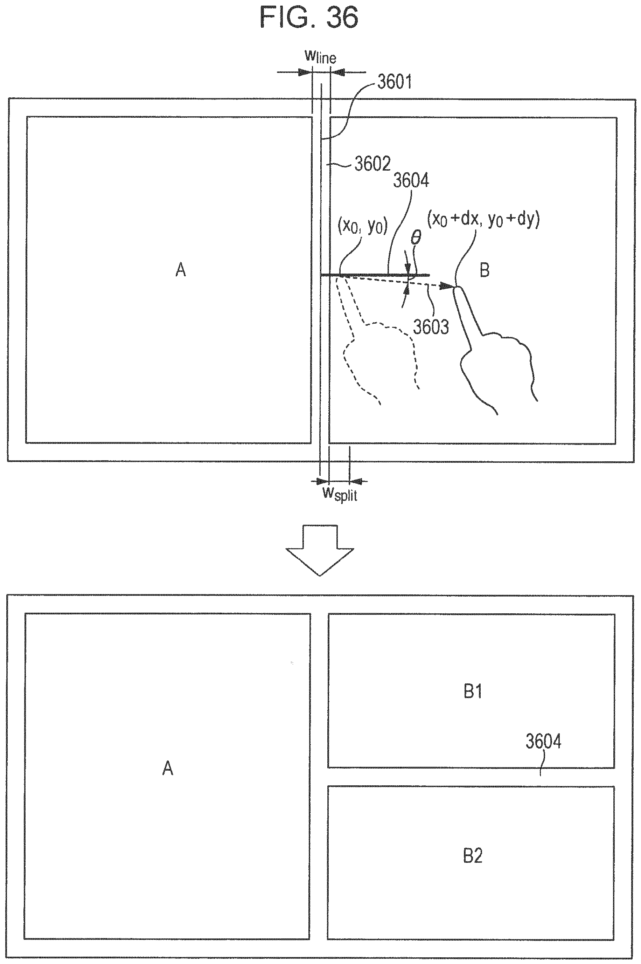

Fig. 36 shows a UI operation for dividing the screen again by starting a touch operation from the inside of the screen division instructing region.

As shown in the upper part of Fig. 36, it is assumed that the user starts a touch operation from a position (x₀, y₀) near a boundary 3601 between the left end of the pane B and the pane A and then substantially linearly traces the screen in the pane B to the right side up to a position (x₀ + dx, y₀ + dy) before elapse of predetermined time dt. If coordinates of the boundary 3601 are (xₛₚₗᵢₜ, y), the shortest distance (x₀ - xₛₚₗᵢₜ) from the boundary 3601 to the touch start position (x₀, y₀) is greater than wₗᵢₙₑ/2 and equal to or less than wₛₚₗᵢₜ, and it is possible to know that the touch operation has been started from the inside of the screen division instructing region 3602. Thus, a UI operation 3603 being currently performed is determined to be an instruction for dividing the screen, and a dividing line 3604 is formed. Then, the pane B is vertically divided into two parts by a new dividing line 3605 for segmenting the pane B in the horizontal direction, and panes B1 and B2 as clones of the original pane B appear in the upper and lower parts of the screen after the division as shown in the lower part of Fig. 36. The user can divide the pane B by such an intuitive UI operation of cutting the pane B with the fingertip.

In addition, when the deviation amount dx of the UI operation represented with the reference numeral 3603 from the horizontal direction is greater than a predetermined value, or when inclination θ from the horizontal direction is greater than a predetermined value, the UI operation may be determined not to be an instruction for dividing the screen in the pane (in the horizontal direction) (alternatively, the screen dividing processing may be canceled).

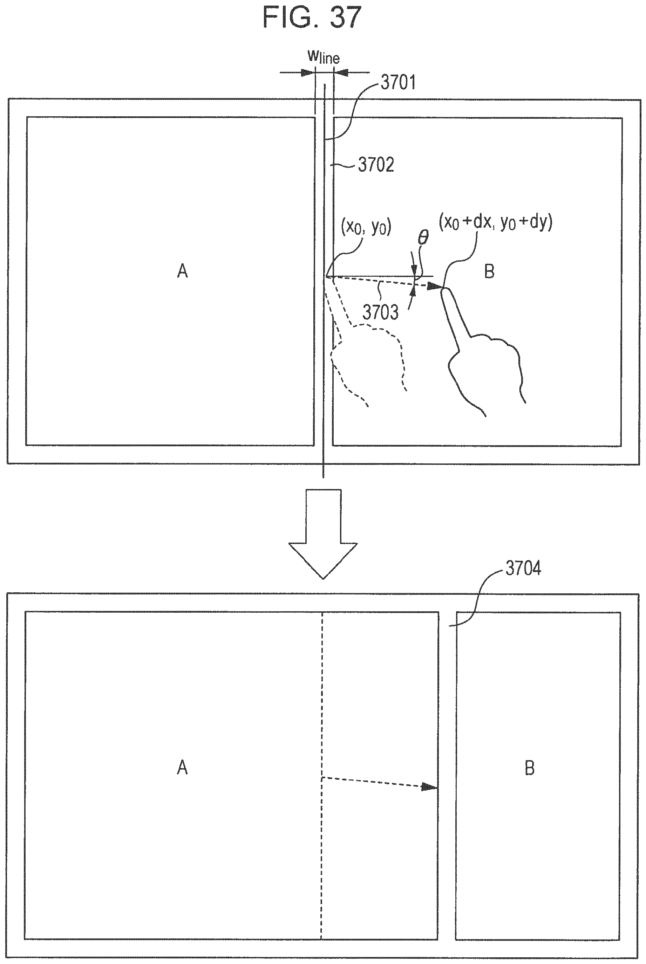

Fig. 37 shows a UI operation for changing the screen sizes by starting a touch operation from the inside of the size change instructing region.

As shown in the upper part of Fig. 37, it is assumed that the user starts a touch operation from a position (x₀, y₀) near a boundary 3701 between the left end of the pane B and the pane A and then substantially linearly traces the screen inside the pane B with the fingertip to the right side up to a position (x₀ + dx, y₀ + dy) before elapse of predetermined time dt. If coordinates of the boundary 3701 are (xₛₚₗᵢₜ, y), the shortest distance (x₀ - xₛₚₗᵢₜ) from the boundary 3701 to the touch start position (x₀, y₀) is equal to or less than wₗᵢₙₑ/2, and it is possible to know that the touch operation has been started from the inside of the size change instructing region 3702. Thus, a UI operation 3703 being currently performed is determined to be an instruction for dividing the screen. Then, a new boundary is displaced in the right direction up to a position shown with a reference numeral 3704 (that is, a position, at which tracing with the fingertip ends), the size of the pane A expands in the horizontal direction, and the size of the pane B is reduced in the horizontal direction as shown in the lower part of Fig. 37. The user can change the sizes of the adjacent panes A and B by the intuitive UI operation of grabbing and moving the boundary between the pane A and the pane B.

In addition, when the deviation amount dx of the UI operation represented with the reference numeral 3703 from the horizontal direction is greater than a predetermined value, or when inclination θ from the horizontal direction is greater than a predetermined value, the UI operation may be determined not to be an instruction for changing the sizes of the screens in the panes (in the horizontal direction) (alternatively, the screen size changing processing may be canceled).

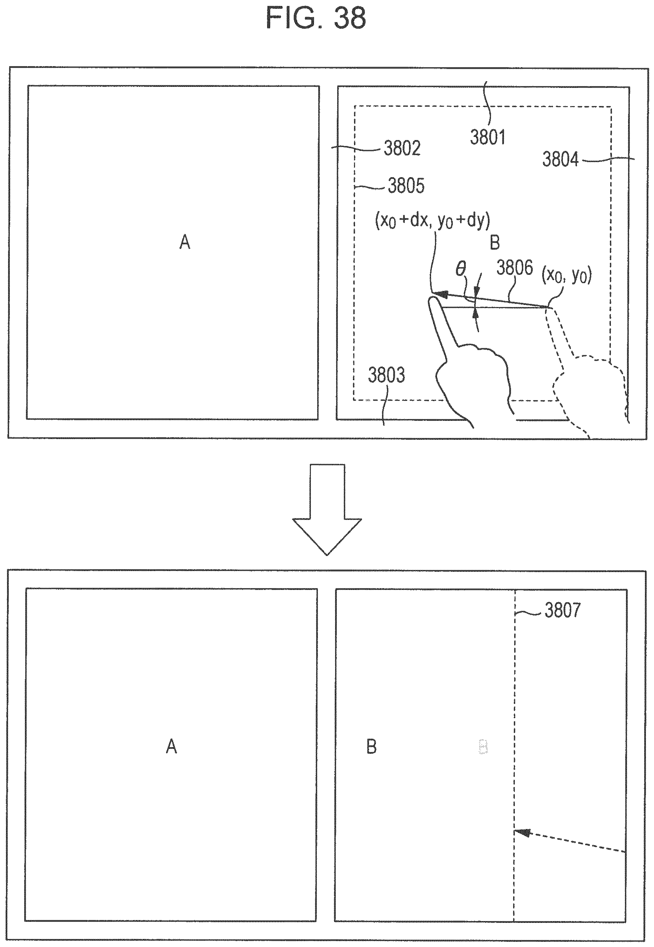

Fig. 38 shows a UI operation for scrolling the screens by starting a touch operation from the inside of the screen division instructing region.

As shown in the upper part of Fig. 38, it is assumed that the user starts a touch operation from a position (x₀, y₀) inside the pane B and then substantially linearly traces the screen inside the pane B with the fingertip to the left side up to a position (x₀ + dx, y₀ + dy) before elapse of predetermined time dt. Since the touch start position (x₀, y₀) is located further inside than wₗᵢₙₑ/2 + wₛₚₗᵢₜ from all the boundaries 3801 to 3804 of the pane B, namely further inside than a region shown with the reference numeral 3805, the UI operation 3806 being currently performed is determined to be an instruction for scrolling the screen. Then, the display position in the pane B is displaced in a direction, in which the fingertip of the user moves, by a distance, by which the fingertip moves. Therefore, the right edge of the pane B before scrolling moves in the right direction up to a position shown with the reference numeral 3807 as shown in the lower part of Fig. 38.

In addition, when the deviation amount dx of the UI operation represented with the reference numeral 3806 from the horizontal direction is greater than a predetermined value, or when inclination θ from the horizontal direction is greater than a predetermined value, the UI operation may be determined not to be an instruction for scrolling the screen in the pane (in the horizontal direction) (alternatively, the screen scrolling processing may be canceled).

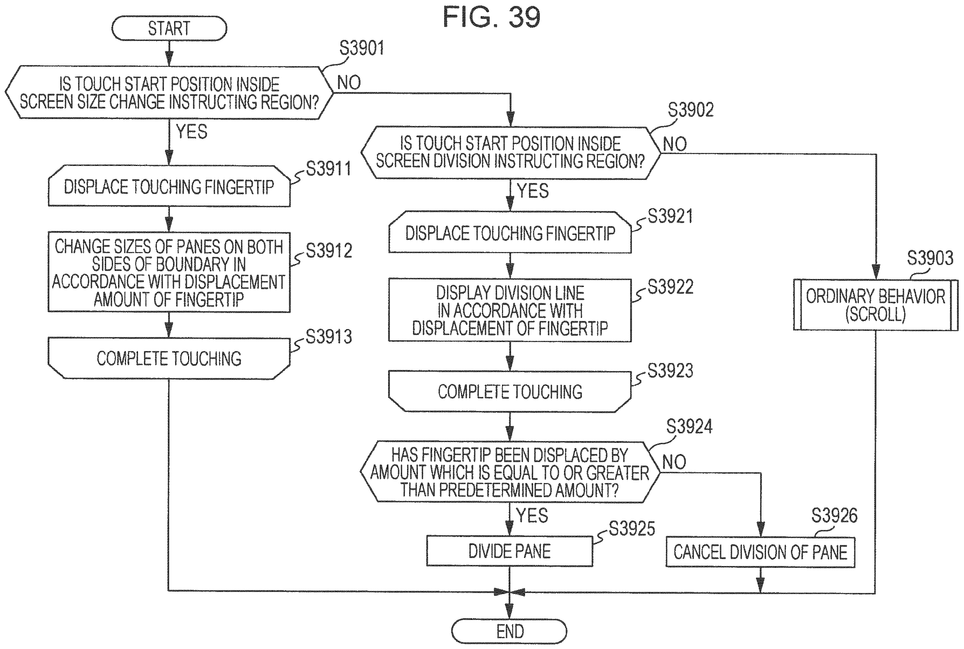

Fig. 39 shows a processing procedure for the information processing apparatus 100 executing the screen operations as shown in Figs. 36 to 38 in response to the UI operations by the user, in the form of a flowchart. The processing procedure is implemented in the form that the computation unit 120 executes a predetermined program code, for example.

The processing procedure is activated in response to a touch operation performed by the user on the screen, and first, it is checked whether or not the touch start position (x₀, y₀) is inside the screen size change instructing region with the width wₗᵢₙₑ (Step S3901). When the user performs an operation of tracing the screen in the horizontal direction with their fingertip as shown in Figs. 36 and 37, for example, it is checked whether or not an absolute value |x₀ - xₛₚₗᵢₜ| of the shortest distance from the touch start position to the boundary is equal to or less than wₗᵢₙₑ2.

Here, if the touch start position (x₀, y₀) is inside the screen size change instructing region (Yes in Step S3901), the UI operation being currently performed is determined to be an instruction for dividing the screen. Then, the screen size changing processing (Step S3912) of increasing or decreasing the sizes of the panes on both sides of the boundary, which is located at a nearest position to the touch start position, in accordance with a displacement amount of the fingertip position (moving the boundary between the panes to the fingertip position) is repeatedly executed every time the touching fingertip position is displaced (Step S3911) until the user operation of touching the screen is completed (Step S3913).

If the touching fingertip is displaced from the touch start position (x₀, y₀) to the position (x₀ + dx, y₀ + dy) in the horizontal direction, for example, the sizes of the panes on both sides of the boundary in the horizontal direction are changed by +dx and -dy, respectively. The boundary as a target of the size changing operation may be displayed in an emphasized manner in the course of the screen size change instructing operation (which will be described later). Then, if the user operation of touching the screen is completed, the entire routine of this processing is completed.

On the other hand, if the touch start position (x₀, y₀) is not inside the size change instructing region (No in Step S3901), it is checked whether or not the touch start position (x₀, y₀) is inside the screen division instructing region (Step S3902). When the user performs an operation of tracing the screen in the horizontal direction with their fingertip as shown in Figs. 36 and 37, for example, it is checked whether or not the absolute value |x₀ - xₛₚₗᵢₜ| of the shortest distance from the touch start position to the boundary is greater than wₗᵢₙₑ/2 and equal to or less than wₛₚₗᵢₜ.

If the touch start position (x₀, y₀) is inside the screen division instructing region (Yes in Step S3902), the UI operation being currently performed is determined to be an instruction for dividing the screen. Then, processing of displaying a dividing line up to the displaced fingertip position (Step S3922) is repeatedly executed every time the touching fingertip position is displaced (Step S3921) until the user operation of touching the screen is completed (Step S3923). If the touching fingertip is displaced from the touch start position (x₀, y₀) to the position (x₀ + dx, y₀ + dy) in the horizontal direction, for example, the dividing line is displayed from the touch start position to dx in the horizontal direction. The dividing line may be displayed in an emphasized manner in the course of the screen division instructing operation (which will be described later). In addition, an auxiliary line obtained by extending the dividing line to the other edge of the pane is also displayed along with the dividing line.

Then, if the fingertip position at the time when the touch operation is completed reaches a predetermined length (for example, if the displacement amount dx (or dy) of the fingertip reaches 1/3 of a window width W_{window} of the pane) (Yes in Step S3924), the dividing processing is executed by fixing the division of the pane and generating the dividing line up to the position of the auxiliary line (Step S3925), and the entire routine of this processing is completed. In the pane newly generated by the division, a clone of the original pane is generated, for example.

In addition, if the fingertip position at the time when the touch operation is completed does not reach the predetermined length (No in Step S3924), the screen dividing processing in progress is canceled (Step S3926), and the entire routine of this processing is completed. The screen dividing processing may also be canceled when the track of the fingertip becomes distant from the auxiliary line by a predetermined distance.

If the touch start position (x₀, y₀) is not inside the screen division instructing region (No in Step S3902), another ordinary screen behavior such as screen scrolling (see Fig. 38) or link selection is executed in accordance with the displacement of the fingertip position of the user (Step S3903). The pane being scrolled may be displayed in an emphasized manner in the course of the scroll instructing operation (which will be described later).

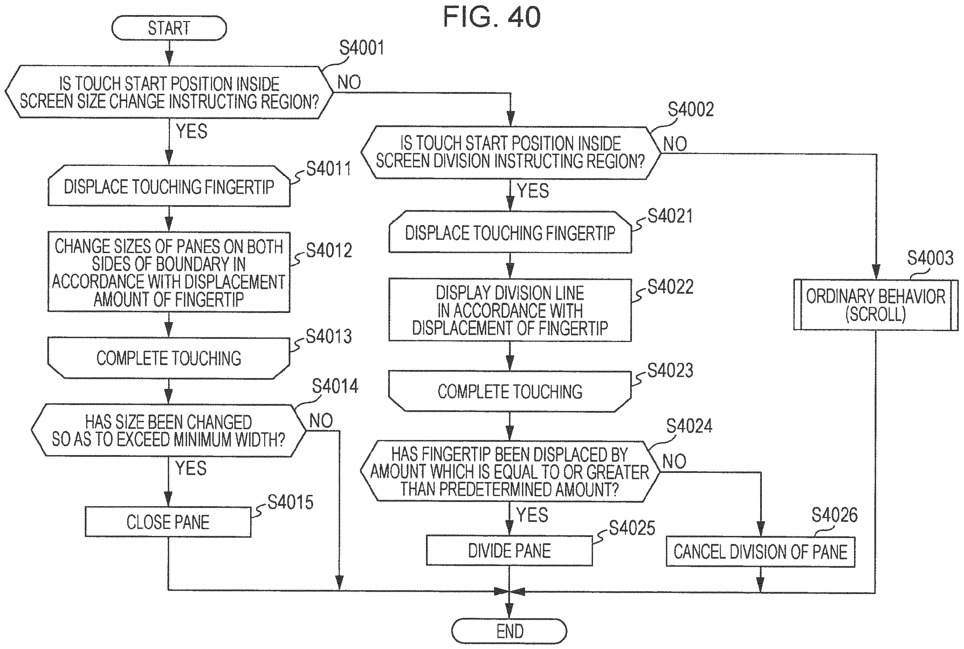

Fig. 40 shows another example of the processing procedure for the information processing apparatus 100 executing the screen operations as shown in Figs. 36 to 38 in response to the UI operations by the user, in the form of a flowchart. The processing procedure is different from the processing procedure shown in Fig. 39 in that processing of closing a pane, a change in the screen size of which has been instructed such that the pane becomes equal to or smaller than a predetermined minimum width, is included.

The processing procedure is activated in response to a touch operation performed by the user on the screen, and first, it is checked whether or not the touch start position (x₀, y₀) is inside the screen size change instructing region with the width wₗᵢₙₑ (Step S4001).

Here, if the touch start position (x₀, y₀) is inside the screen size change instructing region (Yes in Step S4001), the UI operation being currently performed is determined to be an instruction for dividing the screen. Then, the screen size changing processing for increasing or decreasing the sizes of the panes on both sides of the boundary, which is located at the nearest position to the touch start position, in accordance with the displacement amount of the fingertip (Step S4012) is repeatedly executed every time the touching fingertip position is displaced (Step S4011) until the touch operation performed by the user on the screen is completed (Step S4013). The boundary as a target of the size changing operation may be displayed in an emphasized manner in the course of the screen size change instructing operation (which will be described later).

Then, if the touch operation performed by the user on the screen is completed, it is checked whether or not the change in the screen size has been instructed such that the screen becomes equal or smaller than a predetermined minimum width w_{close} (Step S4014). If the change in the screen size has been instructed such that the screen size is greater than the predetermined width w_{close} (No in Step S4014), the change in the screen size is maintained, and the entire routine of this processing is completed. If the change in the screen size has been instructed such that the screen becomes equal to or smaller than the predetermined minimum width w_{close} (Yes in Step S4014), the pane with a width which is equal to or smaller than the predetermined minimum width w_{close} is closed (Step S4015), and the entire routine of this processing is completed.

On the other hand, if the touch start position (x₀, y₀) is not inside the screen size change instructing region (No in Step S4001), then it is checked whether or not the touch start position (x₀, y₀) is inside the screen division instructing region (Step S4002).

If the touch start position (x₀, y₀) is inside the screen division instructing region (Yes in Step S4002), the UI operation being currently performed is determined to be an instruction for dividing the screen. Then processing of displaying the dividing line up to the displaced fingertip position (Step S4022) is repeatedly executed every time the touching fingertip position is displaced (Step S4021) until the touch operation performed by the user on the screen is completed (Step S4023). The dividing line may be displayed in an emphasized manner in the course of the screen division instructing operation (which will be described later). In addition, an auxiliary line obtained by extending the dividing line up to the other edge of the pane is also displayed along with the dividing line.

Then, if the fingertip position at the time when the touch operation is completed reaches a predetermined length (for example, if the fingertip displacement amount dx (or dy) reaches 1/3 of the window width W_{window} of the pane) (Yes in Step S4024), the dividing processing is executed by fixing the division of the pane and generating the dividing line up to the position of the auxiliary line (Step S4025), and the entire routine of this processing is completed. In the pane newly generated by the division, a clone of the original pane is generated, for example.

In addition, if the fingertip position at the time when the touch operation is completed does not reach the predetermined length (No in Step S4024), the screen dividing processing in progress is canceled (Step S4026), and the entire routine of this processing is completed. The screen dividing processing may also be canceled when the track of the fingertip becomes distant from the auxiliary line by a predetermined distance.

If the touch start position (x₀, y₀) is not inside the screen division instructing region (No in Step S4002), another ordinary screen behavior such as screen scrolling (see Fig. 38) or link selection is executed in accordance with the displacement of the fingertip position of the user (Step S4003). The pane being scrolled may be displayed in an emphasized manner in the course of the scroll instructing operation (which will be described later).

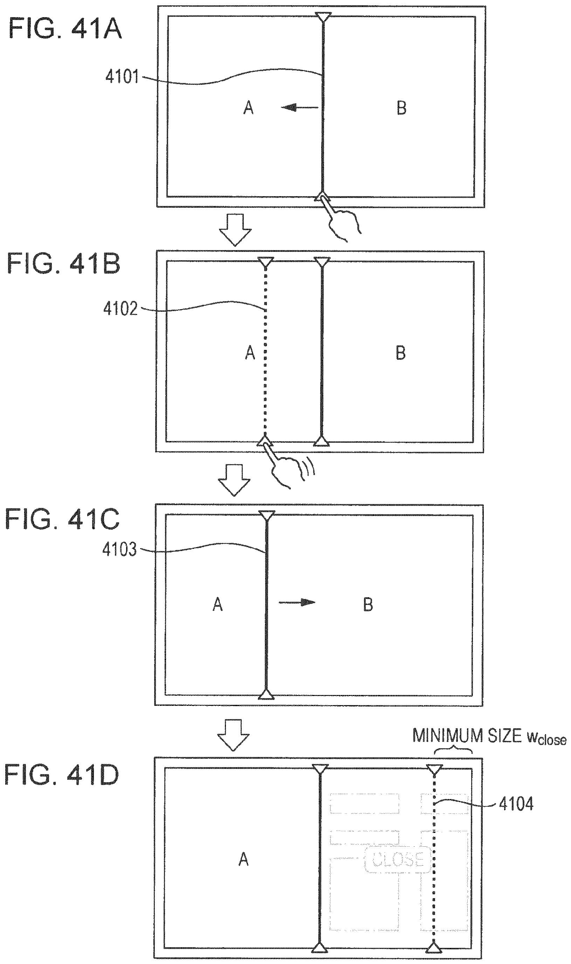

Figs. 41A to 41D show a state where the pane, a screen size change of which has been instructed such that the pane becomes equal to or smaller than a predetermined minimum width, is closed. The predetermined minimum width w_{close} is 100 pixels, for example.

The user can change the sizes of the adjacent panes A and B by the intuitive UI operation of grabbing and moving the boundary between the pane A and the pane B. For example, the user starts a touch operation with their fingertip from inside of a screen size change instructing region 4101 as shown in Fig. 41A, traces the screen with the fingertip to the left side and moves the boundary up to a position represented by a dotted line 4102 as shown in Fig. 41B. Since the position represented by the dotted line 4102 does not exceed the minimum width w_{close} of the pane A on the left side, the screen size changing instruction is fixed, and the boundary is moved to the new boundary 4103 as shown in Fig. 41C. Thereafter, the user traces the screen with the fingertip to the right side this time and moves the boundary up to a position represented by a dotted line 4104 as shown in Fig. 41D. Since the position represented by the dotted line 4104 exceeds the minimum width w_{close} of the pane B on the right side, the pane B is closed.

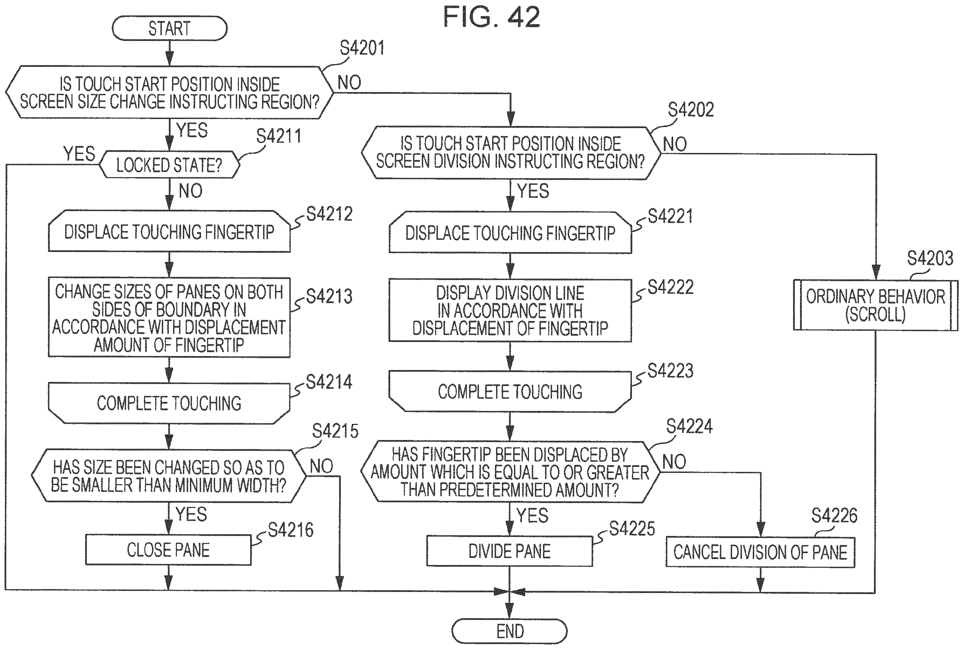

Fig. 42 shows still another example of the processing procedure for the information processing apparatus 100 executing the screen operations as shown in Figs. 36 to 38 in response to the UI operations by the user, in the form of a flowchart. The processing procedure is different from the processing procedure shown in Fig. 40 in that a screen size change locking function is included.

The processing procedure is activated by a touch operation performed by the user on the screen, for example, and first, it is checked whether or not the touch start position (x₀, y₀) is inside the screen size change instructing region with the width wₗᵢₙₑ (Step S4201).

Here, if the touch start position (x₀, y₀) is inside the screen size change instructing region (Yes in Step S4201), the UI operation being currently performed is determined to be an instruction for changing the screen size, and subsequently, it is checked whether or not the screen size change is in a locked state (Step S4211). Then, if the screen size change is in the locked state (Yes in Step S4211), all the following processing is skipped, and the entire routine of this processing is completed.

If the screen size change is not in the locked state (No in Step S4211), screen size changing processing for increasing or decreasing the size of the panes on both sides of the boundary, which is located at the nearest position to the touch start position, in accordance with a displacement amount of the fingertip (Step S4213) is repeatedly executed every time the touching fingertip position is displaced (Step S4212) until the touch operation performed by the user on the screen is completed (Step S4214). The boundary as a target of the size changing operation may be displayed in an emphasized manner in the course of the screen size change instructing operation (which will be described later).

Then, if the touch operation performed by the user on the screen is completed, it is checked whether or not the change in the screen size has been instructed such that the screen becomes equal or smaller than a predetermined minimum width w_{close} (Step S4215). If the change in the screen size has been instructed such that the screen size is greater than the predetermined width w_{close} (No in Step S4215), the change in the screen size is maintained, and the entire routine of this processing is completed. If the change in the screen size has been instructed such that the screen becomes equal to or smaller than the predetermined minimum width w_{close} (Yes in Step S4215), the pane with a width which is equal to or smaller than the predetermined minimum width w_{close} is closed (Step S4216), and the entire routine of this processing is completed.

On the other hand, if the touch start position (x₀, y₀) is not inside the screen size change instructing region (No in Step S4201), then it is checked whether or not the touch start position (x₀, y₀) is inside the screen division instructing region (Step S4202).

If the touch start position (x₀, y₀) is inside the screen division instructing region (Yes in Step S4202), the UI operation being currently performed is determined to be an instruction for dividing the screen. Then, processing of displaying the dividing line up to the displaced fingertip position (Step S4222) is repeatedly executed every time the touching fingertip position is displaced (Step S4221) until the touch operation performed by the user on the screen is completed (Step S4223). The dividing line may be displayed in an emphasized manner in the course of the screen division instructing operation (which will be described later). In addition, an auxiliary line obtained by extending the dividing line up to the other edge of the pane is also displayed along with the dividing line.

Then, if the fingertip position at the time when the touch operation is completed reaches a predetermined length (for example, if the displacement amount dx (or dy) of the fingertip reaches 1/3 of a window width W_{window} of the pane) (Yes in Step S4224), the dividing processing is executed by fixing the division of the pane and generating the dividing line up to the position of the auxiliary line (Step S4225), and the entire routine of this processing is completed. In the pane newly generated by the division, a clone of the original pane is generated, for example.

In addition, if the fingertip position at the time when the touch operation is completed does not reach the predetermined length (No in Step S4224), the screen dividing processing in progress is canceled (Step S4226), and the entire routine of this processing is completed. The screen dividing processing may also be canceled when the track of the fingertip becomes distant from the auxiliary line by a predetermined distance.

In addition, if the touch start position (x₀, y₀) is not inside the screen division instructing region (No in Step S4002), another ordinary screen behavior such as screen scrolling (see Fig. 38) or link selection is executed in accordance with the displacement of the fingertip position of the user (Step S4203). The pane being scrolled may be displayed in an emphasized manner in the course of the scroll instructing operation (which will be described later).

### B-2. Erroneous Operation Preventing Method 2

As a second method for preventing an erroneous operation between the screen size changing instruction and the screen dividing instruction, a method of using a long press operation at a touch start position can be exemplified. That is, if a user operation of touching a position near a boundary of panes with the fingertip, long pressing the position for a predetermined time, then moving the fingertip is performed, the user operation is determined to be an instruction for dividing the screen, and dividing processing of the touched screen is performed in accordance with a direction, in which the fingertip moves thereafter. On the other hand, if the user touches the position near the boundary of the panes with the fingertip and immediately moves the fingertip, the operation is determined to be an instruction for changing the sizes, and screen size changing processing is performed in a direction, in which the fingertip moves thereafter. It is only necessary for the user to roughly start the touch operation with the fingertip near the boundary without caring on which one of the screen size change instructing region and the screen division instructing region the touch operation should be started. If the touch operation with the fingertip of the user is started inside a pane instead of a position near the boundary, the UI operation is determined to be an instruction for scrolling the screen (or an ordinary behavior such as movement to a linked page) (regardless of whether or not a long press has been performed), and processing such as screen scrolling or movement to a linked page is performed in accordance with the displacement of the fingertip thereafter.

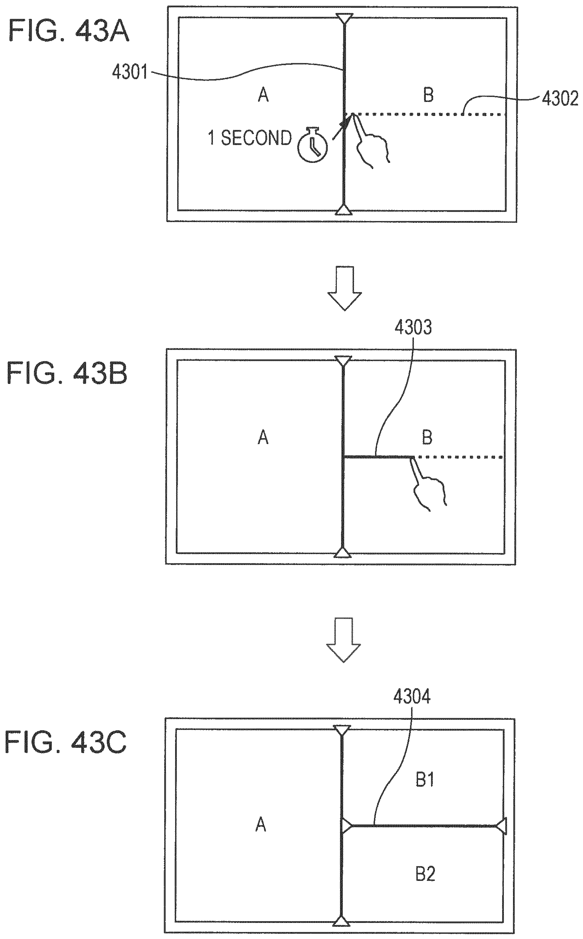

Figs. 43A to 43C show a UI operation for dividing the screen again by using the long press operation. As shown in Fig. 43A, the user performs a "long press" on a position near a boundary 4301 between the pane A and the pane B, namely continuously touches the position for a predetermined time (one second, for example) and then moves the fingertip in the right direction. The long press of the position near the boundary is determined to be an instruction for dividing the screen, and an auxiliary line 4302 represented by a dotted line automatically extends up to the right end of the screen. Then, a dividing line 4303 is displayed up to a position, up to which the user moves their fingertip, as shown in Fig. 43B. Thereafter, if the user traces the screen by a predetermined length (equal to or more than 1/3 of the screen in the example shown in the drawing) in the horizontal direction, division of the screen is fixed, a dividing line 4304 automatically extends up to the right end of the screen, and the division of the pane B is completed as shown in Fig. 43C. Panes B1 and B2 as clones of the original pane B appear in the upper and lower parts of the screen after the division.

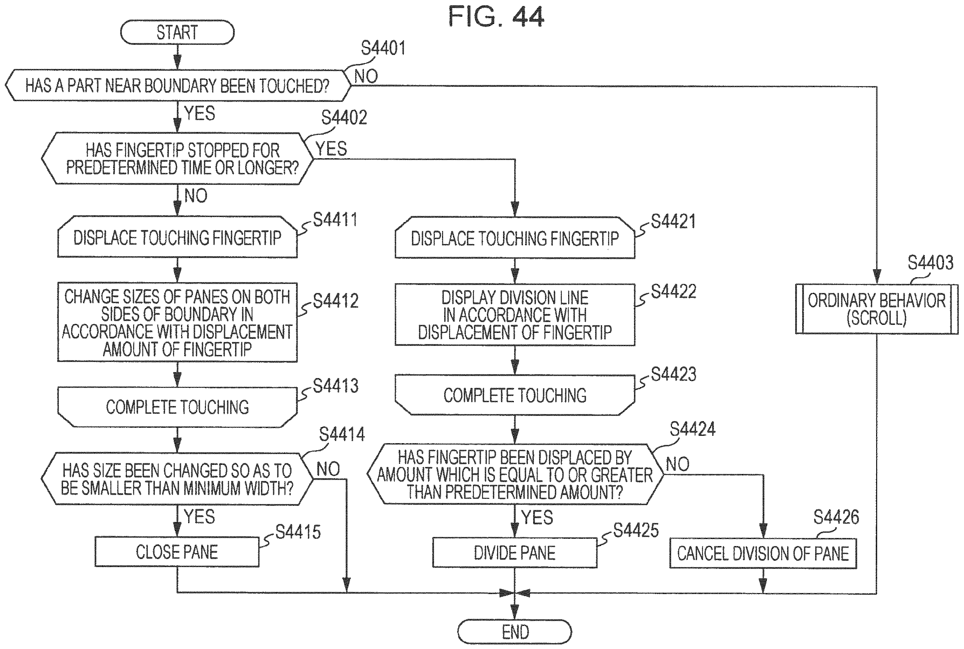

Fig. 44 shows a processing procedure for the information processing apparatus 100 executing screen operations in accordance with UI operations by the user, in the form of a flowchart. The processing procedure is different from the processing procedure shown in Fig. 39 in that a UI operation is determined depending on whether or not a "long press" performed by the user touching the screen with their fingertip has been performed.

The processing procedure is activated in response to a touch operation performed by the user on the screen, for example, and first, it is checked whether or not the touch start position (x₀, y₀) is located at a position near the boundary of the panes (Step S4401).

Here, if the touch start position (x₀, y₀) is not at the position near the boundary between the panes but inside a pane (No in Step S4401), another ordinary screen behavior such as screen scrolling (see Fig. 38) or link selection is executed in accordance with the displacement of the fingertip position of the user (Step S4403). The pane being scrolled may be displayed in an emphasized manner in the course of the scroll instructing operation (which will be described later).

On the other hand, if the touch start position (x₀, y₀) is located at a position near the boundary between the panes (Yes in Step S4401), then it is checked whether or not the fingertip of the user has stopped at the touch start position (x₀, y₀) for a period which is equal to or more than a predetermined time (one second, for example), namely whether or not a long press has been performed (Step S4402).

If a long press is not performed, and the touching fingertip position immediately starts to move (No in Step S4402), the UI operation being currently performed is determined to be an instruction for changing the screen sizes. In such a case, screen size changing processing for increasing or decreasing the sizes of the panes on both sides of the boundary, which is located at the nearest position to the touch start position, in accordance with the displacement amount of the fingertip (Step S4412) is repeatedly executed every time the touching fingertip position is displaced (Step S4411) until the touch operation performed by the user on the screen is completed (Step S4413). The boundary as a target of the size changing operation may be displayed in an emphasized manner in the course of the screen size change instructing operation (which will be described later).

Then, if the touch operation performed by the user on the screen is completed, it is checked whether or not the change in the screen size has been instructed such that the screen becomes equal to or smaller than the predetermined minimum width w_{close} (Step S4414). If the change in the screen size has been instructed such that the screen is greater than the predetermined width w_{close} (No in Step S4414), the change in the screen size is maintained, and the entire routine of this processing is completed. If the change in the screen size is instructed such that the screen becomes equal to or less than the predetermined minimum width w_{close} (Yes in Step S4414), the pane with a width which is equal to or less than the predetermined minimum width w_{close} is closed (Step S4415), and the entire routine of this processing is completed.

In addition, if the fingertip of the user stops at the touch start position (x₀, y₀) for a period which is equal to or more than the predetermined time (one second, for example), that is, when the displacement of the touching fingertip position starts after a long press (Yes in Step S4402), the UI operation being currently performed is determined to be an instruction for dividing the screen. In such a case, processing of displaying a dividing line up to the displaced fingertip position (Step S4422) is repeatedly executed every time the touching fingertip position is displaced (Step S4421) until the touch operation performed by the user on the screen is completed (Step S4423). The dividing line may be displayed in an emphasized manner in the course of the screen division instructing operation (which will be described later). In addition, an auxiliary line obtained by extending the dividing line up to the other edge of the pane is also displayed along with the dividing line.

Then, if the fingertip position at the time when the touch operation is completed reaches a predetermined length (for example, if the displacement amount dx (or dy) of the fingertip reaches 1/3 of the window width W_{window} of the pane) (Yes in Step S4424), dividing processing is executed by fixing the pane division and generating a dividing line up to the auxiliary line (Step S4425), and the entire routine of this processing is completed. In the pane newly generated by the division, a clone of the original pane is generated, for example.

In addition, if the fingertip position when the touch operation is completed does not reach the predetermined length (No in Step S4424), the screen dividing processing in progress is canceled (Step S4426), and the entire routine of this processing is completed. The screen dividing processing may also be canceled when the track of the fingertip becomes distant from the auxiliary line by a predetermined distance.

### B-3. Erroneous Operation Preventing Method 3

As a third method for preventing an erroneous operation between the screen size changing instruction and the screen dividing instruction, a method of providing handles for instructing displacement of a boundary at both ends (or other arbitrary parts) of the boundary between panes can be exemplified. That is, if the user touches the handle at the end of the boundary between the panes (that is, performs an operation of grabbing the handle) with their fingertip and starts displacement of the fingertip, the operation is determined to be an instruction for changing the size, and screen size changing processing is performed in a direction, in which the fingertip moves thereafter. On the other hand, if the user touches, with the fingertip, a part other than the handle on the boundary between the panes and displaces the fingertip, the operation is determined to be an instruction for dividing the screen, and dividing processing of the touched screen is performed in the direction, in which the fingertip moves thereafter. The user can immediately start the operation for changing the size or the operation for dividing the screen without performing a long press, by touching the screen on the boundary with the fingertip without caring about subtle positioning of the fingertip on one of the screen size change instructing region and the screen division instructing region. In addition, if the touch operation with the fingertip of the user is started from the inside of the pane instead of the position near the boundary, the operation is determined to be an instruction for scrolling the screen (or an ordinary behavior such as movement to a linked page) (regardless of whether or not a long press has been performed), and processing such as the screen scrolling and the movement to a linked page is performed in accordance with the displacement of the fingertip thereafter.

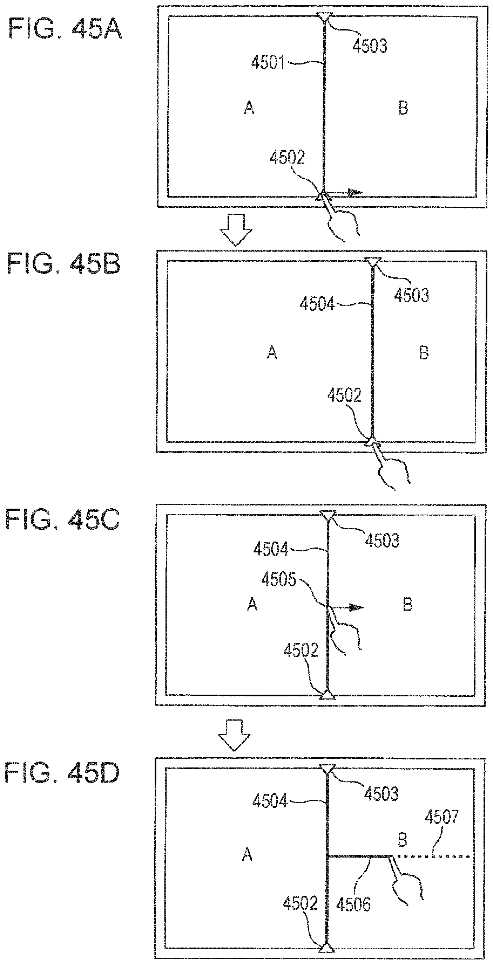

Figs. 45A to 45D show a UI operation for changing the screen sizes by using handles provided at ends of the boundary. As shown in Fig. 45A, handles 4502 and 4503 are respectively displayed at upper end lower ends of a boundary 4501 between the pane A and the pane B. If the user touches the handle 4503 at the lower end (or the handle 4502 at the upper end) of the boundary 4501 and starts displacement of the fingertip in the right direction without releasing the fingertip from the screen, the operation is determined to be an instruction for changing the screen sizes. As a result, the boundary is displaced up to a position 4504, to which the fingertip is displaced, the size of the pane A expands in the horizontal direction, and the size of the pane B is reduced in the horizontal direction as shown in Fig. 45B.

If the user touches a position 4505 other than the ends of a boundary 4701 and starts displacement of the fingertip in the right direction without releasing the fingertip from the screen as shown in Fig. 45C, the operation is determined to be an instruction for dividing the screen. As a result, a new dividing line 4506 is generated up to a position, to which the fingertip is displaced, and an auxiliary line 4507 represented by a dotted line automatically extends to the right end of the pane B as shown in Fig. 45D.

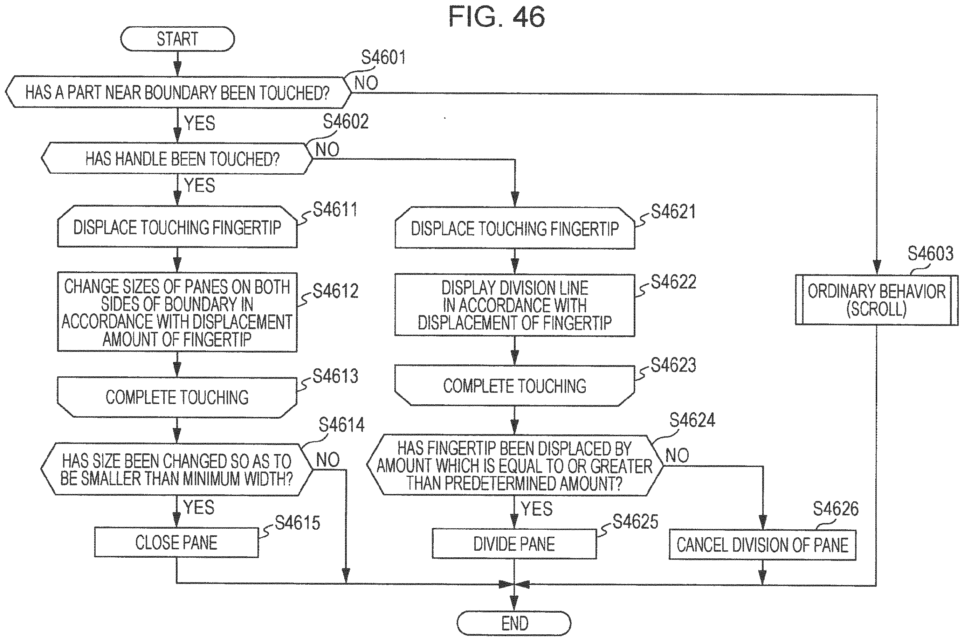

Fig. 46 shows a processing procedure for the information processing apparatus 100 executing screen operations in response to UI operations by the user, in the form of a flowchart. The processing procedure is different from the processing procedure shown in Fig. 44 in that a UI operation is determined depending on which part of the boundary the touch operation with the fingertip of the user starts.

The processing procedure is activated in response to a touch operation performed by the user on the screen, for example, and first, it is checked whether or not the touch start position (x₀, y₀) is located at a position near the boundary between the panes (Step S4601).

Here, if the touch start position (x₀, y₀) is not located at a position near the boundary between the panes but located inside a pane (No in Step S4601), another ordinary screen behavior such as screen scrolling (see Fig. 38) or link selection is executed in accordance with the displacement of the fingertip position of the user (Step S4603). The pane being scrolled may be displayed in an emphasized manner in the course of the scroll instructing operation (which will be described later).

On the other hand, if the touch start position (x₀, y₀) is located at a position near the boundary between the panes (Yes in Step S4601), it is further checked whether or not the touch start position (x₀, y₀) coincides with the position of the handle at the end of the boundary (Step S4602).

If the touch start position (x₀, y₀) coincides with the position of the handle at the end of the boundary (Yes in Step S4602), the UI operation being currently performed is determined to be an instruction for changing the screen sizes. In such a case, screen size changing processing for increasing or decreasing the sizes of the panes on both sides of the boundary, which is located at the nearest position to the touch start position, in accordance with the displacement amount of the fingertip (Step S4612) is repeatedly executed every time the touching fingertip position is displaced (Step S4611) until the touch operation performed by the user on the screen is completed (Step S4613). The boundary as a target of the size changing operation may be displayed in an emphasized manner in the course of the screen size change instructing operation (which will be described later).

Then, if the touch operation performed by the user on the screen is completed, it is checked whether or not the change in the screen size has been instructed such that the screen becomes equal to or smaller than the predetermined minimum width w_{close} (Step S4614). If the change in the screen size has been instructed such that the screen is greater than the predetermined minimum width w_{close} (No in Step S4614), the change in the screen size is maintained, and the entire routine of this processing is completed. In addition, if the change in the screen size has been instructed such that the screen becomes equal to or smaller than the predetermined minimum width w_{close} (Yes in Step S4614), the pane with a width which is equal to or less than the predetermined minimum width w_{close} is closed (Step S4615), and the entire routine of this processing is completed.

If the touch start position (x₀, y₀) does not coincide with the position of the handle at the end of the boundary (No in Step S4602), the UI operation being currently performed is determined to be an instruction for dividing the screen. In such a case, processing of displaying a dividing line up to the displaced fingertip position (Step S4622) is repeatedly executed every time the touching fingertip position is displaced (Step S4621) until the touch operation performed by the user on the screen is completed (Step S4623). The dividing line may be displayed in an emphasized manner in the course of the screen division instructing operation (which will be described later). In addition, an auxiliary line obtained by extending the diving line up to the other edge of the pane is also displayed along with the dividing line.

Then, if the fingertip position at the time when the touch operation is completed reaches a predetermined length (for example, if the displacement amount dx (or dy) of the fingertip position reaches 1/3 of the window width W_{window} of the pane) (Yes in Step S4624), dividing processing is executed by fixing the division of the pane and generating a dividing line up to the auxiliary line (Step S4625), and the entire routine of this processing is completed. In the pane newly generated by the division, a clone of the original pane is generated, for example.

If the fingertip position at the time when the touch operation is completed does not reach the predetermined length (No in Step S4624), the screen dividing processing in progress is canceled (Step S4626), and the entire routine of this processing is completed. The screen dividing processing may also be canceled when the track of the fingertip becomes distant from the auxiliary line by a predetermined distance.

### B-4. Erroneous Operation Preventing Method 4

As a fourth method for preventing an erroneous operation between the screen size changing instruction and the screen dividing instruction, a method of using a locking function for inhibiting execution of the screen size changing processing can be exemplified. That is, if the user touches the boundary between the panes with the fingertip and displaces the fingertip in a locked state, the operation is determined to be an instruction for dividing the screen, and the dividing processing of the touched screen is performed in the direction, in which the fingertip moves thereafter. On the other hand, if the user touches the boundary with the fingertip and displaces the fingertip in an unlocked state, the operation is determined to be an instruction for changing the sizes, and the screen size changing processing is performed in the direction, in which the fingertip moves thereafter. The user can start the operation of changing the sizes or dividing the screen by touching the screen on the boundary with the fingertip without caring about subtle positioning of the fingertip on one of the screen size change instructing region and the screen division instructing region. If the touch operation with the fingertip of the user is started inside a pane instead of a position near the boundary, the operation is determined to be an instruction for scrolling the screen (or an ordinary behavior such as movement to a linked page) (regardless of whether or not a long press has been performed), and processing such as screen scrolling or movement to a linked page is performed in accordance with the displacement of the fingertip thereafter.

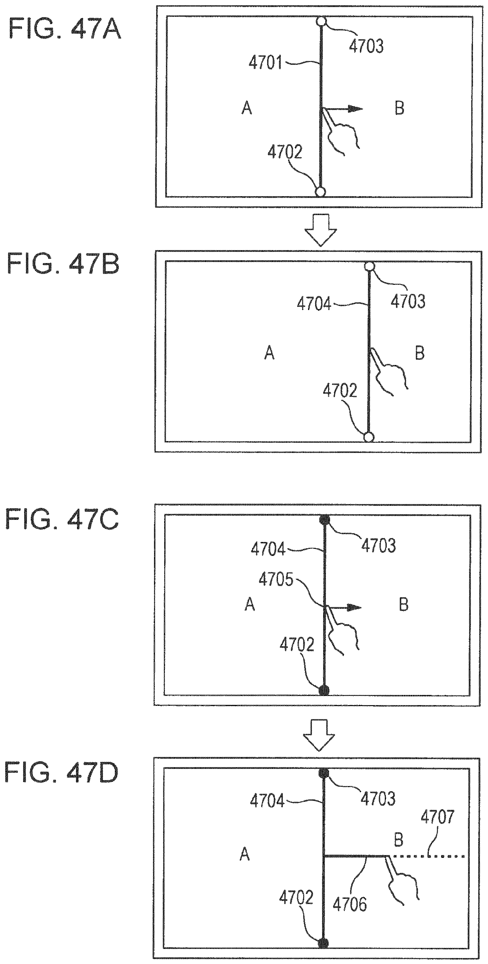

Figs. 47A to 47D show a UI operation for changing the screen sizes by using a screen size change locking function. As shown in Fig. 47A, indicators 4702 and 4703 for displaying a screen size change locking state are displaced at upper end lower ends of a boundary 4701 between the pane A and the pane B. The installation positions of the indicators are not limited to the ends of the boundary 4701. The indicators 4702 and 4703 in a state where the screen size change is unlocked are displayed as white circles "O" as shown in Fig. 47A, and the indicators 4702 and 4703 in a locked state are displayed as black circles "**●**" as shown in Fig. 47C. For example, the locked state and the unlocked state can be switched by tapping the indicator 4702 or 4703 (it is a matter of course that the locked state may be switched by another operation).

If the user taps the boundary 4701 and starts displacement of the fingertip in the right direction without releasing the fingertip from the screen as shown in Fig. 47A, the operation is determined to be an instruction for changing the screen sizes. As a result, the boundary is displaced up to a position 4704, to which the fingertip is displaced, the size of the pane A expands in the horizontal direction, and the size of the pane B is reduced in the horizontal direction as shown in Fig. 47B.

In addition, if the user touches the boundary 4701 and starts the displacement of the fingertip in the right direction without releasing the fingertip from the screen as shown in Fig. 47C, the operation is determined to be an instruction for dividing the screen. As a result, a new dividing line 4506 is generated up to a position, to which the fingertip is displaced, and an auxiliary line 4507 represented by a dotted line automatically extends up to the right end of the pane B as shown in Fig. 45D.

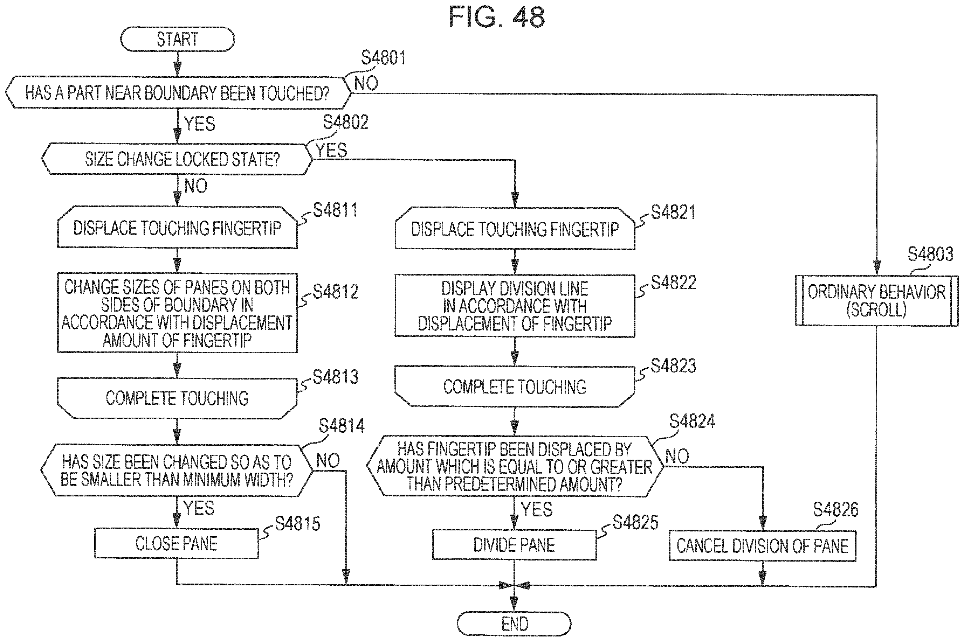

Fig. 48 shows a processing procedure for the information processing apparatus 100 executing screen operations in response to UI operations by the user, in the form of a flowchart. The processing procedure is different from the processing procedure shown in Fig. 46 in that a UI operation is determined depending on a screen size change operation locked state.

The processing procedure is activated in response to a touch operation performed by the user on the screen, for example, and first, it is checked whether or not the touch start position (x₀, y₀) is located at a position near the boundary between the panes (Step S4801).

Here, if the touch start position (x₀, y₀) is located inside a pane instead of the position near the boundary between the panes (No in Step S4801), another ordinary screen behavior such as the screen scrolling (see Fig. 38) or the link selection is executed in accordance with the displacement of the fingertip position of the user (Step S4803). The pane being scrolled may be displayed in an emphasized manner in the course of the scroll instructing operation (which will be described later).

On the other hand, if the touch start position (x₀, y₀) is located at a position near the boundary between the panes (Yes in Step S4801), it is further checked whether or not the screen size changing operation is in a locked state (Step S4802).

If the screen size changing operation is unlocked state (No in Step S4802), the UI operation being currently performed is determined to be an instruction for changing the screen sizes. In such a case, screen size changing processing of increasing or decreasing the sizes of the panes on both sides of the boundary, which is located at the nearest position to the touch start position, in accordance with the displacement amount of the fingertip (Step S4812) is repeatedly executed every time the touching fingertip position is displaced (Step S4811) until the touch operation performed by the user on the screen is completed (Step S4813). The boundary as a target of the size change operation may be displayed in an emphasized manner in the course of the screen size change instructing operation (which will be described later).

Then, if the touch operation performed by the user on the screen is completed, it is checked whether or not the change in the screen size has been instructed such that the screen is equal to or smaller than the predetermined minimum width w_{close} (Step S4814). If the change in the screen size has been instructed such that the screen is greater than the predetermined minimum width w_{close} (No in Step S4814), the change in the size screen is maintained, and the entire routine of this processing is completed. If the change in the screen size has been instructed such that the screen becomes equal to or smaller than the predetermined minimum width w_{close} (Yes in Step S4814), a pane with a width which is equal to or less than the predetermined minimum width w_{close} is closed (Step S4815), and the entire routine of this processing is completed.

In addition, if the screen size changing operation is in the locked state (No in Step S4802), the UI operation being currently performed is determined to be an instruction for dividing the screen. In such a case, processing of displaying a dividing line up to a displaced fingertip position (Step S4822) is repeatedly executed every time the touching fingertip position is displaced (Step S4821) until the touch operation performed by the user on the screen is completed (Step S4823). The dividing line may be displayed in an emphasized manner in the course of the screen division instructing operation (which will be described later). In addition, an auxiliary line obtained by extending the dividing line up to the other end of the pane is also displayed along with the dividing line.

Then, if the fingertip position at the time when the touch operation is completed reaches a predetermined length (for example, if the displacement amount dx (or dy) of the fingertip reaches 1/3 of the window width W_{window} of the pane) (Yes in Step S4824), dividing processing is executed by fixing the division of the pane and generating the dividing line up to the position of the auxiliary line (Step S4825), and the entire routine of this processing is completed. In the pane newly generated by the division, a clone of the original pane is generated, for example.

In addition, if the fingertip position at the time when the touch operation is completed does not reach the predetermined length (No in Step S4824), the screen dividing processing in progress is canceled (Step S4826), and the entire routine of this processing is completed. The screen dividing processing may also be canceled when the track of the fingertip becomes distant from the auxiliary line by a predetermined distance.

### B-5. Other Screen Operation Examples

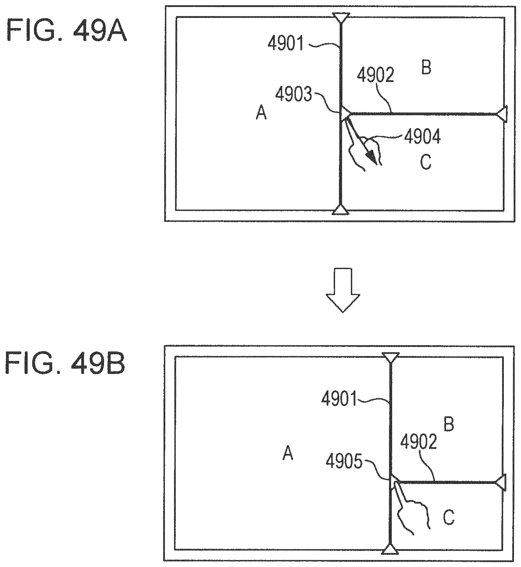

Figs. 49A and 49B show a UI operation for changing sizes of three or more panes at the same time by simultaneously operating a plurality of boundaries.

As shown in Fig. 49A, the screen is divided into a pane A on the left side of the screen and panes B and C on the right side of the screen by a boundary 4901. In addition, the screen on the right side is vertically divided into two parts, namely the pane B and the pane C by a boundary 4902.

The boundary 4901 intersects the boundary 4902 at an intersection 4903. Therefore, the user can change the sizes of the three panes A to C at the same time by simultaneously moving the two boundaries 4901 and 4902 through an operation of touching and displacing the intersection 4903 with the fingertip, namely an operation of grabbing and moving the intersection 4903.

As shown in Fig. 49A, for example, the user touches the intersection 4903 with the fingertip and displaces the fingertip in the left downward direction in the screen as shown by the arrow 4904. As a result, the intersection of the boundary 4901 and the boundary 4902 is displaced up to the final position 4905 of the fingertip of the user, the size of the pane A expands in the right direction, the size of the pane B expands in the lower direction, and the size of the pane C is reduced by an amount corresponding to the increases in the sizes of the pane A and the pane B as shown in Fig. 49D.

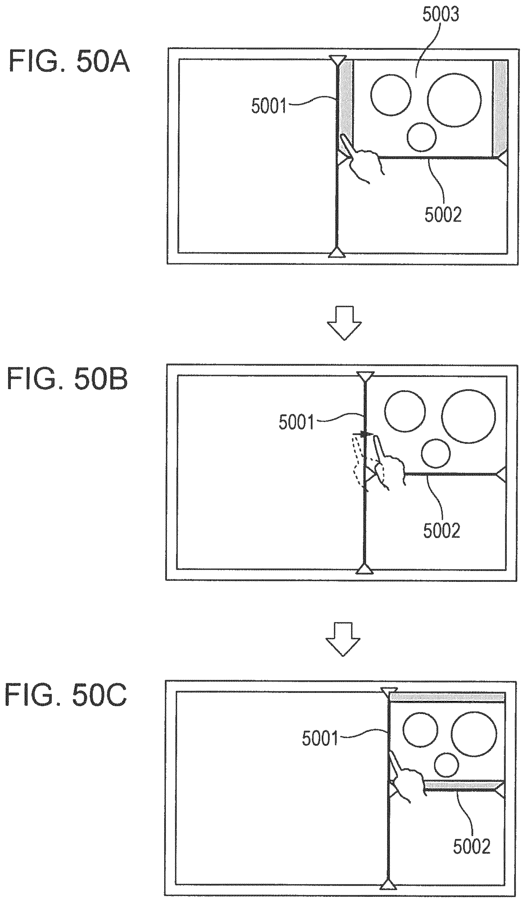

Figs. 50A to 50C show a UI operation for changing screen sizes in a case where a part of panes displays content with a fixed width.

As shown in Fig. 50A, the screen is divided into a pane A on the left side of the screen and the panes B and C on the right side of the screen by a boundary 5001. In addition, the screen on the right side is vertically divided into two parts, namely the pane B and the pane C by a boundary 5002.

In addition, a reproduced movie 5003 as moving image content with a fixed width (with an aspect ratio of 16:9, for example) is displayed in the pane B. Here, if the current size of the pane B does not coincide with the moving image content and is horizontally long, extra regions, namely ineffective regions where no movie is displayed occur in the horizontal direction in the pane B. In the example shown in the drawing, the ineffective regions on both the left and right sides of the moving image content are shown with a color of gray.

If the user performs a screen size changing operation by grabbing the boundary 5001 and displacing the boundary 5001 in the right direction, the sizes of the pane B and the pane C are reduced in the horizontal direction. Then, if the aspect of the pane B approaches the aspect of the moving image content being displayed as shown in Fig. 50B, a behavior that the boundary 5001 is adsorbed to the left end of the moving image content is performed. Then, the boundary 5001 remains adsorbed and does not move even if it is attempted to slightly move the boundary 5001. If the user moves the fingertip by a distance which is equal to or more than a specific distance, the boundary 5001 starts to further move in the right direction as shown in Fig. 50C. Since the pane B becomes vertically longer than the aspect of the moving image content this time, extra regions, namely ineffective regions where no movie is displayed occur in the vertical direction in the pane B. In the example shown in the drawing, the ineffective regions on both upper and lower sides of the moving image content are shown with a color of gray.

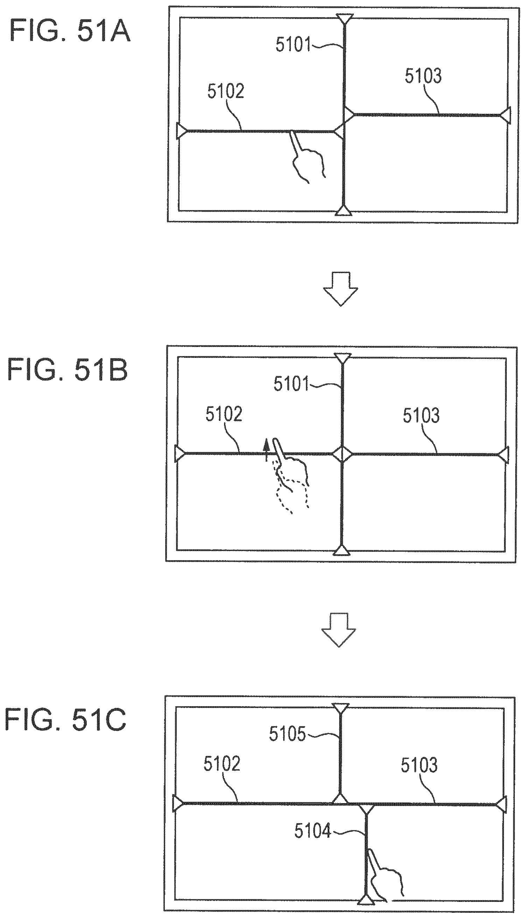

Figs. 51A to 51C show a UI operation for changing a parent-child relationship of a plurality of boundaries.

A boundary dividing the screen first is a parent, and a boundary generated so as to intersect the parent boundary by a dividing operation performed thereafter is a child. In Fig. 51A, the screen is divided into the pane A and the pane B by a boundary 5101, the pane A is further divided into a pane A1 and a pane A2 by a boundary 5102, and the pane B on the right side is also divided into a pane B1 and a pane B2 by the boundary 5103. In such a case, the boundary 5101 generated first is a parent, the boundaries 5102 and 5103 derived from the boundary 5101 are children, and a parent-child relationship is formed.

If the boundary 5101 is displaced in the right direction, the pane A1 and the pane A2 on the left side expand in the horizontal direction, and the pane B1 and the pane B2 on the right side contract in the horizontal direction though not shown in the drawing. In contrast, if the boundary 5101 is displaced in the left direction, the pane A1 and the pane A2 on the left side contract in the horizontal direction, and the pane B1 and the pane B2 on the right side expand in the horizontal direction. That is, an influence of the UI operation performed on the boundary 5101 as the parent affects the respective boundaries 5102 and 5103 as children.

On the other hand, if the boundary 5102 is vertically displaced, the pane A1 expands or contracts in the vertical direction, and the pane A2 contracts or expands in the vertical direction by an amount corresponding to the amount of expansion or contraction of the pane A1. However, the sizes of the panes B1 and B2 on the right side of the boundary 5101 do not vary. That is, the UI operation performed on the boundary 5102 as the child does not have an influence beyond the boundary 5101 as the parent thereof.

In addition, if the boundary 5103 is vertically displaced, the pane B1 vertically expands or contracts, and the pane B2 vertically contracts or expands by an amount corresponding to expansion or contraction of the pane B1. However, the sizes of the panes A1 and A2 on the left side of the boundary 5101 do not vary. That is, the UI operation performed on the boundary 5103 as the child does not have an influence beyond the boundary 5101 as the parent thereof.

It is assumed that the respective boundaries 5102 and 5103 as the children are generated at different vertical positions as shown in Fig. 51A. If the user vertically displaces the boundary 5102 and the boundary 5102 is made to approach the boundary 5103 in terms of vertical positions, both the boundaries 5102 and 5103 perform a behavior of being adsorbed to each other so as to be superimposed on a straight line. Then, the boundaries 5102 and 5103 remain adsorbed and do not move even if the user attempts to slightly displace the boundary 5102 or the boundary 5103. The boundary 5102 or the boundary 5103 does not move as it used to move, and the sizes of the pane A1 and the pane A2 or the sizes of the pane B1 and the pane B2 are not separately changed in the vertical direction, as long as an operation of displacing the boundary 5102 or the boundary 5103 by a distance equal to or more than a specific distance is not performed though not shown in the drawing.

In addition, it is possible to replace the parent-child relationship in a state where the boundary 5102 and the boundary 5103 as the children are adsorbed to each other as shown in Fig. 51B. Here, if the user touches a lower half 5104 of the boundary 5101 and displaces the lower half 5104 in the horizontal direction, as shown in Fig. 51C, the pane A2 below the boundary 5102 and the boundary 5103 horizontally expands or contracts, and the pane B2 horizontally contracts or expands by an amount corresponding to expansion or contraction of the pane A2. On the other hand, the position of the upper half 5105 of the boundary 5101 does not vary, and the sizes of the pane A1 and the size of the pane B1 above the boundary 5102 and the boundary 5103 do not vary at all.

The above description was given of the UI operation of generating a clone of an original pane in a new pane through the UI operation of cutting (splitting) the screen (see Figs. 17 and 18, for example) and causing a home screen to appear in the new pane through a swiping operation (see Figs. 27 and 28, for example). In contrast, a method of designating a state of the new pane in the course of the UI operation of dividing the screen can also be considered.

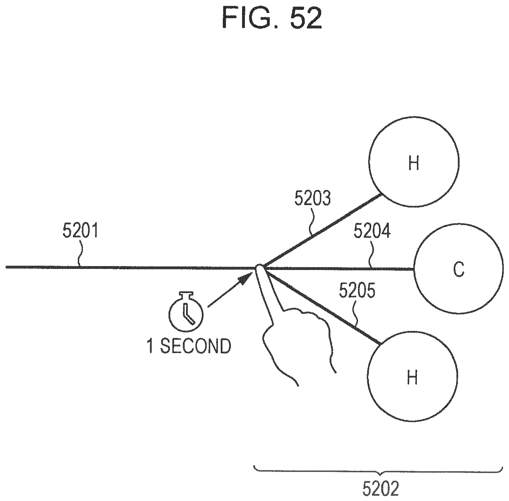

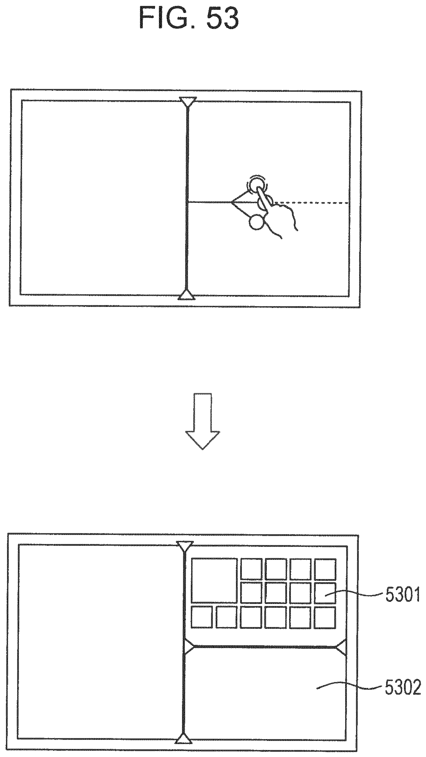

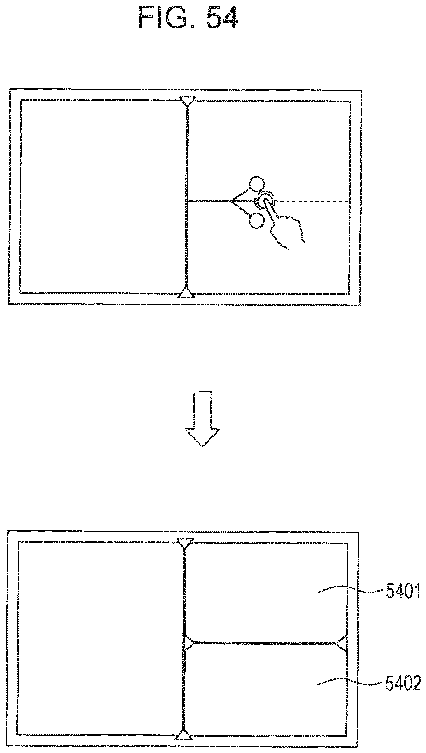

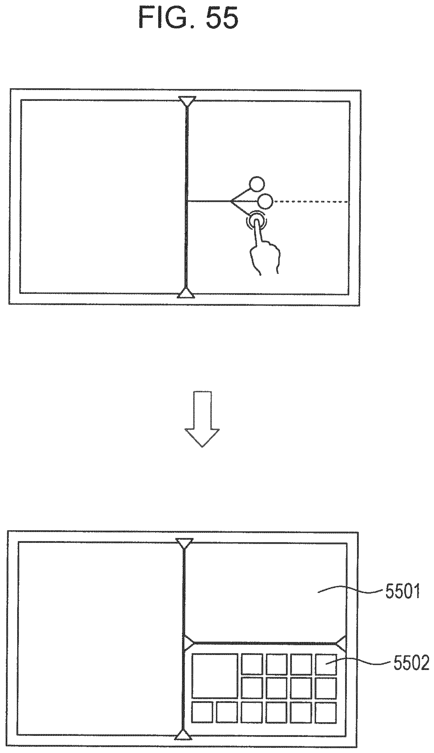

Figs. 52 to 55 show a method of designating a state of the new pane in the course of the UI operation of dividing the screen. If the user stops the fingertip for a predetermined time (one second, for example) in the course of a dividing line 5201 for horizontally dividing the screen, a guide 5202 as shown in the drawing is displayed. The guide 5202 includes branches 5203 to 5205 in three directions. The drawing shows that if the fingertip is made to advance in the direction to a mark "H" 5203 above the horizontal direction, a home screen 5301 can be displayed in the pane above the dividing line 5201, and a clone 5302 of the original pane can be generated in the pane below the dividing line 5201 (see Fig. 53). In addition, the drawing shows that if the fingertip is made to advance in the direction to a mark "C" 5204 in the horizontal direction, clones 5401 and 5402 of the original pane can be generated in the upper and lower panes newly generated (see Fig. 54). Moreover, the drawing shows that if the fingertip is made to advance in the direction to a mark "H" 5205 below the horizontal direction, a home screen 5502 can be displayed in the pane below the dividing line 5201, and a clone 5501 of the original pane can be generated in the pane above the dividing line 5201 (see Fig. 55).

In addition, corresponding screen effects may be obtained when the user performs respective UI operations of dividing the screen, changing the screen sizes, and scrolling the screen. The screen effects bring about not only simple enhancement in visual effects such as satisfactory viewing but also a feed-back to the user about a fact that an intended operation has been started.

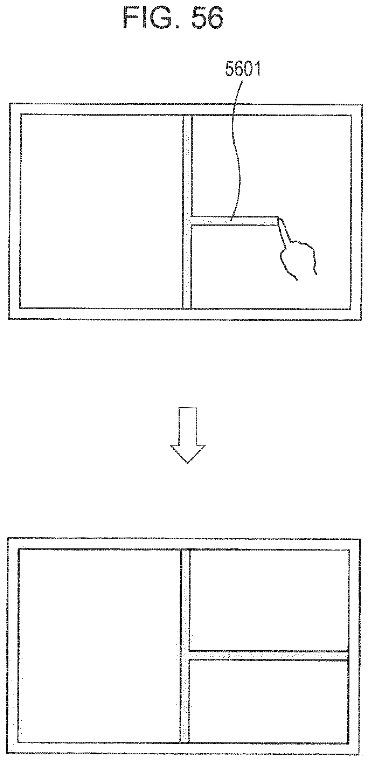

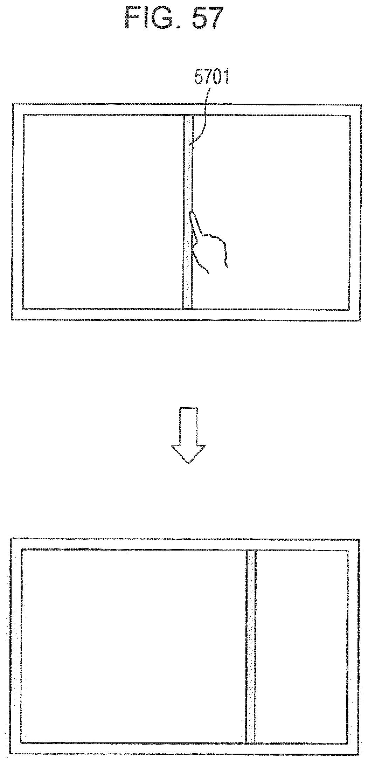

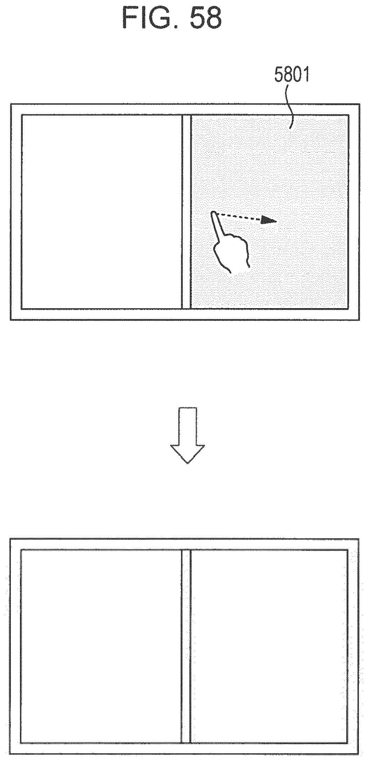

Fig. 56 shows a state where a dividing line 5601 is displayed in an emphasized manner in the course of the screen division instructing operation. In addition, Fig. 57 shows a state where a boundary 5701 as a target of the size changing operation is displayed in an emphasized manner in the course of the screen size change instructing operation. Moreover, Fig. 58 shows a state where a pane 5801 being scrolled is displayed in an emphasized manner in the course of the scroll instructing operation.

It should be understood that the information processing apparatus 100 according to the embodiment can correctly execute a plurality of types of screen operations such as a screen dividing operation without any erroneous operations in response to touch operations performed by a user on the screen as described above.

The above description was basically given of the technology disclosed in this specification in the form of illustrative examples, and the content described herein is not intended to be understood in a limited manner. The scope of the claims should be taken into consideration in determining the gist of the technique disclosed herein.

## Claims

1. An information processing apparatus comprising:
a screen (603) configured to display information;
a coordinate input unit (110) configured to receive coordinates instructed by a user to the screen;
a control unit (120, 190) configured to determine a user instruction based on a track of a user input via the coordinate input unit and to control an operation of the screen in accordance with a determination result; and
the control unit configured to determine which one of division of the screen, a size change of divided screens, or another screen operation the user has instructed, based on the track of the user input via the coordinate input unit;
**characterized in that**
handles (4502, 4503) which are for performing an operation of moving a boundary are provided at both ends of the boundary of the screen, and
the control unit is configured to perform divided screen size changing processing in accordance with the track when the track starts from one of the handles (4502, 4503), to perform screen dividing processing in accordance with the track when the track starts at a part other than the handles on the boundary of the screen, and to scroll the screen or perform another behavior when the track starts inside one of the divided screens.

2. The apparatus according to Claim 1,
wherein a divided screen size change instructing region is defined within a predetermined width wₗᵢₙₑ around a boundary of the screen, and screen division instructing regions are defined within a predetermined distance wₛₚₗᵢₜ from both sides of the divided screen size change instructing region, and
wherein the control unit is configured to perform divided screen size changing processing in accordance with the track when a start point of the track is inside the divided screen size change instructing region, to perform screen dividing processing in accordance with the track when the start point of the track is inside the screen division instructing region, and to scroll the screen or perform another behavior when the start point of the track is located further inside the screen than the screen division instructing region.

3. The apparatus according to Claim 1 or 2, wherein the control unit (120, 190) is configured to perform screen dividing processing in accordance with the track when the track starts near the boundary of the screen and the user input moves after stopping at a position of the start point for a period which is equal to or more than a predetermined time, to perform divided screen size changing processing in accordance with the track when the track starts near the boundary of the screen and the user input moves without stopping, and to scroll the screen or perform another behavior when the track starts inside the screen.

4. The apparatus according to any one of Claims 1 to 3, further comprising:
a locking function which inhibits divided screen size changing processing,
wherein the control unit (120, 190) is configured to perform screen dividing processing in accordance with the track when the track starts near the boundary of the screen in a locked state, to perform divided screen size changing processing in accordance with the track when the track starts near the boundary of the screen in an unlocked state, and to scroll the screen or perform another behavior when the track starts from the inside of the screen.

5. The apparatus according to any one of Claims 1 to 4, wherein the control unit (120, 190) is configured to perform size changing processing on the respective divided screens by displacing a position of an intersection of a plurality of boundaries for dividing the screen in accordance with the track when the track starts from the intersection.

6. The apparatus according to any one of Claims 1 to 5, wherein the control unit (120, 190) is configured to, when a size of a divided screen among a plurality of divided screens approaches a predetermined size during size changing processing of the plurality of divided screens, cause the size of the divided screen to be adsorbed to the predetermined size.

7. The apparatus according to any one of Claims 1 to 6, wherein when the screen is divided into two parts by a first boundary to obtain a first screen and a second screen, and the first screen and the second screen are respectively further divided by a second boundary and a third boundary, and the second boundary and the third boundary are superimposed on each other on a straight line, the control unit is configured to allow divided screen size changing processing for each of the two line segments obtained by dividing the first boundary by the straight line.

8. The apparatus according to any one of Claims 1 to 7,
further comprising an instructing unit configured to instruct states of the new screens in accordance with a direction of the track with respect to a dividing line of the screen is displayed on the dividing line, and
wherein the control unit is configured to display a home screen of an original screen in the new screen in a deviation direction and generates a clone of the original screen in the other new screen when the track deviates from the dividing line, and to generate clones of the original screen in the new screens on both sides of the dividing line when the track is along the dividing line.

9. The apparatus according to any one of Claims 1 to 8, wherein the control unit (120, 190) is configured to display at least one of a dividing line of the screen during dividing processing, the boundary of the screen during size changing processing, and the screen during scroll processing in an emphasized manner.

10. The apparatus according to any one of Claims 1 to 9, wherein the control unit (120, 190) is configured to cause a menu relating to the divided screens to appear in an appearance direction in response to a user operation of swiping one of the divided screens with a first number of fingers in the appearance direction and to hide the menu in a direction opposite to the appearance direction when no operation is performed on the menu for a period which is equal to or more than a predetermined time or in response to a user operation of swiping the screen in the opposite direction.

11. The apparatus according to any one of Claims 1 to 10,
wherein the control unit (120, 190) is configured to save states of a plurality of divided screens in response to a user operation of grabbing the screens, to display a list of the saved screen states on the screen, and to restore a screen state selected by the user on the screen.

12. An information processing method comprising:
receiving input coordinates instructed by a user to a screen;
determining a user instruction based on a track of a user input in the inputting of the coordinates and controlling an operation of the screen in accordance with a determination result; and
determining which one of division of the screen, a size change of divided screens, or another screen operation the user has instructed, based on the track of the user input via the coordinate input unit;
**characterized in that**
handles (4502, 4503) which are for performing an operation of moving a boundary are provided at both ends of the boundary of the screen, and
the method further comprises performing divided screen size changing processing in accordance with the track when the track starts from one of the handles (4502, 4503), performing screen dividing processing in accordance with the track when the track starts at a part other than the handles on the boundary of the screen, and scrolling the screen or performing another behavior when the track starts inside one of the divided screens.

13. A computer program which is described in a computer readable format so as to cause a computer to function as:
a coordinate input unit which inputs coordinates instructed by a user to a screen; and
a control unit which determines a user instruction based on a track of a user input via the coordinate input unit and controls an operation of the screen in accordance with a determination result; and
the control unit which is configured to determine which one of division of the screen, a size change of divided screens, or another screen operation the user has instructed, based on the track of the user input via the coordinate input unit;
**characterized in that**
handles (4502, 4503) which are for performing an operation of moving a boundary are provided at both ends of the boundary of the screen, and
the control unit is configured to perform divided screen size changing processing in accordance with the track when the track starts from one of the handles (4502, 4503), to perform screen dividing processing in accordance with the track when the track starts at a part other than the handles on the boundary of the screen, and to scroll the screen or perform another behavior when the track starts inside one of the divided screens.

## Patentansprüche

1. Informationsverarbeitungsvorrichtung mit:
einem Bildschirm (603), der dazu ausgebildet ist, Information anzuzeigen;
einer Koordinateneingabeeinheit (110), die dazu ausgebildet ist, von einem Benutzer dem Bildschirm angewiesene Koordinaten zu empfangen;
einer Steuerungseinheit (120, 190), die dazu ausgebildet ist, eine Benutzeranweisung auf der Basis einer Spur einer Benutzereingabe über die Koordinateneingabeeinheit zu bestimmen und eine Betätigung des Bildschirms in Übereinstimmung mit einem Bestimmungsergebnis zu steuern; und
wobei die Steuerungseinheit dazu ausgebildet ist, auf der Basis der Spur der Benutzereingabe über die Koordinateneingabeeinheit zu bestimmen, welches von folgenden: eine Teilung des Bildschirms, eine Größenänderung von Teilbildschirmen, oder eine andere Bildschirmbetätigung, der Benutzer angewiesen hat;
**dadurch gekennzeichnet, dass**
Stellelemente (4502, 4503) zum Durchführen einer Betätigung eines Bewegens einer Grenze an beiden Enden der Grenze des Bildschirms vorgesehen sind, und
die Steuerungseinheit dazu ausgebildet ist, einen Teilbildschirm-Größenänderungsvorgang in Übereinstimmung mit der Spur durchzuführen, wenn die Spur von einem der Stellelemente (5402, 4503) startet, einen Bildschirm-Teilungsvorgang in Übereinstimmung mit der Spur durchzuführen, wenn die Spur in einem anderen Bereich als den Handgriffen auf der Grenze des Bildschirms startet, und den Bildschirm zu rollen oder ein anderes Verhalten durchzuführen, wenn die Spur innerhalb eines der Teilbildschirme startet.

2. Vorrichtung nach Anspruch 1,
wobei eine Teilbildschirm-Größenänderungsanweisungsregion innerhalb einer vorbestimmten Breite (wₗᵢₙₑ) um eine Grenze des Bildschirms herum definiert ist, und wobei Bildschirm-Teilungsanweisungsregionen innerhalb eines vorbestimmten Abstandes (Wₛₚₗᵢₜ) von beiden Seiten der Teilbildschirm-Größenänderungsanweisungsregion definiert sind, und
wobei die Steuerungseinheit dazu ausgebildet ist, einen Teilbildschirm-Größenänderungsvorgang in Übereinstimmung mit der Spur durchzuführen, wenn ein Startpunkt der Spur innerhalb der Teilbildschirm-Größenänderungsanweisungsregion liegt, einen Bildschirm-Teilungsvorgang in Übereinstimmung mit der Spur durchzuführen, wenn der Startpunkt der Spur innerhalb der Bildschirm-Teilungsanweisungsregion liegt, und den Bildschirm zu rollen oder ein anderes Verhalten durchzuführen, wenn der Startpunkt der Spur sich weiter innerhalb des Bildschirms als der Bildschirm-Teilungsanweisungsregion befindet.

3. Vorrichtung nach Anspruch 1 oder 2, wobei die Steuerungseinheit (120, 190) dazu ausgebildet ist, einen Bildschirm-Teilungsvorgang in Übereinstimmung mit der Spur durchzuführen, wenn die Spur nahe der Grenze des Bildschirms startet und sich die Benutzereingabe bewegt, nachdem sie an einer Position des Startpunktes für eine Zeitdauer angehalten wurde, die gleich oder größer ist als eine vorbestimmte Zeit, einen Teilbildschirm-Größenänderungsvorgang in Übereinstimmung mit der Spur durchzuführen, wenn die Spur nahe der Grenze des Bildschirms startet und die Benutzereingabe sich ohne Anhalten bewegt, und den Bildschirm zu rollen oder ein anderes Verhalten durchzuführen, wenn die Spur innerhalb des Bildschirms startet.

4. Vorrichtung nach einem der Ansprüche 1 bis 3, weiterhin mit:
einer Verriegelungsfunktion, die einen Teilbildschirm-Größenveränderungsvorgang unterbindet,
wobei die Steuerungseinheit (120, 190) dazu ausgebildet ist, einen Bildschirm-Teilungsvorgang in Übereinstimmung mit der Spur durchzuführen, wenn die Spur nahe der Grenze des Bildschirms in einem verriegelten Zustand startet, einen Teilbildschirm-Größenveränderungsvorgang in Übereinstimmung mit der Spur durchzuführen, wenn die Spur nahe der Grenze des Bildschirms in einem nicht verriegelten Zustand startet, und den Bildschirm zu rollen oder ein anderes Verhalten durchzuführen, wenn die Spur von dem Inneren des Bildschirms startet.

5. Vorrichtung nach einem der Ansprüche 1 bis 4, wobei die Steuerungseinheit (120, 190) dazu ausgebildet ist, einen Größenänderungsvorgang an den jeweiligen Teilbildschirmen durch Verschieben einer Position eines Schnittpunktes einer Mehrzahl von Grenzen zum Teilen des Bildschirms in Übereinstimmung mit der Spur durchzuführen, wenn die Spur von dem Schnittpunkt startet.

6. Vorrichtung nach einem der Ansprüche 1 bis 5, wobei die Steuerungseinheit (120, 190) dazu ausgebildet ist, wenn sich eine Größe eines Teilbildschirmes unter einer Mehrzahl von Teilbildschirmen einer vorbestimmten Größe während eines Größenveränderungsvorgangs der Mehrzahl an Teilbildschirmen nähert, zu bewirken, dass sich die Größe des Teilbildschirms an die vorbestimmte Größe angleicht.

7. Vorrichtung nach einem der Ansprüche 1 bis 6, wobei, wenn der Bildschirm durch eine erste Grenze in zwei Bereiche geteilt ist, um einen ersten Bildschirm und einen zweiten Bildschirm zu erhalten, und der erste Bildschirm und der zweite Bildschirm jeweils weiter durch eine zweite Grenze und eine dritte Grenze geteilt sind, und die zweite Grenze und die dritte Grenze auf einer geraden Linie einander überlagert sind, die Steuerungseinheit dazu ausgebildet ist, einen Teilbildschirm-Größenänderungsvorgang für jedes der beiden Liniensegmente zu erlauben, die durch Teilen der ersten Grenze durch die gerade Linie erhalten werden.

8. Vorrichtung nach einem der Ansprüche 1 bis 7,
weiterhin mit einer Anweisungseinheit, die dazu ausgebildet ist, Zustände der neuen Bildschirme in Übereinstimmung mit einer Richtung der Spur bezüglich einer Teilungslinie des Bildschirms anzuweisen, die auf der Teilungslinie angezeigt wird, und
wobei die Steuerungseinheit dazu ausgebildet ist, einen Startbildschirm eines ursprünglichen Bildschirms in dem neuen Bildschirm in einer Abweichungsrichtung anzuzeigen und eine Nachbildung des ursprünglichen Bildschirms in dem anderen neuen Bildschirm zu erzeugen, wenn die Spur von der Teilungslinie abweicht, und Nachbildungen des ursprünglichen Bildschirms in den neuen Bildschirmen auf beiden Seiten der Teilungslinie zu erzeugen, wenn die Spur entlang der Teilungslinie verläuft.

9. Vorrichtung nach einem der Ansprüche 1 bis 8, wobei die Steuerungseinheit (190) dazu ausgebildet ist, zumindest eines von folgenden: eine Teilungslinie des Bildschirms während eines Teilungsvorgangs, die Grenze des Bildschirms während eines Größenänderungsvorgangs, und den Bildschirm während eines Rollvorgangs, in hervorgehobener Weise anzuzeigen.

10. Vorrichtung nach einem der Ansprüche 1 bis 9, wobei die Steuerungseinheit (120, 190) dazu ausgebildet ist, ein auf die Teilbildschirme bezogenes Menü zu veranlassen, in einer Erscheinungsrichtung im Ansprechen auf eine Nutzerbetätigung eines Wischens eines der Teilbildschirme mit einer ersten Anzahl von Fingern in der Erscheinungsrichtung zu erscheinen und das Menü in einer Richtung entgegengesetzt zu der Erscheinungsrichtung zu verbergen, wenn für eine Zeitdauer keine Betätigung an dem Menü durchgeführt wird, die gleich oder länger ist als eine vorbestimmte Zeit, oder im Ansprechen auf eine Nutzerbetätigung eines Wischens des Bildschirms in der entgegengesetzten Richtung.

11. Vorrichtung nach einem der Ansprüche 1 bis 10,
wobei die Steuerungseinheit (120, 190) dazu ausgebildet ist, Zustände einer Mehrzahl von Teilbildschirmen im Ansprechen auf eine Nutzerbetätigung eines Greifens der Bildschirme zu speichern, eine Liste von den gespeicherten Bildschirmzuständen auf dem Bildschirm anzuzeigen, und einen Bildschirmzustand wiederherzustellen, der von dem Benutzer auf dem Bildschirm ausgewählt wurde.

12. Informationsverarbeitungsverfahren, mit:
Empfangen von Eingabekoordinaten, die von einem Benutzer an einen Bildschirm angewiesen werden;
Bestimmen einer Benutzeranweisung basierend auf einer Spur einer Benutzereingabe beim Eingeben der Koordinaten und Steuern einer Betriebsart des Bildschirms in Übereinstimmung mit einem Bestimmungsergebnis;
Bestimmen, auf der Basis der Spur der Benutzereingabe über die Koordinateneingabeeinheit, welches von folgenden: eine Teilung des Bildschirms, eine Größenänderung von Teilbildschirmen, oder eine andere Bildschirmbetätigung, der Benutzer angewiesen hat;
**dadurch gekennzeichnet, dass**
Stellelemente (4502, 4503) zum Durchführen einer Betätigung eines Bewegens einer Grenze an beiden Enden der Grenze des Bildschirms vorgesehen sind, und
das Verfahren weiterhin ein Durchführen eines Teilbildschirm-Größenänderungsvorgangs in Übereinstimmung mit der Spur aufweist, wenn die Spur von einem der Stellelemente (4502, 4503) startet, ein Durchführen eines Bildschirm-Teilungsvorgangs in Übereinstimmung mit der Spur aufweist, wenn die Spur in einem anderen Bereich als den Handgriffen auf der Grenze des Bildschirms startet, und ein Rollen des Bildschirms oder ein Durchführen eines anderen Verhaltens aufweist, wenn die Spur innerhalb eines der Teilbildschirme startet.

13. Computerprogramm, das in einem computerlesbaren Format geschrieben ist, um einen Computer zu veranlassen, zu arbeiten als:
eine Koordinateneingabeeinheit, die Koordinaten eingibt, die von einem Benutzer an einen Bildschirm angewiesen werden; und
eine Steuerungseinheit, die eine Benutzeranweisung auf der Basis einer Spur einer Benutzereingabe über die Koordinateneingabeeinheit bestimmt und eine Betätigung des Bildschirms in Übereinstimmung mit einem Bestimmungsergebnis steuert; und
als die Steuerungseinheit, die dazu ausgebildet ist, auf der Basis der Spur der Benutzereingabe über die Koordinateneingabeeinheit zu bestimmen, welches von folgenden: eine Teilung des Bildschirms, eine Größenänderung von Teilbildschirmen, oder eine andere Bildschirmbetätigung der Benutzer angewiesen hat;
**dadurch gekennzeichnet, dass**
Stellelemente (4502, 4503) zum Durchführen einer Betätigung einer Bewegung einer Grenze an beiden Enden der Grenze des Bildschirms vorgesehen sind, und
die Steuerungseinheit dazu ausgebildet ist, einen Teilbildschirm-Größenänderungsvorgang in Übereinstimmung mit der Spur durchzuführen, wenn die Spur von einem der Stellelemente (4502, 4503) startet, einen Bildschirm-Teilungsvorgang in Übereinstimmung mit der Spur durchzuführen, wenn die Spur in einem anderen Bereich als den Handgriffen auf der Grenze des Bildschirms startet, und den Bildschirm zu rollen oder ein anderes Verhalten durchzuführen, wenn die Spur innerhalb eines der Teilbildschirme startet.

## Revendications

1. Appareil de traitement d'informations comprenant:
un écran (603) configuré pour afficher des informations ;
une unité d'entrée de coordonnées (110) configurée pour recevoir les coordonnées données par un utilisateur à l'écran ;
une unité de commande (120, 190) configurée pour déterminer une instruction d'utilisateur sur la base d'une piste d'une entrée d'utilisateur par l'intermédiaire de l'unité d'entrée de coordonnées et pour contrôler un fonctionnement de l'écran conformément à un résultat de détermination ; et
l'unité de commande étant configurée pour déterminer quelle opération parmi une division de l'écran, un changement de taille des écrans divisés ou une autre opération d'écran l'utilisateur a commandée, sur la base de la piste de l'entrée d'utilisateur par l'intermédiaire de l'unité d'entrée de coordonnées ;
**caractérisé en ce que** des poignées (4502, 4503) qui sont destinées à effectuer une opération de déplacement d'une limite sont pourvues aux deux extrémités de la limite de l'écran, et
l'unité de commande est configurée pour effectuer un traitement de changement de taille d'écran divisé conformément à la piste lorsque la piste commence à partir d'une des poignées (4502, 4503), pour effectuer un traitement de division d'écran conformément à la piste lorsque la piste commence à une partie autre que les poignées sur la limite de l'écran, et pour faire défiler l'écran ou générer un autre comportement lorsque la piste commence à l'intérieur d'un des écrans divisés.

2. Appareil selon la revendication 1,
dans lequel une région d'instruction de changement de taille d'écran divisé est définie dans une largeur prédéterminée wₗᵢₙₑ autour d'une limite de l'écran, et les régions d'instruction de division d'écran sont définies jusqu'à une certaine distance prédéterminée Wₛₚₗᵢₜ des deux côtés de la région d'instruction de changement de taille d'écran divisé, et où l'unité de commande est configurée pour effectuer un traitement de changement de taille d'écran divisé conformément à la piste lorsqu'un point de départ de la piste se situe à l'intérieur de la région d'instruction de changement de taille d'écran divisé, pour effectuer un traitement de division d'écran conformément à la piste lorsque le point de départ de la piste se situe à l'intérieur de la région d'instruction de division d'écran, et pour faire défiler l'écran ou générer un autre comportement lorsque le point de départ de la piste se situe plus à l'intérieur de l'écran que la région d'instruction de division d'écran.

3. Appareil selon la revendication 1 ou la revendication 2, dans lequel l'unité de commande (120, 190) est configurée pour effectuer un traitement de division d'écran conformément à la piste lorsque la piste commence près de la limite de l'écran et que l'entrée d'utilisateur se déplace après s'être arrêtée à une position du point de départ pendant une période qui est égale ou supérieure à un temps prédéterminé, pour effectuer un traitement de changement de taille d'écran divisé conformément à la piste lorsque la piste commence à proximité de la limite de l'écran et que l'entrée d'utilisateur se déplace sans s'arrêter, et pour faire défiler l'écran ou générer un autre comportement lorsque la piste commence à l'intérieur de l'écran.

4. Appareil selon l'une quelconque des revendications 1 à 3, comprenant en outre:
une fonction de verrouillage qui inhibe le traitement de changement de taille d'écran divisé,
où l'unité de commande (120, 190) est configurée pour effectuer un traitement de division d'écran conformément à la piste lorsque la piste commence à proximité de la limite de l'écran dans un état verrouillé, pour effectuer un traitement de changement de taille d'écran divisé conformément à la piste lorsque la piste commence à proximité de la limite de l'écran dans un état déverrouillé, et pour faire défiler l'écran ou pour générer un autre comportement lorsque la piste commence à l'intérieur de l'écran.

5. Appareil selon l'une quelconque des revendications 1 à 4, dans lequel l'unité de commande (120, 190) est configurée pour effectuer un traitement de changement de taille sur les écrans divisés respectifs en déplaçant une position d'une intersection d'une pluralité de limites pour diviser l'écran conformément à la piste lorsque la piste commence à partir de l'intersection.

6. Appareil selon l'une quelconque des revendications 1 à 5, dans lequel l'unité de commande (120, 190) est configurée pour, lorsqu'une taille d'un écran divisé parmi une pluralité d'écrans divisés s'approche une taille prédéterminée au cours du traitement de changement de taille de la pluralité d'écrans, faire en sorte que la taille de l'écran divisé prenne la taille prédéterminée.

7. Appareil selon l'une quelconque des revendications 1 à 6, dans lequel, lorsque l'écran est divisé en deux parties par une première limite pour obtenir un premier écran et un second écran, et que le premier écran et le second écran sont respectivement divisés par une deuxième limite et une troisième limite, et que la deuxième limite et la troisième limite sont superposés l'une sur l'autre sur une ligne droite, l'unité de commande est configurée pour permettre le traitement de changement de taille d'écran divisé pour chacun des deux segments de ligne obtenus en divisant la première limite par la ligne droite.

8. Appareil selon l'une quelconque des revendications 1 à 7,
comprenant en outre une unité d'instruction configurée pour instruire les états des nouveaux écrans conformément à une direction de la piste par rapport à une ligne de division de l'écran affichée sur la ligne de division, et
où l'unité de commande est configurée pour afficher un écran d'accueil d'un écran d'origine dans le nouvel écran dans une direction de déviation et générer un clone de l'écran d'origine dans l'autre nouvel écran lorsque la piste s'écarte de la ligne de division, et pour générer des clones de l'écran d'origine dans les nouveaux écrans des deux côtés de la ligne de division lorsque la piste est le long de la ligne de division.

9. Appareil selon l'une quelconque des revendications 1 à 8, dans lequel l'unité de commande (120, 190) est configurée pour afficher au moins un élément parmi une ligne de division de l'écran au cours du traitement de division, la limite de l'écran au cours du traitement de changement de taille, et l'écran au cours du traitement de défilement d'une manière agrandie.

10. Appareil selon l'une quelconque des revendications 1 à 9, dans lequel l'unité de commande (120, 190) est configurée pour faire apparaître un menu relatif aux écrans divisés dans une direction d'apparence en réponse à une opération de l'utilisateur comprenant de faire glisser un des écrans divisés avec un premier nombre de doigts dans la direction d'apparence et de masquer le menu dans une direction opposée à la direction d'apparence lorsqu'aucune opération n'est exécutée sur le menu pendant une certaine période qui est égale ou supérieure à un temps prédéterminé ou en réponse à l'opération d'un utilisateur comprenant de faire glisser l'écran dans la direction opposée.

11. Appareil selon l'une quelconque des revendications 1 à 10,
dans lequel l'unité de commande (120, 190) est configurée pour enregistrer les états d'une pluralité d'écrans divisés en réponse à une opération d'utilisateur comprenant de saisir les écrans, pour afficher une liste des états d'écrans enregistrés sur l'écran et pour restaurer un état d'écran sélectionné par l'utilisateur sur l'écran.

12. Procédé de traitement d'informations comprenant les étapes suivantes:
recevoir des coordonnées d'entrée données par un utilisateur à un écran ;
déterminer une instruction d'utilisateur sur la base d'une piste d'une entrée d'utilisateur dans l'entrée des coordonnées et contrôler une opération de l'écran conformément à un résultat de détermination ; et
déterminer quelle opération parmi une division de l'écran, un changement de taille des écrans divisés ou une autre opération d'écran l'utilisateur a commandée, sur la base de la piste de l'entrée d'utilisateur par l'intermédiaire de l'unité d'entrée de coordonnées;
**caractérisé en ce que**
des poignées (4502, 4503) qui sont destinées à effectuer une opération de déplacement d'une limite sont pourvues aux deux extrémités de la limite de l'écran, et
le procédé comprend en outre d'effectuer un traitement de changement de taille d'écran divisé conformément à la piste lorsque la piste commence à partir d'une des poignées (4502, 4503), d'effectuer un traitement de division d'écran conformément à la piste lorsque la piste commence à une partie autre que les poignées sur la limite de l'écran, et de faire défiler l'écran ou de générer un autre comportement lorsque la piste commence à l'intérieur d'un des écrans divisés.

13. Programme informatique qui est décrit dans un format lisible par un ordinateur de manière à amener un ordinateur à fonctionner comme :
une unité d'entrée de coordonnées qui saisit les coordonnées données par un utilisateur à un écran ;
une unité de commande qui détermine une instruction d'utilisateur sur la base d'une piste d'une entrée d'utilisateur par l'intermédiaire de l'unité d'entrée de coordonnées et qui commande un fonctionnement de l'écran conformément à un résultat de détermination ; et
l'unité de commande qui est configurée pour déterminer quelle opération parmi une division de l'écran, un changement de taille des écrans divisés ou une autre opération d'écran que l'utilisateur a commandée, sur la base de la piste de l'entrée d'utilisateur par l'intermédiaire de l'unité d'entrée de coordonnées;
**caractérisé en ce que**
des poignées (4502, 4503) qui sont destinées à effectuer une opération de déplacement d'une limite sont pourvues aux deux extrémités de la limite de l'écran, et
l'unité de commande est configurée pour effectuer un traitement de changement de taille d'écran divisé conformément à la piste lorsque la piste commence à partir d'une des poignées (4502, 4503), pour effectuer un traitement de division d'écran conformément à la piste lorsque la piste commence à une partie autre que les poignées sur la limite de l'écran, et pour faire défiler l'écran ou générer un autre comportement lorsque la piste commence à l'intérieur d'un des écrans divisés.
